(19) Europäisches Patentamt
European Patent Office
Office européen des brevets

(11) EP 2 250 219 B1

(12) **EUROPEAN PATENT SPECIFICATION**

(45) Date of publication and mention of the grant of the patent:
**16.05.2018 Bulletin 2018/20**

(21) Application number: **08715126.2**

(22) Date of filing: **29.02.2008**

(51) Int Cl.:
***C08L 23/04*** *(2006.01)* ***C08J 5/18*** *(2006.01)*
***B32B 27/32*** *(2006.01)* *C08F 210/16 (2006.01)*

(86) International application number:
**PCT/CN2008/070390**

(87) International publication number:
**WO 2009/105938 (03.09.2009 Gazette 2009/36)**

(54) **ORIENTED FILMS COMPRISING ETHYLENE/ALPHA-OLEFIN BLOCK INTERPOLYMER**

ORIENTIERTE FOLIEN, UMFASSEND ETHYLEN/ALPHA-OLEFIN-BLOCKMISCHPOLYMERISAT

FILMS ORIENTÉS COMPRENANT UN COPOLYMÈRE SÉQUENCÉ D'ÉTHYLÈNE/ALPHA-OLÉFINE

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**17.11.2010 Bulletin 2010/46**

(73) Proprietor: **Dow Global Technologies LLC**
**Midland, MI 48674 (US)**

(72) Inventors:
- **YUN, Xiaobing**
  **Beijing 100738 (CN)**
- **LAI, Shih-Yaw**
  **Shanghai 200120 (CN)**
- **LI, Jing**
  **Shanghai 201101 (CN)**
- **CHEN, HongYu**
  **Texas 77566 (US)**
- **MAEHARA, Yutaka**
  **Kanagawa 222-0035 (JP)**

(74) Representative: **V.O.**
**P.O. Box 87930**
**2508 DH Den Haag (NL)**

(56) References cited:
**CN-A- 1 030 592**
**CN-A- 1 113 179**
**JP-A- 2000 239 404**
**US-A1- 2004 241 483**
**US-A1- 2007 078 222**

Remarks:
The file contains technical information submitted after the application was filed and not included in this specification

EP 2 250 219 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

### FIELD OF THE INVENTION

This invention relates to oriented films comprising a polymer composition having an ethylene/a-olefin block interpolymer. The oriented films have improved shrinkage force, shrinkage temperature, tear strength, seal strength and/or bubble stability.

### BACKGROUND AND SUMMARY OF THE INVENTION

Low shrinkage force films, such as biaxially oriented polyethylene (BOPE) films, are widely used in the market to pack delicate or low rigidity products such as magazines and textile materials because of their good packaging appearance. In addition to low shrinkage force, it is desirable for a package film to have other desirable properties such as low shrinkage temperature, high tear strength, and/or high seal strength.

Low shrinkage force films having low shrinkage temperature are desirable because such property can enable heat sensitive products (e.g., chocolate, candies, etc) to be packed at temperatures low enough for such products to pass through the packaging process without spoilage or damage. Another desirable property of low shrinkage force films is high tear strength because film breakages during the film trimming and perforation processes can cause undesirable shut-down of packaging lines. It is also desirable for low shrinkage force films to have high seal strength because high seal strength improves packaging integrity and reduces packaging failure rate during transportation.

Furthermore, a high bubble stability is also desirable for the production of low shrinkage force films such as BOPE film, and particularly BOPE films comprising linear low density polyethylene (LLDPE), particular at a relative high amount of LLDPE. To improve the stability of the second bubble formed during the film extrusion process (e.g., double bubble film extrusion process), BOPE films are generally crosslinked with a cross-linking agent or co-extruded with a polypropylene which generally has an orientation stability higher than polyethylenes such as LLDPE. Because the cross-linking of BOPE films can be expensive, it would be desirable to eliminate the need for the cross-linking step. Furthermore, it would also be desirable to eliminate the need for the use of polypropylene resins as second bubble stabilizers because the use of polypropylene has an undesirable effect on film properties such as tear strength and shrinkage temperature.

Therefore, there is a need in the market for low shrinkage force films having a low shrinkage temperature, high tear strength, high seal strength and/or high bubble stability. Furthermore, there is a need for producing low shrinkage force films without the need for the cross-linking step or the use of polypropylene resins as second bubble stabilizers. In the first aspect, the present invention relates to an oriented film comprising two outer layers and an inner layer, the two outer layers comprising a polyethylene; the inner layer comprising a polymer composition comprising at least one ethylene/a-olefin interpolymer, and a second polymer, wherein the ratio of the ethylene/a-olefin interpolymer to the second polymer is from 1:10 to 10:1, wherein the ethylene/a-olefin interpolymer is a block interpolymer that:

(a) has a $M_w/M_n$ from 1.7 to 3.5, at least one melting point, $T_m$, in degrees Celsius, and a density, d, in grams/cubic centimeter, wherein the numerical values of Tm and d correspond to the relationship:

$$T_m > -6553.3 + 13735(d) - 7051.7(d)^2,$$

and

(b) has a Mw/Mn from 1.7 to 3.5, and is characterized by a heat of fusion, ΔH in J/g, and a delta quantity, ΔT, in degrees Celsius defined as the temperature difference between the tallest DSC peak and the tallest CRYSTAF peak, wherein the numerical values of ΔT and ΔH have the following relationships:

$$\Delta T > -0.1299(\Delta H) + 62.81$$

for ΔH greater than zero and up to 130 J/g,

$$\Delta T \geq 48\ ^{\circ}C$$

for ΔH greater than 130 J/g, wherein the CRYSTAF peak is determined using at least 5 percent of the cumulative polymer, and if less than 5 percent of the polymer has an identifiable CRYSTAF peak, then the CRYSTAF temperature

is 30°C; and

(c) has an elastic recovery, Re, in percent at 300 percent strain and 1 cycle measured with a compression-molded film of the ethylene/a-olefin interpolymer, and has a density, d, in grams/cubic centimeter, wherein the numerical values of Re and d satisfy the following relationship when the ethylene/a-olefin interpolymer is substantially free of a cross-linked phase:

$$Re >1481-1629(d);$$

and

(g) has an average block index greater than zero and up to about 1.0 and a molecular weight distribution, $M_w/M_n$, greater than about 1.3,

wherein the shrink tension of the oriented film stretched at 110 °C is less than 3 MPa.

In a preferred embodiment, said block interpolymer has a molecular fraction which elutes between 40 °C and 130 °C when fractionated using TREF, characterized in that the fraction has a molar comonomer content of at least 5 percent higher than that of a comparable random ethylene interpolymer fraction eluting between the same temperatures, wherein said comparable random ethylene interpolymer has the same comonomer(s) and a melt index, density, and molar comonomer content (based on the whole polymer) within 10 percent of that of the ethylene/a-olefin interpolymer; or

(d) has a comonomer content of the TREF fraction which elutes between 40 °C and 130 °C greater than or equal to the quantity (-0.2013)T + 21.07, wherein T is the numerical value of the peak ATREF elution temperature, measured in °C; or

(e) has a storage modulus at 25°C, G'(25 °C), and a storage modulus at 100 °C, G'(100°C), wherein the ratio of G'(25 °C) to G'(100 °C) is from 1:1 to 10:1; or

(f) has at least one molecular fraction which elutes between 40 °C and 130 °C when fractionated using TREF, characterized in that the fraction has a block index of at least 0.5 and up to 1 and a molecular weight distribution, $M_w/M_n$, greater than about 1.3.

In the second aspect, the invention relates to a process of making an oriented film as defined in the first aspect, comprising the steps of:

(a) providing a polymer composition comprising at least one ethylene/$\alpha$-olefin interpolymer;

(b) converting the polymer composition into a primary tape using a first film forming step;

(c) quenching the primary tape at a temperature of about 15 °C to about 25 °C;

(d) reheating the primary tape; and

(e) converting the primary tape to the oriented film using a second film forming step,

wherein the ethylene/a-olefin interpolymer is a block interpolymer as defined herein-above: the oriented film of claim 13, wherein the melt index ($I_2$) is from about 0.5 g/10 min. to about 3 g/10 min.

The oriented films may be biaxially oriented films comprising an ethylene/$\alpha$-olefin block interpolymer and a polyethylene. In certain embodiments, the ethylene/a-olefin block interpolymer was used in biaxially oriented films via co-extrusion and blending. In other embodiments, the ethylene/a-olefin block interpolymer exhibits a low melt tension in the semi-molten state. In certain embodiments, the shrinkage tension of the biaxially oriented films disclosed herein can be reduced by from 10% to 40% comparing to a pure LLDPE based film. In other embodiments, the tear strength of the biaxially oriented films disclosed herein can be increased by from 10% to 30% to the pure LLDPE based film. In further embodiments, the biaxially oriented films disclosed herein can have a higher seal strength, lower shrinkage and better packaging appearance than the pure LLDPE based film. The biaxially oriented films disclosed herein may also have a broader orientation window than the pure LLDPE based film.

In some embodiments, the shrink tension of the oriented film stretched at 110 °C is less than 2.5 MPa or less

than 2.0 MPa. In other embodiments, the shrink tension of the oriented film stretched at 115°C is less than 1.2 MPa or less than 1.0 MPa.

In certain embodiments, the second polymer maybe selected from the group consisting of polyethylene, polypropylene, polybutylene, poly(ethylene-co-vinyl acetate), polyvinyl chloride, ethylene-propylene copolymer, a mixed polymer of ethylene and vinyl acetate, a styrene-butadiene mixed polymers and combinations thereof. In other embodiments, the second polymer is a polyethylene. In further embodiments, the polyethylene is a linear low density polyethylene.

In some embodiments, the % of shrinkage of the oriented film is at least 7.5% or at least 8.5% at a shrinkage temperature of 95 °C per ASTM D-2732. In certain embodiments, the Elmendorf tear resistance of the oriented film in the transverse direction is at least 0.05N per ASTM D-1922 when stretch ratio is 4.5 x 4.5 and stretched at 100 °C. In other embodiments, the density of the ethylene/a-olefin interpolymer is from 0.85 g/cm$^3$(g/cc) to 0.92 g/cm$^3$ (g/cc).

In certain embodiments, the melt index ($I_2$) of the ethylene/a-olefin interpolymer is from 0.2 g/10 min. to 15 g/10 min. In other embodiments, the melt index ($I_2$) is from 0.5 g/10 min. to 3 g/10 min.

In some embodiments, the oriented film is a monoaxially oriented film. In other embodiments, the oriented film is a biaxially oriented film.

The oriented film comprises three layers, wherein the two outer layers comprise a polyethylene and the inner layer comprises the polymer composition. In further embodiments, the polyethylene in the two outer layers is a linear low density polyethylene. In some embodiments, the thickness ratio of the three layers is from 1:8:1 to 1:2:1, wherein the two outer layers have about the same thickness.

In some embodiments, the oriented film further comprises a sealant layer, a backing layer, a tie layer or a combination thereof. In other embodiments, the total thickness of the oriented film is from 8 μm (microns) to 60 μm (microns).

In certain embodiments, the ethylene/a-olefin interpolymer is an ethylene-octene copolymer. In other embodiments, the ethylene/a-olefin interpolymer is an ethylene-butene copolymer. In further embodiments, the ethylene/a-olefin interpolymer is an ethylene-hexene copolymer.

In some embodiments of the process of the invention, the first film forming step and the second film forming step is independently a double-bubble process or a flat tenter stretching process.

In some embodiments, the quenching step is done with a water bath at a temperature of 15 °C to 25 °C.

In some embodiments, the primary tape is heated to a temperature above its softening temperature in the reheating step.

In some embodiments, at least one of the surfaces of the oriented film is treated by a flame or a corona.

In some embodiments, the first film forming step occurs at a temperature from 100 °C to 117 °C. In other embodiments, the first film forming step occurs at a temperature from 105 °C to 115 °C. In some embodiments, the second film forming step occurs at a temperature from 100 °C to 117 °C. In other embodiments, the second film forming step occurs at a temperature from 105 °C to 115 °C.

Also provided herein are oriented films prepared by the process disclosed herein.

Also provided herein are pouches comprising the oriented film disclosed herein.

Also provided herein are bags comprising the oriented film disclosed herein.

## BRIEF DESCRIPTION OF THE DRAWINGS

Figure 1 shows the melting point/density relationship for the inventive polymers (represented by diamonds) as compared to traditional random copolymers (represented by circles) and Ziegler-Natta copolymers (represented by triangles).

Figure 2 shows plots of delta DSC-CRYSTAF as a function of DSC Melt Enthalpy for various polymers. The diamonds represent random ethylene/octene copolymers; the squares represent polymer examples 1-4; the triangles represent polymer examples 5-9; and the circles represent polymer examples 10-19. The "X" symbols represent polymer examples A*-F*.

Figure 3 shows the effect of density on elastic recovery for unoriented films made from inventive interpolymers (represented by the squares and circles) and traditional copolymers (represented by the triangles which are various Dow AFFINITY® polymers). The squares represent inventive ethylene/butene copolymers; and the circles represent inventive ethylene/octene copolymers.

Figure 4 is a plot of octene content of TREF fractionated ethylene/ 1-octene copolymer fractions versus TREF elution

temperature of the fraction for the polymer of Example 5 (represented by the circles) and comparative polymers E and F (represented by the "X" symbols). The diamonds represent traditional random ethylene/octene copolymers.

Figure 5 is a plot of octene content of TREF fractionated ethylene/ 1-octene copolymer fractions versus TREF elution temperature of the fraction for the polymer of Example 5 (curve 1) and for comparative F (curve 2). The squares represent Example F*; and the triangles represent Example 5.

Figure 6 is a graph of the log of storage modulus as a function of temperature for comparative ethylene/1-octene copolymer (curve 2) and propylene/ ethylene- copolymer (curve 3) and for two ethylene/1-octene block copolymers disclosed herein made with differing quantities of chain shuttling agent (curves 1).

Figure 7 shows a plot of TMA (1mm) versus flex modulus for some inventive polymers (represented by the diamonds), as compared to some known polymers. The triangles represent various Dow VERSIFY® polymers; the circles represent various random ethylene/styrene copolymers; and the squares represent various Dow AFFINITY® polymers.

Figure 8 shows the shrink tension (MPa) for Comparative Example M and Examples 23-28.

Figure 9 shows the shrinkage (%) of Comparative Example M and Examples 23-28 when stretched at 110 °C.

Figure 10 shows the Elmendorf Tear Resistence of Comparative Example M and Examples 23-28 tested in machine direction (MD) and transverse direction (TD).

Figure 11 shows the ultimate tensile strength (MPa) of Comparative Example M and Examples 23-28 tested in machine direction (MD) and transverse direction (TD).

Figure 12 shows the ultimate elongation (%) of Comparative Example M and Examples 23-28 tested in machine direction (MD) and transverse direction (TD).

Figure 13 shows the peak load (N) of Comparative Example M and Examples 23-28 measured at different seal temperatures.

## DETAILED DESCRIPTION OF THE INVENTION

### General Definitions

"Polymer" refers to a polymeric compound prepared by polymerizing monomers, whether of the same or a different type. The generic term "polymer" embraces the terms "homopolymer," "copolymer," "terpolymer" as well as "interpolymer."

"Interpolymer" refers to a polymer prepared by the polymerization of at least two different types of monomers. The generic term "interpolymer" includes the term "copolymer" (which is usually employed to refer to a polymer prepared from two different monomers) as well as the term "terpolymer" (which is usually employed to refer to a polymer prepared from three different types of monomers). It also encompasses polymers made by polymerizing four or more types of monomers.

The term "ethylene/$\alpha$-olefin interpolymer" generally refers to polymers comprising ethylene and an $\alpha$-olefin having 3 or more carbon atoms. Preferably, ethylene comprises the majority mole fraction of the whole polymer, i.e., ethylene comprises at least 50 mole percent of the whole polymer. More preferably ethylene comprises at least 60 mole percent, at least 70 mole percent, or at least 80 mole percent, with the substantial remainder of the whole polymer comprising at least one other comonomer that is preferably an $\alpha$-olefin having 3 or more carbon atoms. For many ethylene/octene copolymers, the preferred composition comprises an ethylene content greater than 80 mole percent of the whole polymer and an octene content of from 10 to 15, preferably from 15 to 20 mole percent of the whole polymer. In some embodiments, the ethylene/a-olefin interpolymers do not include those produced in low yields or in a minor amount or as a by-product of a chemical process. While the ethylene/a-olefin interpolymers can be blended with one or more polymers, the as-produced ethylene/a-olefin interpolymers are substantially pure and often comprise a major component of the reaction product of a polymerization process.

The term "stretched" and "oriented" are used in the art and herein interchangeably, although orientation is actually the consequence of a film being stretched by, for example, internal air pressure pushing on the tube or by a tenter frame pulling on the edges of the film.

As used herein and unless otherwise indicated, a composition that is "substantially free" of a compound means that the composition contains less than 20 wt.%, less than 10 wt.%, less than 5 wt.%, less than 4 wt.%, less than 3 wt.%, less than 2 wt.%, less than 1 wt.%, less than 0.5 wt.%, less than 0.1 wt.%, or less than 0.01 wt.% of the compound, based on the total weight of the composition.

The ethylene/a-olefin interpolymers comprise ethylene and one or more copolymerizable $\alpha$-olefin comonomers in polymerized form, characterized by multiple blocks or segments of two or more polymerized monomer units differing in chemical or physical properties. That is, the ethylene/a-olefin interpolymers are block interpolymers, preferably multi-block interpolymers or copolymers. The terms "interpolymer" and copolymer" are used interchangeably herein. In some embodiments, the multi-block copolymer can be represented by the following formula:

(AB)n

where n is at least 1, preferably an integer greater than 1, such as 2, 3, 4, 5, 10, 15, 20, 30, 40, 50, 60, 70, 80, 90, 100, or higher, "A" represents a hard block or segment and "B" represents a soft block or segment. Preferably, As and Bs are linked in a substantially linear fashion, as opposed to a substantially branched or substantially star-shaped fashion. In other embodiments, A blocks and B blocks are randomly distributed along the polymer chain. In other words, the block copolymers usually do not have a structure as follows.

AAA-AA-BBB-BB

In still other embodiments, the block copolymers do not usually have a third type of block, which comprises different comonomer(s). In yet other embodiments, each of block A and block B has monomers or comonomers substantially randomly distributed within the block. In other words, neither block A nor block B comprises two or more sub-segments (or sub-blocks) of distinct composition, such as a tip segment, which has a substantially different composition than the rest of the block.

The multi-block polymers typically comprise various amounts of "hard" and "soft" segments. "Hard" segments refer to blocks of polymerized units in which ethylene is present in an amount greater than 95 weight percent, and preferably greater than 98 weight percent based on the weight of the polymer. In other words, the comonomer content (content of monomers other than ethylene) in the hard segments is less than 5 weight percent, and preferably less than 2 weight percent based on the weight of the polymer. In some embodiments, the hard segments comprise all or substantially all ethylene. "Soft" segments, on the other hand, refer to blocks of polymerized units in which the comonomer content (content of monomers other than ethylene) is greater than 5 weight percent, preferably greater than 8 weight percent, greater than 10 weight percent, or greater than 15 weight percent based on the weight of the polymer. In some embodiments, the comonomer content in the soft segments can be greater than 20 weight percent, greater than 25 weight percent, greater than 30 weight percent, greater than 35 weight percent, greater than 40 weight percent, greater than 45 weight percent, greater than 50 weight percent, or greater than 60 weight percent.

The soft segments can often be present in a block interpolymer from 1 weight percent to 99 weight percent of the total weight of the block interpolymer, preferably from 5 weight percent to 95 weight percent, from 10 weight percent to 90 weight percent, from 15 weight percent to 85 weight percent, from 20 weight percent to 80 weight percent, from 25 weight percent to 75 weight percent, from 30 weight percent to 70 weight percent, from 35 weight percent to 65 weight percent, from 40 weight percent to about 60 weight percent, or from 45 weight percent to 55 weight percent of the total weight of the block interpolymer. Conversely, the hard segments can be present in similar ranges. The soft segment weight percentage and the hard segment weight percentage can be calculated based on data obtained from DSC or NMR. Such methods and calculations are disclosed in a copending U.S. Application No. 2006/0199930-A1 filed on March 15, 2006 and PCT Publication No. WO 2005/090427, filed on March 17, 2005. The term "crystalline" if employed, refers to a polymer that possesses a first order transition or crystalline melting point (Tm) as determined by differential scanning calorimetry (DSC) or equivalent technique. The term may be used interchangeably with the term "semicrystalline". The term "amorphous" refers to a polymer lacking a crystalline melting point as determined by differential scanning calorimetry (DSC) or equivalent technique.

The term "multi-block copolymer" or "segmented copolymer" refers to a polymer comprising two or more chemically distinct regions or segments (referred to as "blocks") preferably joined in a linear manner, that is, a polymer comprising chemically differentiated units which are joined end-to-end with respect to polymerized ethylenic functionality, rather than in pendent or grafted fashion. In a preferred embodiment, the blocks differ in the amount or type of comonomer incorporated therein, the density, the amount of crystallinity, the crystallite size attributable to a polymer of such composition, the type or degree of tacticity (isotactic or syndiotactic), regio-regularity or regio-irregularity, the amount of branching, including long chain branching or hyper-branching, the homogeneity, or any other chemical or physical property. The multi-block copolymers are characterized by unique distributions of both polydispersity index (PDI or Mw/Mn), block length distribution, and/or block number distribution due to the unique process making of the copolymers.

More specifically, when produced in a continuous process, the polymers desirably possess PDI from 1.7 to 2.9, preferably from 1.8 to 2.5, more preferably from 1.8 to 2.2, and most preferably from 1.8 to 2.1. When produced in a batch or semi-batch process, the polymers possess PDI from 1.0 to 2.9, preferably from 1.3 to 2.5, more preferably from 1.4 to 2.0, and most preferably from 1.4 to 1.8.

"Seal strength" is the strength of a heat seal at ambient temperature after the seal has been formed and reached its full strength.

In the following description, all numbers disclosed herein are approximate values, regardless whether the word "about" or "approximate" is used in connection therewith. They may vary by 1 percent, 2 percent, 5 percent, or, sometimes, 10 to 20 percent. Whenever a numerical range with a lower limit, $R^L$, and an upper limit, $R^U$, is disclosed, any number falling within the range is specifically disclosed. In particular, the following numbers within the range are specifically disclosed: $R=R^L+k*(R^U-R^L)$, wherein k is a variable ranging from 1 percent to 100 percent with a 1 percent increment, *i.e.,* k is 1 percent, 2 percent, 3 percent, 4 percent, 5 percent,..., 50 percent, 51 percent, 52 percent,..., 95 percent, 96 percent, 97 percent, 98 percent, 99 percent, or 100 percent. Moreover, any numerical range defined by two R numbers as defined in the above is also specifically disclosed.

Provided herein are oriented films comprising a polymer composition comprising at least one ethylene/a-olefin block interpolymer, wherein the ethylene/a-olefin interpolymer:

(a) has a $M_w/M_n$ from 1.7 to 3.5, at least one melting point, $T_m$, in degrees Celsius, and a density, d, in grams/cubic centimeter, wherein the numerical values of Tm and d correspond to the relationship:

$$T_m > -6553.3 + 13735(d) - 7051.7(d)^2,$$

and

(b) has a Mw/Mn from 1.7 to 3.5, and is characterized by a heat of fusion, ΔH in J/g, and a delta quantity, ΔT, in degrees Celsius defined as the temperature difference between the tallest DSC peak and the tallest CRYSTAF peak, wherein the numerical values of ΔT and ΔH have the following relationships:

$$\Delta T > -0.1299(\Delta H) + 62.81$$

for ΔH greater than zero and up to 130 J/g,

$$\Delta T \geq 48\ ^{\circ}C$$

for ΔH greater than 130 J/g, wherein the CRYSTAF peak is determined using at least 5 percent of the cumulative polymer, and if less than 5 percent of the polymer has an identifiable CRYSTAF peak, then the CRYSTAF temperature is 30 °C; and

(c) has an elastic recovery, Re, in percent at 300 percent strain and 1 cycle measured with a compression-molded film of the ethylene/a-olefin interpolymer, and has a density, d, in grams/cubic centimeter, wherein the numerical values of Re and d satisfy the following relationship when the ethylene/a-olefin interpolymer is substantially free of a cross-linked phase:

$$Re > 1481-1629(d);$$

and

(g) has an average block index greater than zero and up to 1.0 and a molecular weight distribution, $M_w/M_n$, greater than 1.3.

The shrink tension of the oriented film stretched at 110 °C is less than 3 MPa, preferably less than 2.5 MPa or less than 2.0 MPa. In other embodiments, the shrink tension of the oriented film stretched at 115 °C is less than 1.2 MPa or less than 1.0 MPa.

In certain embodiments, the % of shrinkage of the oriented film is at least 7.5% or at least 8.5% at a shrinkage

temperature of 95 °C per ASTM D-2732. In other embodiments, the density of the ethylene/a-olefin interpolymer is from 0.85 g/cm$^3$ (g/cc) to 0.92 g/cm$^3$ (g/cc).

In certain embodiments, the Elmendorf tear resistance of the oriented film is at least 0.05 N, at least 0.1 N, at least 0.15 N, at least 0.2 N, at least 0.25 N, at least 0.3 N, at least 0.35 N or at least 0.4 N per ASTM D-1922. In other embodiments, the Elmendorf tear resistance of the oriented film in either the machine direction or transverse direction is at least 0.05 N, at least 0.1 N, at least 0.15 N, at least 0.2 N, at least 0.25 N, at least 0.3 N, at least 0.35 N or at least 0.4 N per ASTM D-1922. In further embodiments, the Elmendorf tear resistance of the oriented film in the transverse direction is at least 0.3 N per ASTM D-1922. In still further embodiments, the Elmendorf tear resistance of the oriented film in the transverse direction is at 0.4 N per ASTM D-1922.

In some embodiments, the melt index ($I_2$) of the ethylene/a-olefin interpolymer is from 0.2 g/10 min. to 15 g/10 min. In other embodiments, the melt index ($I_2$) is from 0.5 g/10 min. to 3 g/10 min.

In certain embodiments, the oriented film is a monoaxially oriented film. In other embodiments, the oriented film is a biaxially oriented film.

**Ethylene/a-Olefin Interpolymers**

The ethylene/a-olefin interpolymers disclosed herein (also referred to as "inventive interpolymer" or "inventive polymer") comprise ethylene and one or more copolymerizable $\alpha$-olefin comonomers in polymerized form, characterized by multiple blocks or segments of two or more polymerized monomer units differing in chemical or physical properties (block interpolymer), preferably a multi-block copolymer. The ethylene/a-olefin interpolymers are characterized by one or more of the aspects described as follows.

In one aspect, the ethylene/a-olefin interpolymers disclosed herein have a $M_w/M_n$ from 1.7 to 3.5 and at least one melting point, $T_m$, in degrees Celsius and density, d, in grams/cubic centimeter, wherein the numerical values of the variables correspond to the relationship:

$$T_m > -6553.3 + 13735(d) - 7051.7(d)^2,$$

or

$$T_m > -2002.9 + 4538.5(d) - 2422.2(d)^2,$$

or

$$T_m \geq -6288.1 + 13141(d) - 6720.3(d)^2,$$

or

$$T_m \geq 858.91 - 1825.3(d) + 1112.8(d)^2.$$

Such melting point/density relationship is illustrated in Figure 1. Unlike the traditional random copolymers of ethylene/$\alpha$-olefins whose melting points decrease with decreasing densities, the inventive interpolymers (represented by diamonds) exhibit melting points substantially independent of the density, particularly when density is between 0.87 g/cm$^3$ (g/cc) to 0.95 g/cm$^3$ (g/cc). For example, the melting point of such polymers are in the range of 110 °C to 130 °C when density ranges from 0.875 g/cm$^3$ (g/cc) to about 0.945 g/cm$^3$ (g/cc). In some embodiments, the melting point of such polymers are in the range of 115 °C to 125 °C when density ranges from 0.875 g/cm$^3$ (g/cc) to 0.945 g/cm$^3$ (g/cc).

In another aspect, the ethylene/a-olefin interpolymers comprise, in polymerized form, ethylene and one or more $\alpha$-olefins and are characterized by a $\Delta T$, in degree Celsius, defined as the temperature for the tallest Differential Scanning Calorimetry ("DSC") peak minus the temperature for the tallest Crystallization Analysis Fractionation ("CRYSTAF") peak and a heat of fusion in J/g, $\Delta H$, and $\Delta T$ and $\Delta H$ satisfy the following relationships:

$$\Delta T > -0.1299(\Delta H) + 62.81,$$

or

$$\Delta T \geq -0.1299(\Delta H) + 64.38,$$

or

$$\Delta T \geq -0.1299(\Delta H) + 65.95,$$

for $\Delta H$ up to 130 J/g. Moreover, $\Delta T$ is equal to or greater than 48 °C for $\Delta H$ greater than 130 J/g. The CRYSTAF peak is determined using at least 5 percent of the cumulative polymer (that is, the peak must represent at least 5 percent of the cumulative polymer), and if less than 5 percent of the polymer has an identifiable CRYSTAF peak, then the CRYSTAF temperature is 30 °C, and $\Delta H$ is the numerical value of the heat of fusion in J/g. More preferably, the highest CRYSTAF peak contains at least 10 percent of the cumulative polymer. Figure 2 shows plotted data for inventive polymers as well as comparative examples. Integrated peak areas and peak temperatures are calculated by the computerized drawing program supplied by the instrument maker. The diagonal line shown for the random ethylene octene comparative polymers corresponds to the equation $\Delta T = -0.1299 (\Delta H) + 62.81$.

In yet another aspect, the ethylene/a-olefin interpolymers have a molecular fraction which elutes between 40 °C and 130 °C when fractionated using Temperature Rising Elution Fractionation ("TREF"), characterized in that said fraction has a molar comonomer content higher, preferably at least 5 percent higher, more preferably at least 10 percent higher, than that of a comparable random ethylene interpolymer fraction eluting between the same temperatures, wherein the comparable random ethylene interpolymer contains the same comonomer(s), and has a melt index, density, and molar comonomer content (based on the whole polymer) within 10 percent of that of the block interpolymer. Preferably, the Mw/Mn of the comparable interpolymer is also within 10 percent of that of the block interpolymer and/or the comparable interpolymer has a total comonomer content within 10 weight percent of that of the block interpolymer.

In still another aspect, the ethylene/a-olefin interpolymers are characterized by an elastic recovery, Re, in percent at 300 percent strain and 1 cycle measured on a compression-molded film of an ethylene/a-olefin interpolymer, and has a density, d, in grams/cubic centimeter, wherein the numerical values of Re and d satisfy the following relationship when ethylene/a-olefin interpolymer is substantially free of a cross-linked phase:

$$Re > 1481-1629(d);$$

or

$$Re \geq 1491-1629(d);$$

or

$$Re \geq 1501-1629(d);$$

or

$$Re \geq 1511-1629(d).$$

Figure 3 shows the effect of density on elastic recovery for unoriented films made from certain inventive interpolymers and traditional random copolymers. For the same density, the inventive interpolymers have substantially higher elastic recoveries.

In some embodiments, the ethylene/a-olefin interpolymers have a tensile strength above 10 MPa, preferably a tensile strength ≥ 11 MPa, more preferably a tensile strength ≥ 13MPa and/or an elongation at break of at least 600 percent, more preferably at least 700 percent, highly preferably at least 800 percent, and most highly preferably at least 900 percent at a crosshead separation rate of 11 cm/minute.

In other embodiments, the ethylene/a-olefin interpolymers have (1) a storage modulus ratio, G'(25°C)/G'(100 °C), of from 1 to 50, preferably from 1 to 20, more preferably from 1 to 10; and/or (2) a 70 °C compression set of less than 80 percent, preferably less than 70 percent, especially less than 60 percent, less than 50 percent, or less than 40 percent, down to a compression set of 0 percent.

In still other embodiments, the ethylene/a-olefin interpolymers have a 70 °C compression set of less than 80 percent, less than 70 percent, less than 60 percent, or less than 50 percent. Preferably, the 70 °C compression set of the interpolymers is less than 40 percent, less than 30 percent, less than 20 percent, and may go down to about 0 percent.

In some embodiments, the ethylene/a-olefin interpolymers have a heat of fusion of less than 85 J/g and/or a pellet blocking strength of equal to or less than 100 pounds/foot$^2$ (4800 Pa), preferably equal to or less than 50 lbs/ft$^2$ (2400 Pa), especially equal to or less than 5 lbs/ft$^2$ (240 Pa), and as low as 0 lbs/ft$^2$ (0 Pa).

In other embodiments, the ethylene/a-olefin interpolymers comprise, in polymerized form, at least 50 mole percent ethylene and have a 70 °C compression set of less than 80 percent, preferably less than 70 percent or less than 60 percent, most preferably less than 40 to 50 percent and down to close zero percent.

In some embodiments, the multi-block copolymers possess a PDI fitting a Schultz-Flory distribution rather than a Poisson distribution. The copolymers are further characterized as having both a polydisperse block distribution and a polydisperse distribution of block sizes and possessing a most probable distribution of block lengths. Preferred multi-block copolymers are those containing 4 or more blocks or segments including terminal blocks. More preferably, the copolymers include at least 5, 10 or 20 blocks or segments including terminal blocks.

Comonomer content may be measured using any suitable technique, with techniques based on nuclear magnetic resonance ("NMR") spectroscopy preferred. Moreover, for polymers or blends of polymers having relatively broad TREF curves, the polymer desirably is first fractionated using TREF into fractions each having an eluted temperature range of 10 °C or less. That is, each eluted fraction has a collection temperature window of 10 °C or less. Using this technique, said block interpolymers have at least one such fraction having a higher molar comonomer content than a corresponding fraction of the comparable interpolymer.

In another aspect, the inventive polymer is an olefin interpolymer, preferably comprising ethylene and one or more copolymerizable comonomers in polymerized form, characterized by multiple blocks (i.e., at least two blocks) or segments of two or more polymerized monomer units differing in chemical or physical properties (blocked interpolymer), most preferably a multi-block copolymer, said block interpolymer having a peak (but not just a molecular fraction) which elutes between 40 °C and 130 °C (but without collecting and/or isolating individual fractions), characterized in that said peak, has a comonomer content estimated by infra-red spectroscopy when expanded using a full width/half maximum (FWHM) area calculation, has an average molar comonomer content higher, preferably at least 5 percent higher, more preferably at least 10 percent higher, than that of a comparable random ethylene interpolymer peak at the same elution temperature and expanded using a full width/half maximum (FWHM) area calculation, wherein said comparable random ethylene interpolymer has the same comonomer(s) and has a melt index, density, and molar comonomer content (based on the whole polymer) within 10 percent of that of the blocked interpolymer. Preferably, the Mw/Mn of the comparable interpolymer is also within 10 percent of that of the blocked interpolymer and/or the comparable interpolymer has a total comonomer content within 10 weight percent of that of the blocked interpolymer. The full width/half maximum (FWHM) calculation is based on the ratio of methyl to methylene response area [$CH_3$/$CH_2$] from the ATREF infra-red detector, wherein the tallest (highest) peak is identified from the base line, and then the FWHM area is determined. For a distribution measured using an ATREF peak, the FWHM area is defined as the area under the curve between $T_1$ and $T_2$, where $T_1$ and $T_2$ are points determined, to the left and right of the ATREF peak, by dividing the peak height by two, and then drawing a line horizontal to the base line, that intersects the left and right portions of the ATREF curve. A calibration curve for comonomer content is made using random ethylene/a-olefin copolymers, plotting comonomer content from NMR versus FWHM area ratio of the TREF peak. For this infra-red method, the calibration curve is generated for the same comonomer type of interest. The comonomer content of TREF peak of the inventive polymer can be determined by referencing this calibration curve using its FWHM methyl: methylene area ratio [$CH_3$/$CH_2$] of the TREF peak.

Comonomer content may be measured using any suitable technique, with techniques based on nuclear magnetic resonance (NMR) spectroscopy preferred. Using this technique, said blocked interpolymers has higher molar comonomer content than a corresponding comparable interpolymer.

Preferably, for interpolymers of ethylene and 1-octene, the block interpolymer has a comonomer content of the TREF fraction eluting between 40 and 130 °C greater than or equal to the quantity (- 0.2013) T + 20.07, more preferably greater than or equal to the quantity (-0.2013) T+ 21.07, where T is the numerical value of the peak elution temperature of the TREF fraction being compared, measured in °C.

Figure 4 graphically depicts an embodiment of the block interpolymers of ethylene and 1-octene where a plot of the comonomer content versus TREF elution temperature for several comparable ethylene/1-octene interpolymers (random copolymers) are fit to a line representing (- 0.2013) T + 20.07 (solid line). The line for the equation (- 0.2013) T + 21.07 is depicted by a dotted line. Also depicted are the comonomer contents for fractions of several block ethylene/1-octene interpolymers disclosed herein (multi-block copolymers). All of the block interpolymer fractions have significantly higher 1-octene content than either line at equivalent elution temperatures. This result is characteristic of the inventive interpolymer and is believed to be due to the presence of differentiated blocks within the polymer chains, having both crystalline and amorphous nature.

Figure 5 graphically displays the TREF curve and comonomer contents of polymer fractions for Example 5 and

comparative F to be discussed below. The peak eluting from 40 °C to 130 °C, preferably from 60 °C to 95°C for both polymers is fractionated into three parts, each part eluting over a temperature range of less than 10 °C. Actual data for Example 5 is represented by triangles. The skilled artisan can appreciate that an appropriate calibration curve may be constructed for interpolymers containing different comonomers and a line used as a comparison fitted to the TREF values obtained from comparative interpolymers of the same monomers, preferably random copolymers made using a metallocene or other homogeneous catalyst composition. Inventive interpolymers are characterized by a molar comonomer content greater than the value determined from the calibration curve at the same TREF elution temperature, preferably at least 5 percent greater, more preferably at least 10 percent greater.

In addition to the above aspects and properties described herein, the inventive polymers can be characterized by one or more additional characteristics. In one aspect, the inventive polymer is an olefin interpolymer, preferably comprising ethylene and one or more copolymerizable comonomers in polymerized form, characterized by multiple blocks or segments of two or more polymerized monomer units differing in chemical or physical properties (blocked interpolymer), most preferably a multi-block copolymer, said block interpolymer having a molecular fraction which elutes between 40 °C and 130 °C, when fractionated using TREF increments, characterized in that said fraction has a molar comonomer content higher, preferably at least 5 percent higher, more preferably at least 10, 15, 20 or 25 percent higher, than that of a comparable random ethylene interpolymer fraction eluting between the same temperatures, wherein said comparable random ethylene interpolymer comprises the same comonomer(s), preferably it is the same comonomer(s), and a melt index, density, and molar comonomer content (based on the whole polymer) within 10 percent of that of the blocked interpolymer. Preferably, the Mw/Mn of the comparable interpolymer is also within 10 percent of that of the blocked interpolymer and/or the comparable interpolymer has a total comonomer content within 10 weight percent of that of the blocked interpolymer.

Preferably, the above interpolymers are interpolymers of ethylene and at least one $\alpha$-olefin, especially those interpolymers having a whole polymer density from 0.855 to 0.935 g/cm$^3$, and more especially for polymers having more than about 1 mole percent comonomer, the blocked interpolymer has a comonomer content of the TREF fraction eluting between 40 °C and 130 °C greater than or equal to the quantity (- 0.1356) T + 13.89, more preferably greater than or equal to the quantity (-0.1356) T+ 14.93, and most preferably greater than or equal to the quantity (-0.2013)T + 21.07, where T is the numerical value of the peak ATREF elution temperature of the TREF fraction being compared, measured in °C.

Preferably, for the above interpolymers of ethylene and at least one alpha-olefin especially those interpolymers having a whole polymer density from 0.855 to 0.935 g/cm$^3$, and more especially for polymers having more than about 1 mole percent comonomer, the blocked interpolymer has a comonomer content of the TREF fraction eluting between 40 °C and 130 °C greater than or equal to the quantity (- 0.2013) T + 20.07, more preferably greater than or equal to the quantity (-0.2013) T+ 21.07, where T is the numerical value of the peak elution temperature of the TREF fraction being compared, measured in °C.

In still another aspect, the inventive polymer is an olefin interpolymer, preferably comprising ethylene and one or more copolymerizable comonomers in polymerized form, characterized by multiple blocks or segments of two or more polymerized monomer units differing in chemical or physical properties (blocked interpolymer), most preferably a multi-block copolymer, said block interpolymer having a molecular fraction which elutes between 40 °C and 130 °C, when fractionated using TREF increments, characterized in that every fraction having a comonomer content of at least 6 mole percent, has a melting point greater than 100°C. For those fractions having a comonomer content from 3 mole percent to 6 mole percent, every fraction has a DSC melting point of 110 °C or higher. More preferably, said polymer fractions, having at least 1 mol percent comonomer, have a DSC melting point that corresponds to the equation:

$$Tm \geq (-5.5926)(\text{mol percent comonomer in the fraction}) + 135.90.$$

In yet another aspect, the inventive polymer is an olefin interpolymer, preferably comprising ethylene and one or more copolymerizable comonomers in polymerized form, characterized by multiple blocks or segments of two or more polymerized monomer units differing in chemical or physical properties (blocked interpolymer), most preferably a multi-block copolymer, said block interpolymer having a molecular fraction which elutes between 40 °C and 130 °C, when fractionated using TREF increments, characterized in that every fraction that has an ATREF elution temperature greater than or equal to about 76°C, has a melt enthalpy (heat of fusion) as measured by DSC, corresponding to the equation:

$$\text{Heat of fusion (J/gm)} \leq (3.1718)(\text{ATREF elution temperature in Celsius}) - 136.58,$$

The inventive block interpolymers have a molecular fraction which elutes between 40 °C and 130 °C, when fractionated using TREF increments, characterized in that every fraction that has an ATREF elution temperature between 40 °C and less than 76 °C, has a melt enthalpy (heat of fusion) as measured by DSC, corresponding to the equation:

$$\text{Heat of fusion (J/gm)} \leq (1.1312)(\text{ATREF elution temperature in Celsius}) + 22.97.$$

**ATREF Peak Comonomer Composition Measurement by Infra-Red Detector**

The comonomer composition of the TREF peak can be measured using an IR4 infra-red detector available from Polymer Char, Valencia, Spain (http://www.polvmerchar.com/).

The "composition mode" of the detector is equipped with a measurement sensor ($CH_2$) and composition sensor ($CH_3$) that are fixed narrow band infra-red filters in the region of 2800-3000 $cm^{-1}$. The measurement sensor detects the methylene ($CH_2$) carbons on the polymer (which directly relates to the polymer concentration in solution) while the composition sensor detects the methyl ($CH_3$) groups of the polymer. The mathematical ratio of the composition signal ($CH_3$) divided by the measurement signal ($CH_2$) is sensitive to the comonomer content of the measured polymer in solution and its response is calibrated with known ethylene alpha-olefin copolymer standards.

The detector when used with an ATREF instrument provides both a concentration ($CH_2$) and composition ($CH_3$) signal response of the eluted polymer during the TREF process. A polymer specific calibration can be created by measuring the area ratio of the $CH_3$ to $CH_2$ for polymers with known comonomer content (preferably measured by NMR). The comonomer content of an ATREF peak of a polymer can be estimated by applying the reference calibration of the ratio of the areas for the individual $CH_3$ and $CH_2$ response (i.e. area ratio $CH_3/CH_2$ versus comonomer content).

The area of the peaks can be calculated using a full width/half maximum (FWHM) calculation after applying the appropriate baselines to integrate the individual signal responses from the TREF chromatogram. The full width/half maximum calculation is based on the ratio of methyl to methylene response area [$CH_3/CH_2$] from the ATREF infrared detector, wherein the tallest (highest) peak is identified from the base line, and then the FWHM area is determined. For a distribution measured using an ATREF peak, the FWHM area is defined as the area under the curve between T1 and T2, where T1 and T2 are points determined, to the left and right of the ATREF peak, by dividing the peak height by two, and then drawing a line horizontal to the base line, that intersects the left and right portions of the ATREF curve.

The application of infra-red spectroscopy to measure the comonomer content of polymers in this ATREF-infra-red method is, in principle, similar to that of GPC/FTIR systems as described in the following references: Markovich, Ronald P.; Hazlitt, Lonnie G.; Smith, Linley; "Development of gel-permeation chromatography-Fourier transform infrared spectroscopy for characterization of ethylene-based polyolefin copolymers". Polymeric Materials Science and Engineering (1991), 65, 98-100.; and Deslauriers, P.J.; Rohlfing, D.C.; Shieh, E.T.; "Quantifying short chain branching microstructures in ethylene-1-olefin copolymers using size exclusion chromatography and Fourier transform infrared spectroscopy (SEC-FTIR)", Polymer (2002), 43, 59-170.

In other embodiments, the inventive ethylene/a-olefin interpolymer is characterized by an average block index, ABI, which is greater than zero and up to 1.0 and a molecular weight distribution, $M_w/M_n$, greater than 1.3. The average block index, ABI, is the weight average of the block index ("BI") for each of the polymer fractions obtained in preparative TREF from 20 °C and 110 °C, with an increment of 5°C:

$$ABI = \sum (w_i BI_i)$$

where $BI_i$ is the block index for the ith fraction of the inventive ethylene/a-olefin interpolymer obtained in preparative TREF, and $w_i$ is the weight percentage of the ith fraction.

For each polymer fraction, BI is defined by one of the two following equations (both of which give the same BI value):

$$BI = \frac{1/T_X - 1/T_{XO}}{1/T_A - 1/T_{AB}} \text{ or } BI = -\frac{LnP_X - LnP_{XO}}{LnP_A - LnP_{AB}}$$

where $T_X$ is the preparative ATREF elution temperature for the ith fraction (preferably expressed in Kelvin), $P_X$ is the ethylene mole fraction for the ith fraction, which can be measured by NMR or IR as described above. $P_{AB}$ is the ethylene mole fraction of the whole ethylene/a-olefin interpolymer (before fractionation), which also can be measured by NMR or IR. $T_A$ and $P_A$ are the ATREF elution temperature and the ethylene mole fraction for pure "hard segments" (which refer

to the crystalline segments of the interpolymer). As a first order approximation, the $T_A$ and $P_A$ values are set to those for high density polyethylene homopolymer, if the actual values for the "hard segments" are not available. For calculations performed herein, $T_A$ is 372°K, $P_A$ is 1.

$T_{AB}$ is the ATREF temperature for a random copolymer of the same composition and having an ethylene mole fraction of $P_{AB}$. $T_{AB}$ can be calculated from the following equation:

$$\text{Ln } P_{AB} = \alpha/T_{AB} + \beta$$

where $\alpha$ and $\beta$ are two constants which can be determined by calibration using a number of known random ethylene copolymers. It should be noted that $\alpha$ and $\beta$ may vary from instrument to instrument. Moreover, one would need to create their own calibration curve with the polymer composition of interest and also in a similar molecular weight range as the fractions. There is a slight molecular weight effect. If the calibration curve is obtained from similar molecular weight ranges, such effect would be essentially negligible. In some embodiments, random ethylene copolymers satisfy the following relationship:

$$\text{Ln } P = -237.83/T_{ATREF} + 0.639$$

$T_{XO}$ is the ATREF temperature for a random copolymer of the same composition and having an ethylene mole fraction of $P_X$. $T_{XO}$ can be calculated from $\text{Ln}P_X = \alpha/T_{XO} + \beta$. Conversely, $P_{XO}$ is the ethylene mole fraction for a random copolymer of the same composition and having an ATREF temperature of $T_X$, which can be calculated from $\text{Ln } P_{XO} = \alpha/T_X + \beta$.

Once the block index (BI) for each preparative TREF fraction is obtained, the weight average block index, ABI, for the whole polymer can be calculated. In some embodiments, ABI is greater than zero but less than 0.3 or from 0.1 to 0.3. In other embodiments, ABI is greater than 0.3 and up to 1.0. Preferably, ABI should be in the range of from 0.4 to 0.7, from 0.5 to 0.7, or from 0.6 to 0.9. In some embodiments, ABI is in the range of from 0.3 to 0.9, from 0.3 to 0.8, or from 0.3 to 0.7, from 0.3 to 0.6, from 0.3 to 0.5, or from 0.3 to 0.4. In other embodiments, ABI is in the range of from 0.4 to 1.0, from 0.5 to 1.0, or from 0.6 to 1.0, from 0.7 to 1.0, from 0.8 to 1.0, or from 0.9 to 1.0.

Another characteristic of the inventive ethylene/a-olefin interpolymer is that the inventive ethylene/a-olefin interpolymer comprises at least one polymer fraction which can be obtained by preparative TREF, wherein the fraction has a block index greater than 0.1 and up to 1.0 and a molecular weight distribution, $M_w/M_n$, greater than 1.3. In some embodiments, the polymer fraction has a block index greater than 0.6 and up to 1.0, greater than 0.7 and up to 1.0, greater than 0.8 and up to 1.0, or greater than 0.9 and up to 1.0. In other embodiments, the polymer fraction has a block index greater than 0.1 and up to 1.0, greater than 0.2 and up to 1.0, greater than 0.3 and up to 1.0, greater than 0.4 and up to 1.0, or greater than 0.4 and up to 1.0. In still other embodiments, the polymer fraction has a block index greater than 0.1 and up to 0.5, greater than 0.2 and up to 0.5, greater than 0.3 and up to 0.5, or greater than 0.4 and up to 0.5. In yet other embodiments, the polymer fraction has a block index greater than 0.2 and up to 0.9, greater than 0.3 and up to 0.8, greater than 0.4 and up to 0.7, or greater than 0.5 and up to 0.6.

For copolymers of ethylene and an $\alpha$-olefin, the inventive polymers preferably possess (1) a PDI of at least 1.3, more preferably at least 1.5, at least 1.7, or at least 2.0, and most preferably at least 2.6, up to a maximum value of 5.0, more preferably up to a maximum of 3.5, and especially up to a maximum of 2.7; (2) a heat of fusion of 80 J/g or less; (3) an ethylene content of at least 50 weight percent; (4) a glass transition temperature, $T_g$, of less than -25°C, more preferably less than -30 °C, and/or (5) one and only one $T_m$.

Further, the inventive polymers can have, alone or in combination with any other properties disclosed herein, a storage modulus, G', such that log (G') is greater than or equal to 400 kPa, preferably greater than or equal to 1.0 MPa, at a temperature of 100 °C. Moreover, the inventive polymers possess a relatively flat storage modulus as a function of temperature in the range from 0 to 100 °C (illustrated in Figure 6) that is characteristic of block copolymers, and heretofore unknown for an olefin copolymer, especially a copolymer of ethylene and one or more $C_{3-8}$ aliphatic $\alpha$-olefins. (By the term "relatively flat" in this context is meant that log G' (in Pascals) decreases by less than one order of magnitude between 50 and 100 °C, preferably between 0 and 100 °C).

The inventive interpolymers may be further characterized by a thermomechanical analysis penetration depth of 1 mm at a temperature of at least 90 °C as well as a flexural modulus of from 3 kpsi (20 MPa) to 13 kpsi (90 MPa). Alternatively, the inventive interpolymers can have a thermomechanical analysis penetration depth of 1 mm at a temperature of at least 104°C as well as a flexural modulus of at least 3 kpsi (20 MPa). They may be characterized as having an abrasion resistance (or volume loss) of less than 90 $mm^3$. Figure 7 shows the TMA (1 mm) versus flex modulus for the inventive polymers, as compared to other known polymers. The inventive polymers have significantly better flexibility-heat resistance balance than the other polymers.

Additionally, the ethylene/a-olefin interpolymers can have a melt index, $I_2$, from 0.01 to 2000 g/10 minutes,

preferably from 0.01 to 1000 g/10 minutes, more preferably from 0.01 to 500 g/10 minutes, and especially from 0.01 to 100 g/10 minutes. In certain embodiments, the ethylene/a-olefin interpolymers have a melt index, $I_2$, from 0.01 to 10 g/10 minutes, from 0.5 to 50 g/10 minutes, from 1 to 30 g/10 minutes, from 1 to 6 g/10 minutes or from 0.3 to 10 g/10 minutes. In certain embodiments, the melt index for the ethylene/a-olefin polymers is 1g/10 minutes, 3 g/10 minutes or 5 g/10 minutes.

The polymers can have molecular weights, $M_w$, from 1,000 g/mole to 5,000,000 g/mole, preferably from 1000 g/mole to 1,000,000, more preferably from 10,000 g/mole to 500,000 g/mole, and especially from 10,000 g/mole to 300,000 g/mole. The density of the inventive polymers can be from 0.80 to 0.99 g/cm$^3$ and preferably for ethylene containing polymers from 0.85 g/cm$^3$ to 0.97 g/cm$^3$. In certain embodiments, the density of the ethylene/a-olefin polymers ranges from 0.860 to 0.925 g/cm$^3$ or 0.867 to 0.910 g/cm$^3$.

The process of making the polymers has been disclosed in the following patent applications: PCT Application No. PCT/US2005/008916, filed March 17, 2005; PCT Application No. PCT/US2005/008915, filed March 17, 2005; and PCT Application No. PCT/US2005/008917, filed March 17, 2005. For example, one such method comprises contacting ethylene and optionally one or more addition polymerizable monomers other than ethylene under addition polymerization conditions with a catalyst composition comprising:
the admixture or reaction product resulting from combining:

(A) a first olefin polymerization catalyst having a high comonomer incorporation index,

(B) a second olefin polymerization catalyst having a comonomer incorporation index less than 90 percent, preferably less than 50 percent, most preferably less than 5 percent of the comonomer incorporation index of catalyst (A), and

(C) a chain shuttling agent.

Representative catalysts and chain shuttling agent are as follows.

**Catalyst (A1)** is [N-(2,6-di(1-methylethyl)phenyl)amido)(2-isopropylphenyl)(α-naphthalen-2-diyl(6-pyridin-2-diyl)methane)]hafnium dimethyl, prepared according to the teachings of WO 03/40195, 2003US0204017, USSN 10/429,024, filed May 2, 2003, and WO 04/24740.

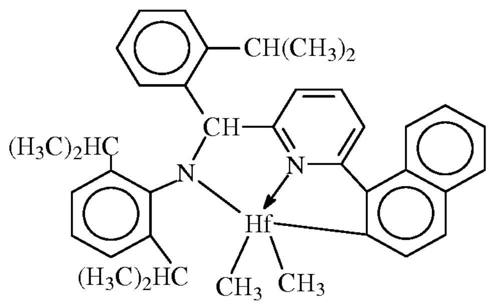

**Catalyst (A2)** is [N-(2,6-di(1-methylethyl)phenyl)amido)(2-methylphenyl)(1,2-phenylene-(6-pyridin-2-diyl)methane)]hafnium dimethyl, prepared according to the teachings of WO 03/40195, 2003US0204017 and WO 04/24740.

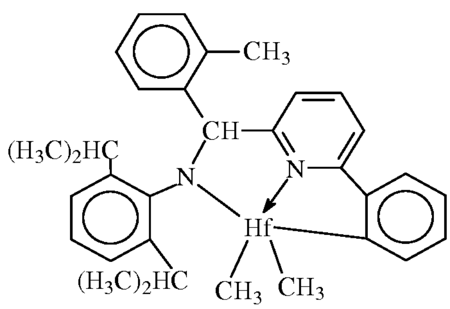

**Catalyst (A3)** is bis[N,N'''-(2,4,6-tri(methylphenyl)amido)ethylenediamine]hafnium dibenzyl.

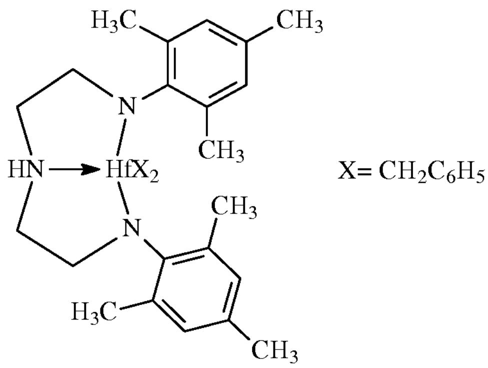

**Catalyst (A4)** is bis((2-oxoyl-3-(dibenzo-1H-pyrrole-1-yl)-5-(methyl)phenyl)-2-phenoxymethyl)cyclohexane-1,2-diyl zirconium (IV) dibenzyl, prepared substantially according to the teachings of US-A-2004/0010103.

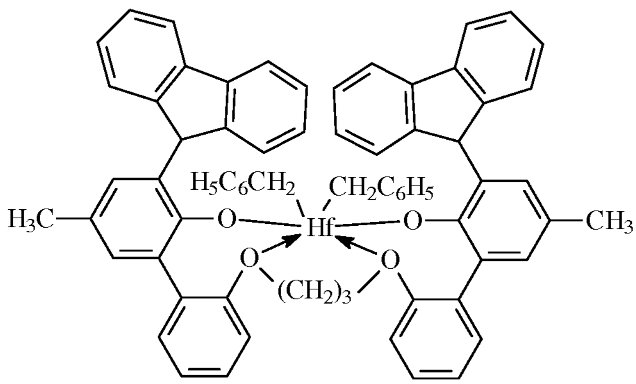

**Catalyst (B1)** is 1,2-bis-(3,5-di-t-butylphenylene)(1-(N-(1-methylethyl)immino)methyl)(2-oxoyl) zirconium dibenzyl

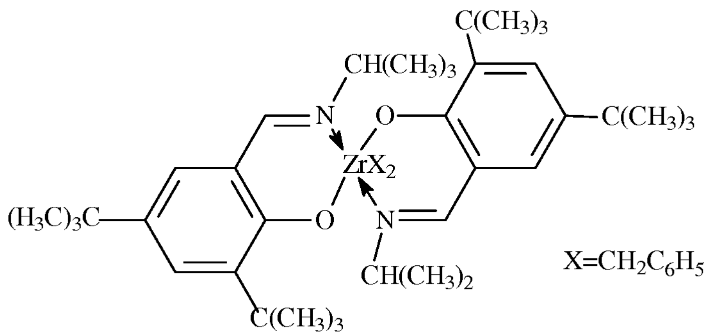

**Catalyst (B2)** is 1,2-bis-(3,5-di-t-butylphenylene)(1-(N-(2-methylcyclohexyl)-immino)methyl)(2-oxoyl) zirconium dibenzyl

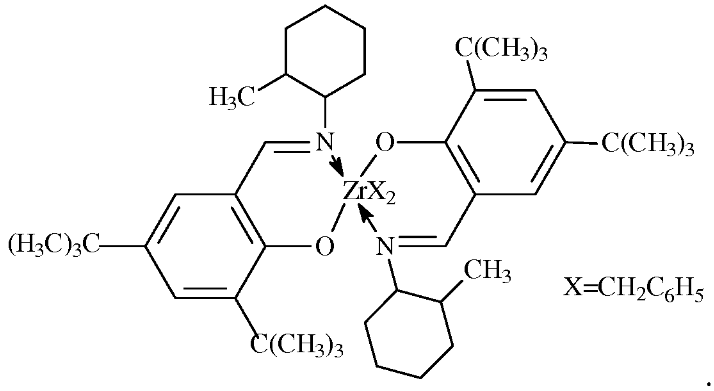

.

**Catalyst (C1)** is (t-butylamido)dimethyl(3-N-pyrrolyl-1,2,3,3a,7a-η-inden-1-yl)silanetitanium dimethyl prepared substantially according to the techniques of USP 6,268,444:

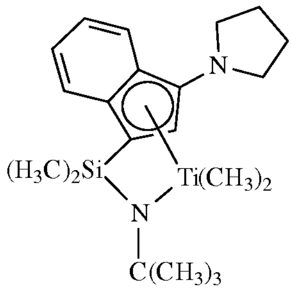

.

**Catalyst (C2)** is (t-butylamido)di(4-methylphenyl)(2-methyl-1,2,3,3a,7a-η-inden-1-yl)silanetitanium dimethyl prepared substantially according to the teachings of US-A-2003/004286:

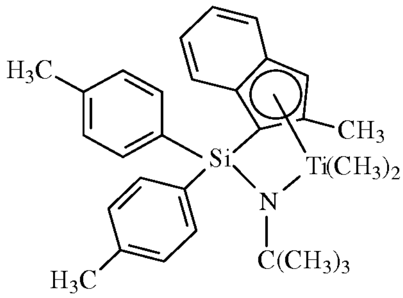

.

**Catalyst (C3)** is (t-butylamido)di(4-methylphenyl)(2-methyl-1,2,3,3a,8a-η-s-indacen-1-yl)silanetitanium dimethyl prepared substantially according to the teachings of US-A-2003/004286:

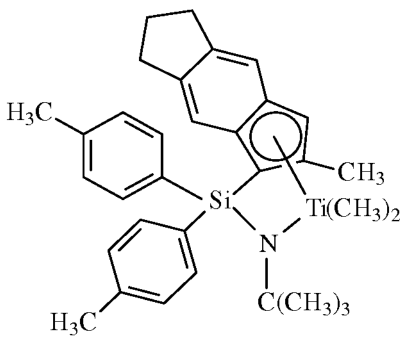

.

**Catalyst (D1)** is bis(dimethyldisiloxane)(indene-1-yl)zirconium dichloride available from Sigma-Aldrich:

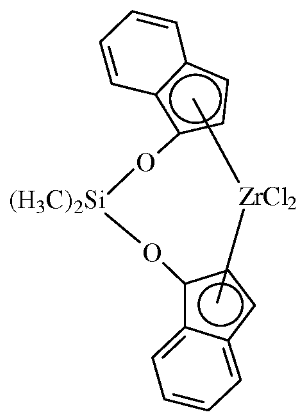

.

**Shuttling Agents** The shuttling agents employed include diethylzinc, di(i-butyl)zinc, di(n-hexyl)zinc, triethylaluminum, trioctylaluminum, triethylgallium, i-butylaluminum bis(dimethyl(t-butyl)siloxane), i-butylaluminum bis(di(trimethylsilyl)amide), n-octylaluminum di(pyridine-2-methoxide), bis(n-octadecyl)i-butylaluminum, i-butylaluminum bis(di(n-pentyl)amide), n-octylaluminum bis(2,6-di-t-butylphenoxide, n-octylaluminum di(ethyl(1-naphthyl)amide), ethylaluminum bis(t-butyldimethylsiloxide), ethylaluminum di(bis(trimethylsilyl)amide), ethylaluminum bis(2,3,6,7-dibenzo-1-azacycloheptaneamide), n-octylaluminum bis(2,3,6,7-dibenzo-1-azacycloheptaneamide), n-octylaluminum bis(dimethyl(t-butyl)siloxide, ethylzinc (2,6-diphenylphenoxide), and ethylzinc (t-butoxide).

Preferably, the foregoing process takes the form of a continuous solution process for forming block copolymers, especially multi-block copolymers, preferably linear multi-block copolymers of two or more monomers, more especially ethylene and a $C_{3-20}$ olefin or cycloolefin, and most especially ethylene and a $C_{4-20}$ $\alpha$-olefin, using multiple catalysts that are incapable of interconversion. That is, the catalysts are chemically distinct. Under continuous solution polymerization conditions, the process is ideally suited for polymerization of mixtures of monomers at high monomer conversions. Under these polymerization conditions, shuttling from the chain shuttling agent to the catalyst becomes advantaged compared to chain growth, and multi-block copolymers, especially linear multi-block copolymers are formed in high efficiency.

The inventive interpolymers may be differentiated from conventional, random copolymers, physical blends of polymers, and block copolymers prepared via sequential monomer addition, fluxional catalysts, anionic or cationic living polymerization techniques. In particular, compared to a random copolymer of the same monomers and monomer content at equivalent crystallinity or modulus, the inventive interpolymers have better (higher) heat resistance as measured by melting point, higher TMA penetration temperature, higher high-temperature tensile strength, and/or higher high-temperature torsion storage modulus as determined by dynamic mechanical analysis. Compared to a random copolymer containing the same monomers and monomer content, the inventive interpolymers have lower compression set, particularly at elevated temperatures, lower stress relaxation, higher creep resistance, higher tear strength, higher blocking resistance, faster setup due to higher crystallization (solidification) temperature, higher recovery (particularly at elevated temperatures), better abrasion resistance, higher retractive force, and better oil and filler acceptance.

The inventive interpolymers also exhibit a unique crystallization and branching distribution relationship. That is, the inventive interpolymers have a relatively large difference between the tallest peak temperature measured using CRYSTAF and DSC as a function of heat of fusion, especially as compared to random copolymers containing the same monomers and monomer level or physical blends of polymers, such as a blend of a high density polymer and a lower density copolymer, at equivalent overall density. It is believed that this unique feature of the inventive interpolymers is due to the unique distribution of the comonomer in blocks within the polymer backbone. In particular, the inventive interpolymers may comprise alternating blocks of differing comonomer content (including homopolymer blocks). The inventive interpolymers may also comprise a distribution in number and/or block size of polymer blocks of differing density or comonomer content, which is a Schultz-Flory type of distribution. In addition, the inventive interpolymers also have a unique peak melting point and crystallization temperature profile that is substantially independent of polymer density, modulus, and morphology. In a preferred embodiment, the microcrystalline order of the polymers demonstrates characteristic spherulites and lamellae that are distinguishable from random or block copolymers, even at PDI values that are less than 1.7, or even less than 1.5, down to less than 1.3.

Moreover, the inventive interpolymers may be prepared using techniques to influence the degree or level of blockiness. That is the amount of comonomer and length of each polymer block or segment can be altered by controlling the ratio and type of catalysts and shuttling agent as well as the temperature of the polymerization, and other polymerization variables. A surprising benefit of this phenomenon is the discovery that as the degree of blockiness is increased, the optical properties, tear strength, and high temperature recovery properties of the resulting polymer are improved. In particular, haze decreases while clarity, tear strength, and high temperature recovery properties increase as the average number of blocks in the polymer increases. By selecting shuttling agents and catalyst combinations having the desired chain transferring ability (high rates of shuttling with low levels of chain termination) other forms of polymer termination are effectively suppressed. Accordingly, little if any β-hydride elimination is observed in the polymerization of ethylene/a-olefin comonomer mixtures according to embodiments disclosed herein, and the resulting crystalline blocks are highly, or substantially completely, linear, possessing little or no long chain branching.

Polymers with highly crystalline chain ends can be selectively prepared in accordance with embodiments disclosed herein. In elastomer applications, reducing the relative quantity of polymer that terminates with an amorphous block reduces the intermolecular dilutive effect on crystalline regions. This result can be obtained by choosing chain shuttling agents and catalysts having an appropriate response to hydrogen or other chain terminating agents. Specifically, if the catalyst which produces highly crystalline polymer is more susceptible to chain termination (such as by use of hydrogen) than the catalyst responsible for producing the less crystalline polymer segment (such as through higher comonomer incorporation, regio-error, or atactic polymer formation), then the highly crystalline polymer segments will preferentially populate the terminal portions of the polymer. Not only are the resulting terminated groups crystalline, but upon termination, the highly crystalline polymer forming catalyst site is once again available for reinitiation of polymer formation. The initially formed polymer is therefore another highly crystalline polymer segment. Accordingly, both ends of the resulting multi-block copolymer are preferentially highly crystalline.

The ethylene α-olefin interpolymers used in the embodiments disclosed herein are preferably interpolymers of ethylene with at least one $C_3$-$C_{20}$ α-olefin. Copolymers of ethylene and a $C_3$-$C_{20}$ α-olefin are especially preferred. The interpolymers may further comprise $C_4$-$C_{18}$ diolefin and/or alkenylbenzene. Suitable unsaturated comonomers useful for polymerizing with ethylene include, for example, ethylenically unsaturated monomers, conjugated or nonconjugated dienes, polyenes, alkenylbenzenes, etc. Examples of such comonomers include $C_3$-$C_{20}$ α -olefins such as propylene, isobutylene, 1-butene, 1-hexene, 1-pentene, 4-methyl-1-pentene, 1-heptene, 1-octene, 1-nonene, 1-decene, and the like. 1-Butene and 1-octene are especially preferred. Other suitable monomers include styrene, halo-or alkyl-substituted styrenes, vinylbenzocyclobutane, 1,4-hexadiene, 1,7-octadiene, and naphthenics (e.g., cyclopentene, cyclohexene and cyclooctene).

While ethylene/a-olefin interpolymers are preferred polymers, other ethylene/olefin polymers may also be used. Olefins as used herein refer to a family of unsaturated hydrocarbon-based compounds with at least one carbon-carbon double bond. Depending on the selection of catalysts, any olefin may be used in embodiments disclosed herein. Preferably, suitable olefins are $C_3$-$C_{20}$ aliphatic and aromatic compounds containing vinylic unsaturation, as well as cyclic compounds, such as cyclobutene, cyclopentene, dicyclopentadiene, and norbornene, including but not limited to, norbornene substituted in the 5 and 6 positions with $C_1$-$C_{20}$ hydrocarbyl or cyclohydrocarbyl groups. Also included are mixtures of such olefins as well as mixtures of such olefins with $C_4$-$C_{40}$ diolefin compounds.

Examples of olefin monomers include, but are not limited to propylene, isobutylene, 1-butene, 1-pentene, 1-hexene, 1-heptene, 1-octene, 1-nonene, 1-decene, and 1-dodecene, 1-tetradecene, 1-hexadecene, 1-octadecene, 1-eicosene, 3-methyl-1-butene, 3-methyl-1-pentene, 4-methyl-1-pentene, 4,6-dimethyl-1-heptene, 4-vinylcyclohexene, vinylcyclohexane, norbornadiene, ethylidene norbornene, cyclopentene, cyclohexene, dicyclopentadiene, cyclooctene, $C_4$-$C_{40}$ dienes, including but not limited to 1,3-butadiene, 1,3-pentadiene, 1,4-hexadiene, 1,5-hexadiene, 1,7-octadiene, 1,9-decadiene, other $C_4$-$C_{40}$ α-olefins, and the like. In certain embodiments, the α-olefin is propylene, 1-butene, 1-pentene,1-hexene, 1-octene or a combination thereof. Although any hydrocarbon containing a vinyl group potentially may be used in embodiments disclosed herein, practical issues such as monomer availability, cost, and the ability to conveniently remove unreacted monomer from the resulting polymer may become more problematic as the molecular weight of the monomer becomes too high.

The polymerization processes described herein are well suited for the production of olefin polymers comprising monovinylidene aromatic monomers including styrene, o-methyl styrene, p-methyl styrene, t-butylstyrene, and the like. In particular, interpolymers comprising ethylene and styrene can be prepared by following the teachings herein. Optionally, copolymers comprising ethylene, styrene and a $C_3$-$C_{20}$ alpha olefin, optionally comprising a $C_4$-$C_{20}$ diene, having improved properties can be prepared.

Suitable non-conjugated diene monomers can be a straight chain, branched chain or cyclic hydrocarbon diene having from 6 to 15 carbon atoms. Examples of suitable non-conjugated dienes include, but are not limited to, straight chain acyclic dienes, such as 1,4-hexadiene, 1,6-octadiene, 1,7-octadiene, 1,9-decadiene, branched chain acyclic dienes, such as 5-methyl-1,4-hexadiene; 3,7-dimethyl-1,6-octadiene; 3,7-dimethyl-1,7-octadiene and mixed isomers of dihydromyricene and dihydroocinene, single ring alicyclic dienes, such as 1,3-cyclopentadiene; 1,4-cyclohexadiene; 1,5-cyclooctadiene and 1,5-cyclododecadiene, and multi-ring alicyclic fused and bridged ring dienes, such as tetrahydroindene, methyl tetrahydroindene, dicyclopentadiene, bicyclo-(2,2,1)-hepta-2,5-diene; alkenyl, alkylidene, cycloalkenyl and cycloalkylidene norbornenes, such as 5-methylene-2-norbornene (MNB); 5-propenyl-2-norbornene, 5-isopropylidene-2-norbornene, 5-(4-cyclopentenyl)-2-norbornene, 5-cyclohexylidene-2-norbornene, 5-vinyl-2-norbornene, and norbornadiene. Of the dienes typically used to prepare EPDMs, the particularly preferred dienes are 1,4-hexadiene (HD), 5-ethylidene-2-norbornene (ENB), 5-vinylidene-2-norbornene (VNB), 5-methylene-2-norbornene (MNB), and dicyclopentadiene (DCPD). The especially preferred dienes are 5-ethylidene-2-norbornene (ENB) and 1,4-hexadiene (HD).

One class of desirable polymers that can be made in accordance with embodiments disclosed herein are elastomeric interpolymers of ethylene, a $C_3$-$C_{20}$ $\alpha$-olefin, especially propylene, and optionally one or more diene monomers. Preferred $\alpha$-olefins for use in this embodiment of the present invention are designated by the formula $CH_2$=CHR*, where R* is a linear or branched alkyl group of from 1 to 12 carbon atoms. Examples of suitable $\alpha$-olefins include, but are not limited to, propylene, isobutylene, 1-butene, 1-pentene, 1-hexene, 4-methyl-1-pentene, and 1-octene. A particularly preferred $\alpha$-olefin is propylene. The propylene based polymers are generally referred to in the art as EP or EPDM polymers. Suitable dienes for use in preparing such polymers, especially multi-block EPDM type polymers include conjugated or non-conjugated, straight or branched chain-, cyclic- or polycyclic- dienes comprising from 4 to 20 carbons. Preferred dienes include 1,4-pentadiene, 1,4-hexadiene, 5-ethylidene-2-norbornene, dicyclopentadiene, cyclohexadiene, and 5-butylidene-2-norbornene. A particularly preferred diene is 5-ethylidene-2-norbornene.

Because the diene containing polymers comprise alternating segments or blocks containing greater or lesser quantities of the diene (including none) and $\alpha$-olefin (including none), the total quantity of diene and $\alpha$-olefin may be reduced without loss of subsequent polymer properties. That is, because the diene and $\alpha$-olefin monomers are preferentially incorporated into one type of block of the polymer rather than uniformly or randomly throughout the polymer, they are more efficiently utilized and subsequently the crosslink density of the polymer can be better controlled. Such crosslinkable elastomers and the cured products have advantaged properties, including higher tensile strength and better elastic recovery.

In some embodiments, the inventive interpolymers made with two catalysts incorporating differing quantities of comonomer have a weight ratio of blocks formed thereby from 95:5 to 5:95. The elastomeric polymers desirably have an ethylene content of from 20 to 90 percent, a diene content of from 0.1 to 10 percent, and an $\alpha$-olefin content of from 10 to 80 percent, based on the total weight of the polymer. Further preferably, the multi-block elastomeric polymers have an ethylene content of from 60 to 90 percent, a diene content of from 0.1 to 10 percent, and an $\alpha$-olefin content of from 10 to 40 percent, based on the total weight of the polymer. Preferred polymers are high molecular weight polymers, having a weight average molecular weight (Mw) from 10,000 to 2,500,000, preferably from 20,000 to 500,000, more preferably from 20,000 to 350,000, and a polydispersity less than 3.5, more preferably less than 3.0, and a Mooney viscosity (ML (1+4) 125°C.) from 1 to 250. More preferably, such polymers have an ethylene content from 65 to 75 percent, a diene content from 0 to 6 percent, and an $\alpha$-olefin content from 20 to 35 percent.

The ethylene/a-olefin interpolymers can be functionalized by incorporating at least one functional group in its polymer structure. Exemplary functional groups may include, for example, ethylenically unsaturated mono- and di-functional carboxylic acids, ethylenically unsaturated mono- and di-functional carboxylic acid anhydrides, salts thereof and esters thereof. Such functional groups may be grafted to an ethylene/$\alpha$-olefin interpolymer, or it may be copolymerized with ethylene and an optional additional comonomer to form an interpolymer of ethylene, the functional comonomer and optionally other comonomer(s). Means for grafting functional groups onto polyethylene are described for example in U.S. Patents Nos. 4,762,890, 4,927,888, and 4,950,541. One particularly useful functional group is maleic anhydride.

The amount of the functional group present in the functional interpolymer can vary. The functional group can typically be present in a copolymer-type functionalized interpolymer in an amount of at least 1.0 weight percent, preferably at least 5 weight percent, and more preferably at least 7 weight percent. The functional group will typically be present in a copolymer-type functionalized interpolymer in an amount less than 40 weight percent, preferably less than 30 weight percent, and more preferably less than 25 weight percent.

## Testing Methods

In the examples that follow, the following analytical techniques are employed:

### GPC Method for Samples 1-4 and A-C

An automated liquid-handling robot equipped with a heated needle set to 160°C is used to add enough 1,2,4-trichlorobenzene stabilized with 300 ppm Ionol to each dried polymer sample to give a final concentration of 30 mg/mL. A small glass stir rod is placed into each tube and the samples are heated to 160°C for 2 hours on a heated, orbital-shaker rotating at 250 rpm. The concentrated polymer solution is then diluted to 1 mg/ml using the automated liquid-handling robot and the heated needle set to 160°C.

A Symyx™ Rapid GPC system is used to determine the molecular weight data for each sample. A Gilson™ 350 pump set at 2.0 ml/min flow rate is used to pump helium-purged 1,2-dichlorobenzene stabilized with 300 ppm Ionol as the mobile phase through three Plgel 10 micrometer ($\mu$m) Mixed B 300mm x 7.5mm columns placed in series and

heated to 160°C. A Polymer Labs ELS 1000™ Detector is used with the Evaporator set to 250°C, the Nebulizer set to 165°C, and the nitrogen flow rate set to 1.8 SLM at a pressure of 60-80 psi (400-600 kPa) $N_2$. The polymer samples are heated to 160°C and each sample injected into a 250 μm loop using the liquid-handling robot and a heated needle. Serial analysis of the polymer samples using two switched loops and overlapping injections are used. The sample data is collected and analyzed using Symyx Epoch™ software. Peaks are manually integrated and the molecular weight information reported uncorrected against a polystyrene standard calibration curve.

### Standard CRYSTAF Method

Branching distributions are determined by crystallization analysis fractionation (CRYSTAF) using a CRYSTAF 200 unit commercially available from PolymerChar, Valencia, Spain. The samples are dissolved in 1,2,4-trichlorobenzene at 160 °C (0.66 mg/mL) for 1 hr and stabilized at 95°C for 45 minutes. The sampling temperatures range from 95 to 30 °C at a cooling rate of 0.2°C/min. An infrared detector is used to measure the polymer solution concentrations. The cumulative soluble concentration is measured as the polymer crystallizes while the temperature is decreased. The analytical derivative of the cumulative profile reflects the short chain branching distribution of the polymer.

The CRYSTAF peak temperature and area are identified by the peak analysis module included in the CRYSTAF Software (Version 2001.b, PolymerChar, Valencia, Spain). The CRYSTAF peak finding routine identifies a peak temperature as a maximum in the dW/dT curve and the area between the largest positive inflections on either side of the identified peak in the derivative curve. To calculate the CRYSTAF curve, the preferred processing parameters are with a temperature limit of 70 °C and with smoothing parameters above the temperature limit of 0.1, and below the temperature limit of 0.3.

### DSC Standard Method (Excluding Samples 1-4 and A-C)

Differential Scanning Calorimetry results are determined using a TAI model Q1000 DSC equipped with an RCS cooling accessory and an autosampler. A nitrogen purge gas flow of 50 ml/min is used. The sample is pressed into a thin film and melted in the press at about 175°C and then air-cooled to room temperature (25°C). 3-10 mg of material is then cut into a 6 mm diameter disk, accurately weighed, placed in a light aluminum pan (ca 50 mg), and then crimped shut. The thermal behavior of the sample is investigated with the following temperature profile. The sample is rapidly heated to 180°C and held isothermal for 3 minutes in order to remove any previous thermal history. The sample is then cooled to - 40°C at 10°C/min cooling rate and held at -40°C for 3 minutes. The sample is then heated to 150 °C at 10°C/min. heating rate. The cooling and second heating curves are recorded.

The DSC melting peak is measured as the maximum in heat flow rate (W/g) with respect to the linear baseline drawn between -30 °C and end of melting. The heat of fusion is measured as the area under the melting curve between -30 °C and the end of melting using a linear baseline.

### GPC Method (Excluding Samples 1-4 and A-C)

The gel permeation chromatographic system consists of either a Polymer Laboratories Model PL-210™ or a Polymer Laboratories Model PL-220™ instrument. The column and carousel compartments are operated at 140 °C. Three Polymer Laboratories 10-micron Mixed-B columns are used. The solvent is 1,2,4-trichlorobenzene. The samples are prepared at a concentration of 0.1 grams of polymer in 50 milliliters of solvent containing 200 ppm of butylated hydroxytoluene (BHT). Samples are prepared by agitating lightly for 2 hours at 160°C. The injection volume used is 100 microliters and the flow rate is 1.0 ml/minute.

Calibration of the GPC column set is performed with 21 narrow molecular weight distribution polystyrene standards with molecular weights ranging from 580 to 8,400,000, arranged in 6 "cocktail" mixtures with at least a decade of separation between individual molecular weights. The standards are purchased from Polymer Laboratories (Shropshire, UK). The polystyrene standards are prepared at 0.025 grams in 50 milliliters of solvent for molecular weights equal to or greater than 1,000,000, and 0.05 grams in 50 milliliters of solvent for molecular weights less than 1,000,000. The polystyrene standards are dissolved at 80 °C with gentle agitation for 30 minutes. The narrow standards mixtures are run first and in order of decreasing highest molecular weight component to minimize degradation. The polystyrene standard peak molecular weights are converted to polyethylene molecular weights using the following equation (as described in Williams and Ward, J. Polym. Sci., Polym. Let., 6, 621 (1968)): $M_{polyethylene} = 0.431(M_{polystyrene})$.

Polyethylene equivalent molecular weight calculations are performed using Viscotek TriSEC™ software Version 3.0.

**Compression Set**

Compression set is measured according to ASTM D 395. The sample is prepared by stacking 25.4 mm diameter round discs of 3.2 mm, 2.0 mm, and 0.25 mm thickness until a total thickness of 12.7 mm is reached. The discs are cut from 12.7 cm x 12.7 cm compression molded plaques molded with a hot press under the following conditions: zero pressure for 3 min at 190°C, followed by 86 MPa for 2 min at 190°C, followed by cooling inside the press with cold running water at 86 MPa.

**Density**

Samples for density measurement are prepared according to ASTM D 1928. Measurements are made within one hour of sample pressing using ASTM D792, Method B.

**Flexural/Secant Modulus/ Storage Modulus**

Samples are compression molded using ASTM D 1928. Flexural and 2 percent secant moduli are measured according to ASTM D-790. Storage modulus is measured according to ASTM D 5026-01 or equivalent technique.

**Optical Properties**

Films of 0.4 mm thickness are compression molded using a hot press (Carver Model #4095-4PR1001R™). The pellets are placed between polytetrafluoroethylene sheets, heated at 190 °C at 55 psi (380 kPa) for 3 min, followed by 1.3 MPa for 3 min, and then 2.6 MPa for 3 min. The film is then cooled in the press with running cold water at 1.3 MPa for 1 min. The compression molded films are used for optical measurements, tensile behavior, recovery, and stress relaxation.

Clarity is measured using BYK Gardner™ Haze-gard as specified in ASTM D 1746.

45° gloss is measured using BYK Gardner™ Glossmeter Microgloss 45° as specified in ASTM D-2457

Internal haze is measured using BYK Gardner™ Haze-gard based on ASTM D 1003 Procedure A. Mineral oil is applied to the film surface to remove surface scratches.

**Mechanical Properties - Tensile, Hysteresis, and Tear**

Stress-strain behavior in uniaxial tension is measured using ASTM D 1708 microtensile specimens. Samples are stretched with an Instron at 500 % $min^{-1}$ at 21°C. Tensile strength and elongation at break are reported from an average of 5 specimens.

100% and 300% Hysteresis is determined from cyclic loading to 100% and 300% strains using ASTM D 1708 microtensile specimens with an Instron™ instrument. The sample is loaded and unloaded at 267 % $min^{-1}$ for 3 cycles at 21°C. Cyclic experiments at 300% and 80°C are conducted using an environmental chamber. In the 80 °C experiment, the sample is allowed to equilibrate for 45 minutes at the test temperature before testing. In the 21 °C, 300% strain cyclic experiment, the retractive stress at 150% strain from the first unloading cycle is recorded. Percent recovery for all experiments are calculated from the first unloading cycle using the strain at which the load returned to the base line. The percent recovery is defined as:

$$\%\,\mathrm{Recovery} = \frac{\varepsilon_f - \varepsilon_s}{\varepsilon_f} \times 100$$

where $\varepsilon_f$ is the strain taken for cyclic loading and $\varepsilon_s$ is the strain where the load returns to the baseline during the 1st unloading cycle.

Stress relaxation is measured at 50 percent strain and 37 °C for 12 hours using an Instron™ instrument equipped with an environmental chamber. The gauge geometry was 76 mm x 25 mm x 0.4 mm. After equilibrating at 37°C for 45 min in the environmental chamber, the sample was stretched to 50% strain at 333% $min^{-1}$. Stress was recorded as a function of time for 12 hours. The percent stress relaxation after 12 hours was calculated using the formula:

$$\%\ \mathit{Stress\ Relaxation} = \frac{L_0 - L_{12}}{L_0} \times 100$$

where $L_0$ is the load at 50% strain at 0 time and $L_{12}$ is the load at 50 percent strain after 12 hours.

Tensile notched tear experiments are carried out on samples having a density of 0.88 g/cc or less using an Instron™ instrument. The geometry consists of a gauge section of 76 mm x 13 mm x 0.4 mm with a 2 mm notch cut into the sample at half the specimen length. The sample is stretched at 508 mm $min^{-1}$ at 21°C until it breaks. The tear energy is calculated as the area under the stress-elongation curve up to strain at maximum load. An average of at least 3 specimens is reported.

TMA

Thermal Mechanical Analysis (Penetration Temperature) is conducted on 30mm diameter x 3.3 mm thick, compression molded discs, formed at 180°C and 10 MPa molding pressure for 5 minutes and then air quenched. The instrument used is a TMA 7, brand available from Perkin-Elmer. In the test, a probe with 1.5 mm radius tip (P/N N519-0416) is applied to the surface of the sample disc with IN force. The temperature is raised at 5°C/min from 25°C. The probe penetration distance is measured as a function of temperature. The experiment ends when the probe has penetrated 1 mm into the sample.

**DMA**

Dynamic Mechanical Analysis (DMA) is measured on compression molded disks formed in a hot press at 180°C at 10 MPa pressure for 5 minutes and then water cooled in the press at 90°C / min. Testing is conducted using an ARES controlled strain rheometer (TA instruments) equipped with dual cantilever fixtures for torsion testing.

A 1.5 mm plaque is pressed and cut in a bar of dimensions 32x12 mm. The sample is clamped at both ends between fixtures separated by 10 mm (grip separation $\Delta L$) and subjected to successive temperature steps from -100°C to 200°C (5°C per step). At each temperature the torsion modulus G' is measured at an angular frequency of 10 rad/s, the strain amplitude being maintained between 0.1 percent and 4 percent to ensure that the torque is sufficient and that the measurement remains in the linear regime.

An initial static force of 10 g is maintained (auto-tension mode) to prevent slack in the sample when thermal expansion occurs. As a consequence, the grip separation $\Delta$ L increases with the temperature, particularly above the melting or softening point of the polymer sample. The test stops at the maximum temperature or when the gap between the fixtures reaches 65 mm.

**Melt Index**

Melt index, or $I_2$, is measured in accordance with ASTM D 1238, Condition 190 °C/2.16 kg. Melt index, or $I_{10}$ is also measured in accordance with ASTM D 1238, Condition 190°C/10 kg.

**ATREF**

Analytical temperature rising elution fractionation (ATREF) analysis is conducted according to the method described in USP 4,798,081 and Wilde, L.; Ryle, T.R.; Knobeloch, D.C.; Peat, I.R.; Determination of Branching Distributions in Polyethylene and Ethylene Copolymers, J. Polym. Sci., 20, 441-455 (1982). The composition to be analyzed is dissolved in trichlorobenzene and allowed to crystallize in a column containing an inert support (stainless steel shot) by slowly reducing the temperature to 20 °C at a cooling rate of 0.1°C/min. The column is equipped with an infrared detector. An ATREF chromatogram curve is then generated by eluting the crystallized polymer sample from the column by slowly increasing the temperature of the eluting solvent (trichlorobenzene) from 20 to 120 °C at a rate of 1.5°C/min.

**$^{13}C$ NMR Analysis**

The samples are prepared by adding approximately 3g of a 50/50 mixture of tetrachloroethane-$d^2$/orthodichlorobenzene to 0.4 g sample in a 10 mm NMR tube. The samples are dissolved and homogenized by heating the tube and its contents to 150°C. The data are collected using a JEOL Eclipse™ 400MHz spectrometer or a Varian Unity Plus™ 400MHz spectrometer, corresponding to a $^{13}C$ resonance frequency of 100.5 MHz. The data are acquired using 4000 transients per data file with a 6 second pulse repetition delay. To achieve minimum signal-to-noise for quantitative analysis, multiple data files are added together. The spectral width is 25,000 Hz with a minimum file size of 32K data points. The samples are analyzed at 130 °C in a 10 mm broad band probe. The comonomer incorporation is determined using Randall's triad method (Randall, J.C.; JMS-Rev. Macromol. Chem. Phys., C29, 201-317 (1989).

**Polymer Fractionation by TREF**

Large-scale TREF fractionation is carried by dissolving 15-20 g of polymer in 2 liters of 1,2,4-trichlorobenzene (TCB)by stirring for 4 hours at 160°C. The polymer solution is forced by 15 psig (100 kPa) nitrogen onto a 3 inch by 4 foot (7.6 cm x 12 cm) steel column packed with a 60:40 (v:v) mix of 30-40 mesh (600-425 μm) spherical, technical quality glass beads (available from Potters Industries, HC 30 Box 20, Brownwood, TX, 76801) and stainless steel, 0.028" (0.7mm) diameter cut wire shot (available from Pellets, Inc. 63 Industrial Drive, North Tonawanda, NY, 14120). The column is immersed in a thermally controlled oil jacket, set initially to 160 °C. The column is first cooled ballistically to 125 °C, then slow cooled to 20 °C at 0.04 °C per minute and held for one hour. Fresh TCB is introduced at about 65 ml/min while the temperature is increased at 0.167 °C per minute.

Approximately 2000 ml portions of eluant from the preparative TREF column are collected in a 16 station, heated fraction collector. The polymer is concentrated in each fraction using a rotary evaporator until about 50 to 100 ml of the polymer solution remains. The concentrated solutions are allowed to stand overnight before adding excess methanol, filtering, and rinsing (approx. 300-500 ml of methanol including the final rinse). The filtration step is performed on a 3 position vacuum assisted filtering station using 5.0 μm polytetrafluoroethylene coated filter paper (available from Osmonics Inc., Cat# Z50WP04750). The filtrated fractions are dried overnight in a vacuum oven at 60 °C and weighed on an analytical balance before further testing.

**Melt Strength**

Melt Strength (MS) is measured by using a capillary rheometer fitted with a 2.1 mm diameter, 20:1 die with an entrance angle of approximately 45 degrees. After equilibrating the samples at 190°C for 10 minutes, the piston is run at a speed of 1 inch/minute (2.54 cm/minute). The standard test temperature is 190°C. The sample is drawn uniaxially to a set of accelerating nips located 100 mm below the die with an acceleration of 2.4 mm/sec$^2$. The required tensile force is recorded as a function of the take-up speed of the nip rolls. The maximum tensile force attained during the test is defined as the melt strength. In the case of polymer melt exhibiting draw resonance, the tensile force before the onset of draw resonance was taken as melt strength. The melt strength is recorded in centiNewtons ("cN").

**Catalysts**

The term "overnight", if used, refers to a time of approximately 16-18 hours, the term "room temperature", refers to a temperature of 20-25 °C, and the term "mixed alkanes" refers to a commercially obtained mixture of $C_{6-9}$ aliphatic hydrocarbons available under the trade designation ISOPAR E®, from ExxonMobil Chemical Company. In the event the name of a compound herein does not conform to the structural representation thereof, the structural representation shall control. The synthesis of all metal complexes and the preparation of all screening experiments were carried out in a dry nitrogen atmosphere using dry box techniques. All solvents used were HPLC grade and were dried before their use.

**MMAO** refers to modified methylalumoxane, a triisobutylaluminum modified methylalumoxane available commercially from Akzo-Nobel Corporation.

The preparation of catalyst (B1) is conducted as follows.

a) Preparation of (1-methylethyl)(2-hydroxy-3,5-di(t-butyl)phenyl)methylimine

3,5-Di-t-butylsalicylaldehyde (3.00 g) is added to 10 mL of isopropylamine. The solution rapidly turns bright yellow. After stirring at ambient temperature for 3 hours, volatiles are removed under vacuum to yield a bright yellow, crystalline solid (97 percent yield).

b) Preparation of 1,2-bis-(3,5-di-t-butylphenylene)(1-(N-(1-methylethyl)immino)methyl)(2-oxoyl) zirconium dibenzyl

A solution of (1-methylethyl)(2-hydroxy-3,5-di(t-butyl)phenyl)imine (605 mg, 2.2 mmol) in 5 mL toluene is slowly added to a solution of $Zr(CH_2Ph)_4$ (500 mg, 1.1 mmol) in 50 mL toluene. The resulting dark yellow solution is stirred for 30 min. Solvent is removed under reduced pressure to yield the desired product as a reddish-brown solid.

The preparation of catalyst (B2) is conducted as follows.

a) Preparation of (1-(2-methylcyclohexyl)ethyl)(2-oxoyl-3,5-di(t-butyl)phenyl)imine

2-Methylcyclohexylamine (8.44 mL, 64.0 mmol) is dissolved in methanol (90 mL), and di-t-butylsalicaldehyde (10.00 g, 42.67 mmol) is added. The reaction mixture is stirred for three hours and then cooled to -25°C for 12 hrs. The resulting yellow solid precipitate is collected by filtration and washed with cold methanol (2 x 15 mL), and then dried

under reduced pressure. The yield is 11.17 g of a yellow solid. $^1H$ NMR is consistent with the desired product as a mixture of isomers.

b) Preparation of bis-(1-(2-methylcyclohexyl)ethyl)(2-oxoyl-3,5-di(t-butyl)phenyl) immino)zirconium dibenzyl

A solution of (1-(2-methylcyclohexyl)ethyl)(2-oxoyl-3,5-di(t-butyl)phenyl)imine (7.63 g, 23.2 mmol) in 200 mL toluene is slowly added to a solution of $Zr(CH_2Ph)_4$ (5.28 g, 11.6 mmol) in 600 mL toluene. The resulting dark yellow solution is stirred for 1 hour at 25°C. The solution is diluted further with 680 mL toluene to give a solution having a concentration of 0.00783 M.

**Cocatalyst 1** A mixture of methyldi($C_{14-18}$ alkyl)ammonium salts of tetrakis(pentafluorophenyl)borate (here-inafter armeenium borate), prepared by reaction of a long chain trialkylamine (Armeen™ M2HT, available from Akzo-Nobel, Inc.), HCl and $Li[B(C_6F_5)_4]$, substantially as disclosed in USP 5,919,9883, Ex. 2.

**Cocatalyst 2** Mixed $C_{14-18}$ alkyldimethylammonium salt of bis(tris(pentafluorophenyl)-alumane)-2-undecylimidazolide, prepared according to USP 6,395,671, Ex. 16.

**Shuttling Agents** The shuttling agents employed include diethylzinc (DEZ, SA1), di(i-butyl)zinc (SA2), di(n-hexyl)zinc (SA3), triethylaluminum (TEA, SA4), trioctylaluminum (SA5), triethylgallium (SA6), i-butylaluminum bis(dimethyl(t-butyl)siloxane) (SA7), i-butylaluminum bis(di(trimethylsilyl)amide) (SA8), n-octylaluminum di(pyridine-2-methoxide) (SA9), bis(n-octadecyl)i-butylaluminum (SA10), i-butylaluminum bis(di(n-pentyl)amide) (SA11), n-octylaluminum bis(2,6-di-t-butylphenoxide) (SA12), n-octylaluminum di(ethyl(1-naphthyl)amide) (SA13), ethylaluminum bis(t-butyldimethylsiloxide) (SA14), ethylaluminum di(bis(trimethylsilyl)amide) (SA15), ethylaluminum bis(2,3,6,7-dibenzo-1-azacycloheptaneamide) (SA16), n-octylaluminum bis(2,3,6,7-dibenzo-1-azacycloheptaneamide) (SA17), n-octylaluminum bis(dimethyl(t-butyl)siloxide(SA18), ethylzinc (2,6-diphenylphenoxide) (SA19), and ethylzinc (t-butoxide) (SA20).

**Examples 1-4, Comparative A-C**

**General High Throughput Parallel Polymerization Conditions**

Polymerizations are conducted using a high throughput, parallel polymerization reactor (PPR) available from Symyx technologies, Inc. and operated substantially according to USP's 6,248,540, 6,030,917, 6,362,309, 6,306,658, and 6,316,663. Ethylene copolymerizations are conducted at 130 °C and 200 psi (1.4 MPa) with ethylene on demand using 1.2 equivalents of cocatalyst 1 based on total catalyst used (1.1 equivalents when MMAO is present). A series of polymerizations are conducted in a parallel pressure reactor (PPR) contained of 48 individual reactor cells in a 6 x 8 array that are fitted with a pre-weighed glass tube. The working volume in each reactor cell is 6000 μL. Each cell is temperature and pressure controlled with stirring provided by individual stirring paddles. The monomer gas and quench gas are plumbed directly into the PPR unit and controlled by automatic valves. Liquid reagents are robotically added to each reactor cell by syringes and the reservoir solvent is mixed alkanes. The order of addition is mixed alkanes solvent (4 ml), ethylene, 1-octene comonomer (1 ml), cocatalyst 1 or cocatalyst 1/MMAO mixture, shuttling agent, and catalyst or catalyst mixture. When a mixture of cocatalyst 1 and MMAO or a mixture of two catalysts is used, the reagents are premixed in a small vial immediately prior to addition to the reactor. When a reagent is omitted in an experiment, the above order of addition is otherwise maintained. Polymerizations are conducted for approximately 1-2 minutes, until predetermined ethylene consumptions are reached. After quenching with CO, the reactors are cooled and the glass tubes are unloaded. The tubes are transferred to a centrifuge/vacuum drying unit, and dried for 12 hours at 60 °C. The tubes containing dried polymer are weighed and the difference between this weight and the tare weight gives the net yield of polymer. Results are contained in Table 1. In Table 1 and elsewhere in the application, comparative compounds are indicated by an asterisk (*).

Examples 1-4 demonstrate the synthesis of linear block copolymers by the present invention as evidenced by the formation of a very narrow MWD, essentially monomodal copolymer when DEZ is present and a bimodal, broad molecular weight distribution product (a mixture of separately produced polymers) in the absence of DEZ. Due to the fact that Catalyst (A1) is known to incorporate more octene than Catalyst (B1), the different blocks or segments of the resulting copolymers disclosed herein are distinguishable based on branching or density.

**Table 1**

| Ex. | Cat. (A1) (μmol) | Cat (B1) (μmol) | Cocat (μmol) | MMAO (μmol) | shuttling agent (μmol) | Yield (g) | Mn | Mw/Mn | hexyls[1] |
|---|---|---|---|---|---|---|---|---|---|
| A* | 0.06 | - | 0.066 | 0.3 | - | 0.1363 | 300502 | 3.32 | - |
| B* | - | 0.1 | 0.110 | 0.5 | - | 0.1581 | 36957 | 1.22 | 2.5 |
| C* | 0.06 | 0.1 | 0.176 | 0.8 | - | 0.2038 | 45526 | 5.30[2] | 5.5 |

(continued)

| Ex. | Cat. (A1) (μmol) | Cat (B1) (μmol) | Cocat (μmol) | MMAO (μmol) | shuttling agent (μmol) | Yield (g) | Mn | Mw/Mn | hexyls[1] |
|---|---|---|---|---|---|---|---|---|---|
| 1 | 0.06 | 0.1 | 0.192 | - | DEZ (8.0) | 0.1974 | 28715 | 1.19 | 4.8 |
| 2 | 0.06 | 0.1 | 0.192 | - | DEZ (80.0) | 0.1468 | 2161 | 1.12 | 14.4 |
| 3 | 0.06 | 0.1 | 0.192 | - | TEA (8.0) | 0.208 | 22675 | 1.71 | 4.6 |
| 4 | 0.06 | 0.1 | 0.192 | - | TEA (80.0) | 0.1879 | 3338 | 1.54 | 9.4 |

[1] $C_6$ or higher chain content per 1000 carbons
[2] Bimodal molecular weight distribution

It may be seen the polymers produced according to the invention have a relatively narrow polydispersity (Mw/Mn) and larger block-copolymer content (trimer, tetramer, or larger) than polymers prepared in the absence of the shuttling agent.

Further characterizing data for the polymers of Table 1 are determined by reference to the figures. More specifically DSC and ATREF results show the following:

The DSC curve for the polymer of example 1 shows a 115.7°C melting point (Tm) with a heat of fusion of 158.1 J/g. The corresponding CRYSTAF curve shows the tallest peak at 34.5°C with a peak area of 52.9 percent. The difference between the DSC Tm and the Tcrystaf is 81.2°C.

The DSC curve for the polymer of example 2 shows a peak with a 109.7°C melting point (Tm) with a heat of fusion of 214.0 J/g. The corresponding CRYSTAF curve shows the tallest peak at 46.2°C with a peak area of 57.0 percent. The difference between the DSC Tm and the Tcrystaf is 63.5°C.

The DSC curve for the polymer of example 3 shows a peak with a 120.7°C melting point (Tm) with a heat of fusion of 160.1 J/g. The corresponding CRYSTAF curve shows the tallest peak at 66.1°C with a peak area of 71.8 percent. The difference between the DSC Tm and the Tcrystaf is 54.6°C.

The DSC curve for the polymer of example 4 shows a peak with a 104.5°C melting point (Tm) with a heat of fusion of 170.7 J/g. The corresponding CRYSTAF curve shows the tallest peak at 30 °C with a peak area of 18.2 percent. The difference between the DSC Tm and the Tcrystaf is 74.5°C.

The DSC curve for comparative A shows a 90.0°C melting point (Tm) with a heat of fusion of 86.7 J/g. The corresponding CRYSTAF curve shows the tallest peak at 48.5°C with a peak area of 29.4 percent. Both of these values are consistent with a resin that is low in density. The difference between the DSC Tm and the Tcrystaf is 41.8°C.

The DSC curve for comparative B shows a 129.8°C melting point (Tm) with a heat of fusion of 237.0 J/g. The corresponding CRYSTAF curve shows the tallest peak at 82.4°C with a peak area of 83.7 percent. Both of these values are consistent with a resin that is high in density. The difference between the DSC Tm and the Tcrystaf is 47.4°C.

The DSC curve for comparative C shows a 125.3°C melting point (Tm) with a heat of fusion of 143.0 J/g. The corresponding CRYSTAF curve shows the tallest peak at 81.8 °C with a peak area of 34.7 percent as well as a lower crystalline peak at 52.4 °C. The separation between the two peaks is consistent with the presence of a high crystalline and a low crystalline polymer. The difference between the DSC Tm and the Tcrystaf is 43.5°C.

**Examples 5-19, Comparatives D-F, Continuous Solution Polymerization, Catalyst A1/B2 + DEZ**

Continuous solution polymerizations are carried out in a computer controlled autoclave reactor equipped with an internal stirrer. Purified mixed alkanes solvent (ISOPAR™ E available from ExxonMobil Chemical Company), ethylene at 2.70 lbs/hour (1.22 kg/hour), 1-octene, and hydrogen (where used) are supplied to a 3.8 L reactor equipped with a jacket for temperature control and an internal thermocouple. The solvent feed to the reactor is measured by a mass-flow controller. A variable speed diaphragm pump controls the solvent flow rate and pressure to the reactor. At the discharge of the pump, a side stream is taken to provide flush flows for the catalyst and cocatalyst 1 injection lines and the reactor agitator. These flows are measured by Micro-Motion mass flow meters and controlled by control valves or by the manual adjustment of needle valves. The remaining solvent is combined with 1-octene, ethylene, and hydrogen (where used) and fed to the reactor. A mass flow controller is used to deliver hydrogen to the reactor as needed. The temperature of the solvent/monomer solution is controlled by use of a heat exchanger before entering the reactor. This stream enters the bottom of the reactor. The catalyst component solutions are metered using pumps and mass flow meters and are combined with the catalyst flush solvent and introduced into the bottom of the reactor. The reactor is run liquid-full at 500 psig (3.45 MPa) with vigorous stirring. Product is removed through exit lines at the top of the reactor. All exit lines from the reactor are steam traced and insulated. Polymerization is stopped by the addition of a small amount of water into the exit line along with any stabilizers or other additives and passing the mixture through a static mixer. The product stream is then heated by passing through a heat exchanger before devolatilization. The polymer product

is recovered by extrusion using a devolatilizing extruder and water cooled pelletizer. Process details and results are contained in Table 2. Selected polymer properties are provided in Table 3.

**Table 2 Process details for preparation of exemplary polymers**

| Ex. | $C_8H_{16}$ kg/hr | Solv. kg/hr | $H_2$ sccm[1] | T °C | Cat A1[2] ppm | Cat Al Flow kg/hr | Cat B2[3] ppm | B2 Flow kg/hr | DEZ Conc % | DEZ Flow kg/hr | Cocat Conc. ppm | Cocat Flow kg/hr | $[C_2H_4]/[DEZ]$[4] | Poly Rate[5] kg/hr | Conv %[6] | Solids % | Eff.[7] |
|---|---|---|---|---|---|---|---|---|---|---|---|---|---|---|---|---|---|
| D* | 1.63 | 12.7 | 29.90 | 120 | 142.2 | 0.14 | - | -- | 0.19 | 0.32 | 820 | 0.17 | 536 | 1.81 | 88.8 | 11.2 | 95.2 |
| E* | " | 9.5 | 5.00 | " | -- | -- | 109 | 0.10 | 0.19 | " | 1743 | 0.40 | 485 | 1.47 | 89.9 | 11.3 | 126.8 |
| F* | " | 11.3 | 251.6 | " | 71.7 | 0.06 | 30.8 | 0.06 | -- | -- | " | 0.11 | - | 1.55 | 88.5 | 10.3 | 257.7 |
| 5 | " | " | - | " | " | 0.14 | 30.8 | 0.13 | 0.17 | 0.43 | " | 0.26 | 419 | 1.64 | 89.6 | 11.1 | 118.3 |
| 6 | " | " | 4.92 | " | " | 0.10 | 30.4 | 0.08 | 0.17 | 0.32 | " | 0.18 | 570 | 1.65 | 89.3 | 11.1 | 172.7 |
| 7 | " | " | 21.70 | " | " | 0.07 | 30.8 | 0.06 | 0.17 | 0.25 | " | 0.13 | 718 | 1.60 | 89.2 | 10.6 | 244.1 |
| 8 | " | " | 36.90 | " | " | 0.06 | " | " | " | 0.10 | " | 0.12 | 1778 | 1.62 | 90.0 | 10.8 | 261.1 |
| 9 | " | " | 78.43 | " | " | " | " | " | " | 0.04 | " | " | 4596 | 1.63 | 90.2 | 10.8 | 267.9 |
| 10 | " | " | 0.00 | 123 | 71.1 | 0.12 | 30.3 | 0.14 | 0.34 | 0.19 | 1743 | 0.08 | 415 | 1.67 | 90.31 | 11.1 | 131.1 |
| 11 | " | " | " | 120 | 71.1 | 0.16 | " | 0.17 | 0.80 | 0.15 | 1743 | 0.10 | 249 | 1.68 | 89.56 | 11.1 | 100.6 |
| 12 | " | " | " | 121 | 71.1 | 0.15 | " | 0.07 | " | 0.09 | 1743 | 0.07 | 396 | 1.70 | 90.02 | 11.3 | 137.0 |
| 13 | " | " | " | 122 | 71.1 | 0.12 | " | 0.06 | " | 0.05 | 1743 | 0.05 | 653 | 1.69 | 89.64 | 11.2 | 161.9 |
| 14 | " | " | " | 120 | 71.1 | 0.05 | " | 0.29 | " | 0.10 | 1743 | 0.10 | 395 | 1.41 | 89.42 | 9.3 | 114.1 |
| 15 | 2.45 | " | " | " | 71.1 | 0.14 | " | 0.17 | " | 0.14 | 1743 | 0.09 | 282 | 1.80 | 89.33 | 11.3 | 121.3 |
| 16 | " | " | " | 122 | 71.1 | 0.10 | " | 0.13 | " | 0.07 | 1743 | 0.07 | 485 | 1.78 | 90.11 | 11.2 | 159.7 |
| 17 | " | " | " | 121 | 71.1 | 0.10 | " | 0.14 | " | 0.08 | 1743 | " | 506 | 1.75 | 89.08 | 11.0 | 155.6 |
| 18 | 0.69 | " | " | 121 | 71.1 | " | " | 0.22 | " | 0.11 | 1743 | 0.10 | 331 | 1.25 | 89.93 | 8.8 | 90.2 |
| 19 | 0.32 | " | " | 122 | 71.1 | 0.06 | " | " | " | 0.09 | 1743 | 0.08 | 367 | 1.16 | 90.74 | 8.4 | 106.0 |

* Comparative, not an example of the invention

1 standard $cm^3$/min

2 [N-(2,6-di(1-methylethyl)phenyl)amido)(2-isopropylphenyl)($\alpha$-naphthalen-2-diyl(6-pyridin-2-diyl)methane)]hafnium dimethyl

3 bis-(1 -(2-methylcyclohexyl)ethyl)(2-oxoyl-3,5 -di(t-butyl)phenyl)immino) zirconium dibenzyl

4 molar ratio in reactor

5 polymer production rate

6 percent ethylene conversion in reactor

7 efficiency, kg polymer/g M where g M = g Hf + g Zr

**Table 3 Properties of exemplary polymers**

| Ex. | Density ($g/cm^3$) | $I_2$ | $I_{10}$ | $I_{10}/I_2$ | Mw (g/mol) | Mn (g/mol) | Mw/Mn | Heat of Fusion (J/g) | $T_m$ (°C) | $T_c$ (°C) | $T_{CRYSTAF}$ (°C) | Tm-$T_{CRYSTAF}$ (°C) | CRYSTAF Peak Area (percent) |
|---|---|---|---|---|---|---|---|---|---|---|---|---|---|
| D* | 0.8627 | 1.5 | 10.0 | 6.5 | 110,000 | 55,800 | 2.0 | 32 | 37 | 45 | 30 | 7 | 99 |
| E* | 0.9378 | 7.0 | 39.0 | 5.6 | 65,000 | 33,300 | 2.0 | 183 | 124 | 113 | 79 | 45 | 95 |
| F* | 0.8895 | 0.9 | 12.5 | 13.4 | 137,300 | 9,980 | 13.8 | 90 | 125 | 111 | 78 | 47 | 20 |
| 5 | 0.8786 | 1.5 | 9.8 | 6.7 | 104,600 | 53,200 | 2.0 | 55 | 120 | 101 | 48 | 72 | 60 |
| 6 | 0.8785 | 1.1 | 7.5 | 6.5 | 109600 | 53300 | 2.1 | 55 | 115 | 94 | 44 | 71 | 63 |
| 7 | 0.8825 | 1.0 | 7.2 | 7.1 | 118,500 | 53,100 | 2.2 | 69 | 121 | 103 | 49 | 72 | 29 |
| 8 | 0.8828 | 0.9 | 6.8 | 7.7 | 129,000 | 40,100 | 3.2 | 68 | 124 | 106 | 80 | 43 | 13 |
| 9 | 0.8836 | 1.1 | 9.7 | 9.1 | 129600 | 28700 | 4.5 | 74 | 125 | 109 | 81 | 44 | 16 |
| 10 | 0.8784 | 1.2 | 7.5 | 6.5 | 113,100 | 58,200 | 1.9 | 54 | 116 | 92 | 41 | 75 | 52 |
| 11 | 0.8818 | 9.1 | 59.2 | 6.5 | 66,200 | 36,500 | 1.8 | 63 | 114 | 93 | 40 | 74 | 25 |
| 12 | 0.8700 | 2.1 | 13.2 | 6.4 | 101,500 | 55,100 | 1.8 | 40 | 113 | 80 | 30 | 83 | 91 |
| 13 | 0.8718 | 0.7 | 4.4 | 6.5 | 132,100 | 63,600 | 2.1 | 42 | 114 | 80 | 30 | 81 | 8 |
| 14 | 0.9116 | 2.6 | 15.6 | 6.0 | 81,900 | 43,600 | 1.9 | 123 | 121 | 106 | 73 | 48 | 92 |
| 15 | 0.8719 | 6.0 | 41.6 | 6.9 | 79,900 | 40,100 | 2.0 | 33 | 114 | 91 | 32 | 82 | 10 |
| 16 | 0.8758 | 0.5 | 3.4 | 7.1 | 148,500 | 74,900 | 2.0 | 43 | 117 | 96 | 48 | 69 | 65 |
| 17 | 0.8757 | 1.7 | 11.3 | 6.8 | 107,500 | 54,000 | 2.0 | 43 | 116 | 96 | 43 | 73 | 57 |
| 18 | 0.9192 | 4.1 | 24.9 | 6.1 | 72,000 | 37,900 | 1.9 | 136 | 120 | 106 | 70 | 50 | 94 |
| 19 | 0.9344 | 3.4 | 20.3 | 6.0 | 76,800 | 39,400 | 1.9 | 169 | 125 | 112 | 80 | 45 | 88 |

The resulting polymers are tested by DSC and ATREF as with previous examples. Results are as follows:

The DSC curve for the polymer of example 5 shows a peak with a 119.6 °C melting point (Tm) with a heat of fusion of 60.0 J/g. The corresponding CRYSTAF curve shows the tallest peak at 47.6°C with a peak area of 59.5 percent. The delta between the DSC Tm and the Tcrystaf is 72.0°C.

The DSC curve for the polymer of example 6 shows a peak with a 115.2 °C melting point (Tm) with a heat of fusion of 60.4 J/g. The corresponding CRYSTAF curve shows the tallest peak at 44.2°C with a peak area of 62.7 percent. The delta between the DSC Tm and the Tcrystaf is 71.0°C.

The DSC curve for the polymer of example 7 shows a peak with a 121.3 °C melting point with a heat of fusion of 69.1 J/g. The corresponding CRYSTAF curve shows the tallest peak at 49.2°C with a peak area of 29.4 percent. The delta between the DSC Tm and the Tcrystaf is 72.1°C.

The DSC curve for the polymer of example 8 shows a peak with a 123.5 °C melting point (Tm) with a heat of fusion of 67.9 J/g. The corresponding CRYSTAF curve shows the tallest peak at 80.1°C with a peak area of 12.7 percent. The delta between the DSC Tm and the Tcrystaf is 43.4°C.

The DSC curve for the polymer of example 9 shows a peak with a 124.6 °C melting point (Tm) with a heat of fusion of 73.5 J/g. The corresponding CRYSTAF curve shows the tallest peak at 80.8°C with a peak area of 16.0 percent. The delta between the DSC Tm and the Tcrystaf is 43.8°C.

The DSC curve for the polymer of example 10 shows a peak with a 115.6 °C melting point (Tm) with a heat of fusion of 60.7 J/g. The corresponding CRYSTAF curve shows the tallest peak at 40.9°C with a peak area of 52.4 percent. The delta between the DSC Tm and the Tcrystaf is 74.7°C.

The DSC curve for the polymer of example 11 shows a peak with a 113.6 °C melting point (Tm) with a heat of fusion of 70.4 J/g. The corresponding CRYSTAF curve shows the tallest peak at 39.6°C with a peak area of 25.2 percent. The delta between the DSC Tm and the Tcrystaf is 74.1°C.

The DSC curve for the polymer of example 12 shows a peak with a 113.2 °C melting point (Tm) with a heat of fusion of 48.9 J/g. The corresponding CRYSTAF curve shows no peak equal to or above 30 °C. (Tcrystaf for purposes of further calculation is therefore set at 30 °C). The delta between the DSC Tm and the Tcrystaf is 83.2°C.

The DSC curve for the polymer of example 13 shows a peak with a 114.4 °C melting point (Tm) with a heat of fusion of 49.4 J/g. The corresponding CRYSTAF curve shows the tallest peak at 33.8 °C with a peak area of 7.7 percent. The delta between the DSC Tm and the Tcrystaf is 84.4°C.

The DSC for the polymer of example 14 shows a peak with a 120.8 °C melting point (Tm) with a heat of fusion of 127.9 J/g. The corresponding CRYSTAF curve shows the tallest peak at 72.9 °C with a peak area of 92.2 percent. The delta between the DSC Tm and the Tcrystaf is 47.9°C.

The DSC curve for the polymer of example 15 shows a peak with a 114.3 °C melting point (Tm) with a heat of fusion of 36.2 J/g. The corresponding CRYSTAF curve shows the tallest peak at 32.3 °C with a peak area of 9.8 percent. The delta between the DSC Tm and the Tcrystaf is 82.0°C.

The DSC curve for the polymer of example 16 shows a peak with a 116.6 °C melting point (Tm) with a heat of fusion of 44.9 J/g. The corresponding CRYSTAF curve shows the tallest peak at 48.0 °C with a peak area of 65.0 percent. The delta between the DSC Tm and the Tcrystaf is 68.6°C.

The DSC curve for the polymer of example 17 shows a peak with a 116.0 °C melting point (Tm) with a heat of fusion of 47.0 J/g. The corresponding CRYSTAF curve shows the tallest peak at 43.1 °C with a peak area of 56.8 percent. The delta between the DSC Tm and the Tcrystaf is 72.9°C.

The DSC curve for the polymer of example 18 shows a peak with a 120.5 °C melting point (Tm) with a heat of fusion of 141.8 J/g. The corresponding CRYSTAF curve shows the tallest peak at 70.0 °C with a peak area of 94.0 percent. The delta between the DSC Tm and the Tcrystaf is 50.5 °C.

The DSC curve for the polymer of example 19 shows a peak with a 124.8 °C melting point (Tm) with a heat of fusion of 174.8 J/g. The corresponding CRYSTAF curve shows the tallest peak at 79.9 °C with a peak area of 87.9 percent. The delta between the DSC Tm and the Tcrystaf is 45.0 °C.

The DSC curve for the polymer of comparative D shows a peak with a 37.3°C melting point (Tm) with a heat of fusion of 31.6 J/g. The corresponding CRYSTAF curve shows no peak equal to and above 30°C. Both of these values are consistent with a resin that is low in density. The delta between the DSC Tm and the Tcrystaf is 7.3°C.

The DSC curve for the polymer of comparative E shows a peak with a 124.0 °C melting point (Tm) with a heat of fusion of 179.3 J/g. The corresponding CRYSTAF curve shows the tallest peak at 79.3°C with a peak area of 94.6 percent. Both of these values are consistent with a resin that is high in density. The delta between the DSC Tm and the Tcrystaf is 44.6°C.

The DSC curve for the polymer of comparative F shows a peak with a 124.8 °C melting point (Tm) with a heat of fusion of 90.4 J/g. The corresponding CRYSTAF curve shows the tallest peak at 77.6°C with a peak area of 19.5 percent. The separation between the two peaks is consistent with the presence of both a high crystalline and a low crystalline polymer. The delta between the DSC Tm and the Tcrystaf is 47.2°C.

**Physical Property Testing**

Polymer samples are evaluated for physical properties such as high temperature resistance properties, as evidenced by TMA temperature testing, pellet blocking strength, high temperature recovery, high temperature compression set and storage modulus ratio, G'(25°C)/G'(100 °C). Several commercially available polymers are included in the tests: Comparative G* is a substantially linear ethylene/1-octene copolymer (AFFINITY®, available from The Dow Chemical Company), Comparative H* is an elastomeric, substantially linear ethylene/ 1-octene copolymer (AFFINITY®EG8100, available from The Dow Chemical Company), Comparative I is a substantially linear ethylene/1-octene copolymer (AFFINITY®PL1840, available from The Dow Chemical Company), Comparative J is a hydrogenated styrene/butadiene/styrene triblock copolymer (KRATON™ G1652, available from KRATON Polymers), Comparative K is a thermoplastic vulcanizate (TPV, a polyolefin blend containing dispersed therein a crosslinked elastomer). Results are presented in Table 4.

Table 4. High Temperature Mechanical Properties

| Ex. | TMA-1mm penetration (°C) | Pellet Blocking Strength lb/ft$^2$ (kPa) | G'(25°C)/ G'(100 °C) | 300 % Strain Recovery (80 °C) (percent) | Compression Set (70 °C) (percent) |
|---|---|---|---|---|---|
| D* | 51 | - | 9 | Failed | - |
| E* | 130 | - | 18 | - | - |
| F* | 70 | 141 (6.8) | 9 | Failed | 100 |
| 5 | 104 | 0 (0) | 6 | 81 | 49 |
| 6 | 110 | - | 5 | - | 52 |
| 7 | 113 | - | 4 | 84 | 43 |
| 8 | 111 | - | 4 | Failed | 41 |
| 9 | 97 | - | 4 | - | 66 |
| 10 | 108 | - | 5 | 81 | 55 |
| 11 | 100 | - | 8 | - | 68 |
| 12 | 88 | - | 8 | - | 79 |
| 13 | 95 | - | 6 | 84 | 71 |
| 14 | 125 | - | 7 | - | - |
| 15 | 96 | - | 5 | - | 58 |
| 16 | 113 | - | 4 | - | 42 |
| 17 | 108 | 0 (0) | 4 | 82 | 47 |
| 18 | 125 | - | 10 | - | - |
| 19 | 133 | - | 9 | - | - |
| G* | 75 | 463 (22.2) | 89 | Failed | 100 |
| H* | 70 | 213 (10.2) | 29 | Failed | 100 |
| I* | 111 | - | 11 | - | - |
| J* | 107 | - | 5 | Failed | 100 |
| K* | 152 | - | 3 | - | 40 |

In Table 4, Comparative F (which is a physical blend of the two polymers resulting from simultaneous polymerizations using catalyst A1 and B1) has a 1 mm penetration temperature of about 70 °C, while Examples 5-9 have a 1 mm penetration temperature of 100 °C or greater. Further, examples 10-19 all have a 1 mm penetration temperature of greater than 85°C, with most having 1 mm TMA temperature of greater than 90 °C or even greater than 100 °C. This shows that the novel polymers have better dimensional stability at higher temperatures compared to a physical blend. Comparative J (a commercial SEBS) has a good 1 mm TMA temperature of about 107°C, but it has very poor (high temperature 70 °C) compression set of about 100 percent and it also failed to recover (sample broke) during a high

temperature (80 °C) 300 percent strain recovery. Thus the exemplified polymers have a unique combination of properties unavailable even in some commercially available, high performance thermoplastic elastomers.

Similarly, Table 4 shows a low (good) storage modulus ratio, G'(25°C)/G'(100 °C), for the inventive polymers of 6 or less, whereas a physical blend (Comparative F) has a storage modulus ratio of 9 and a random ethylene/octene copolymer (Comparative G) of similar density has a storage modulus ratio an order of magnitude greater (89). It is desirable that the storage modulus ratio of a polymer be as close to 1 as possible. Such polymers will be relatively unaffected by temperature, and fabricated articles made from such polymers can be usefully employed over a broad temperature range. This feature of low storage modulus ratio and temperature independence is particularly useful in elastomer applications such as in pressure sensitive adhesive formulations.

The data in Table 4 also demonstrate that the polymers disclosed herein possess improved pellet blocking strength. In particular, Example 5 has a pellet blocking strength of 0 MPa, meaning it is free flowing under the conditions tested, compared to Comparatives F and G which show considerable blocking. Blocking strength is important since bulk shipment of polymers having large blocking strengths can result in product clumping or sticking together upon storage or shipping, resulting in poor handling properties.

High temperature (70 °C) compression set for the inventive polymers is generally good, meaning generally less than about 80 percent, preferably less than about 70 percent and especially less than about 60 percent. In contrast, Comparatives F, G, H and J all have a 70 °C compression set of 100 percent (the maximum possible value, indicating no recovery). Good high temperature compression set (low numerical values) is especially needed for applications such as gaskets, window profiles, o-rings, and the like.

Table 5. Ambient Temperature Mechanical Properties

| Ex. | Flex Modulus (MPa) | Tensile Modulus (MPa) | Tensile Strength (MPa)[1] | Elongation at Break[1] (%) | Tensile Strength (MPa) | Elongation at Break (%) | Abrasion: Volume Loss ($mm^3$) | Tensile Notched Tear Strength (mJ) | 100 % Strain Recovery 21°C (percent) | 300 % Strain Recovery 21°C (percent) | Retractive Stress at 150 % Strain (kPa) | Compression Set 21°C (Percent) | Stress Relaxation at 50 % Strain[2] |
|---|---|---|---|---|---|---|---|---|---|---|---|---|---|
| D* | 12 | 5 | - | - | 10 | 1074 | - | - | 91 | 83 | 760 | - | - |
| E* | 895 | 589 | | - | 31 | 1029 | - | - | - | - | - | - | - |
| F* | 57 | 46 | - | - | 12 | 824 | 93 | 339 | 78 | 65 | 400 | 42 | - |
| 5 | 30 | 24 | 14 | 951 | 16 | 1116 | 48 | - | 87 | 74 | 790 | 14 | 33 |
| 6 | 33 | 29 | - | - | 14 | 938 | - | - | - | 75 | 861 | 13 | - |
| 7 | 44 | 37 | 15 | 846 | 14 | 854 | 39 | - | 82 | 73 | 810 | 20 | - |
| 8 | 41 | 35 | 13 | 785 | 14 | 810 | 45 | 461 | 82 | 74 | 760 | 22 | - |
| 9 | 43 | 38 | - | - | 12 | 823 | - | - | - | - | - | 25 | - |
| 10 | 23 | 23 | - | - | 14 | 902 | - | - | 86 | 75 | 860 | 12 | - |
| 11 | 30 | 26 | - | - | 16 | 1090 | - | 976 | 89 | 66 | 510 | 14 | 30 |
| 12 | 20 | 17 | 12 | 961 | 13 | 931 | - | 1247 | 91 | 75 | 700 | 17 | - |
| 13 | 16 | 14 | - | - | 13 | 814 | - | 691 | 91 | - | - | 21 | - |
| 14 | 212 | 160 | - | - | 29 | 857 | - | - | - | - | - | - | - |
| 15 | 18 | 14 | 12 | 1127 | 10 | 1573 | - | 2074 | 89 | 83 | 770 | 14 | - |
| 16 | 23 | 20 | - | - | 12 | 968 | - | - | 88 | 83 | 1040 | 13 | - |
| 17 | 20 | 18 | - | - | 13 | 1252 | - | 1274 | 13 | 83 | 920 | 4 | - |
| 18 | 323 | 239 | - | - | 30 | 808 | - | - | - | - | - | - | - |
| 19 | 706 | 483 | - | - | 36 | 871 | - | - | - | - | - | - | - |
| G* | 15 | 15 | - | - | 17 | 1000 | - | 746 | 86 | 53 | 110 | 27 | 50 |
| H* | 16 | 15 | - | - | 15 | 829 | - | 569 | 87 | 60 | 380 | 23 | - |
| I* | 210 | 147 | - | - | 29 | 697 | - | - | - | - | - | - | - |
| J* | - | - | - | - | 32 | 609 | - | - | 93 | 96 | 1900 | 25 | - |

(continued)

| Ex. | Flex Modulus (MPa) | Tensile Modulus (MPa) | Tensile Strength (MPa)[1] | Elongation at Break[1] (%) | Tensile Strength (MPa) | Elongation at Break (%) | Abrasion: Volume Loss ($mm^3$) | Tensile Notched Tear Strength (mJ) | 100 % Strain Recovery 21°C (percent) | 300 % Strain Recovery 21°C (percent) | Retractive Stress at 150 % Strain (kPa) | Compression Set 21°C (Percent) | Stress Relaxation at 50 % Strain[2] |
|---|---|---|---|---|---|---|---|---|---|---|---|---|---|
| K* | - | - | - | - | - | - | - | - | - | - | - | 30 | - |

1. Tested at 51 cm/minute
2. measured at 38°C for 12 hours

Table 5 shows results for mechanical properties for the new polymers as well as for various comparison polymers at ambient temperatures. It may be seen that the inventive polymers have very good abrasion resistance when tested according to ISO 4649, generally showing a volume loss of less than 90 $mm^3$, preferably less than about 80 $mm^3$, and especially less than 50 $mm^3$. In this test, higher numbers indicate higher volume loss and consequently lower abrasion resistance.

Tear strength as measured by tensile notched tear strength of the inventive polymers is generally 1000 mJ or higher, as shown in Table 5. Tear strength for the inventive polymers can be as high as 3000 mJ, or even as high as 5000 mJ. Comparative polymers generally have tear strengths no higher than 750 mJ.

Table 5 also shows that the polymers disclosed herein have better retractive stress at 150 percent strain (demonstrated by higher retractive stress values) than some of the comparative samples. Comparative Examples F, G and H have retractive stress value at 150 percent strain of 400 kPa or less, while the inventive polymers have retractive stress values at 150 percent strain of 500 kPa (Ex. 11) to as high as about 1100 kPa (Ex. 17). Polymers having higher than 150 percent retractive stress values would be quite useful for elastic applications, such as elastic fibers and fabrics, especially nonwoven fabrics. Other applications include diaper, hygiene, and medical garment waistband applications, such as tabs and elastic bands.

Table 5 also shows that stress relaxation (at 50 percent strain) is also improved (less) for the inventive polymers as compared to, for example, Comparative G. Lower stress relaxation means that the polymer retains its force better in applications such as diapers and other garments where retention of elastic properties over long time periods at body temperatures is desired.

Optical Testing

Table 6. Polymer Optical Properties

| Ex. | Internal Haze (percent) | Clarity (percent) | 45° Gloss (percent) |
|---|---|---|---|
| F* | 84 | 22 | 49 |
| G* | 5 | 73 | 56 |
| 5 | 13 | 72 | 60 |
| 6 | 33 | 69 | 53 |
| 7 | 28 | 57 | 59 |
| 8 | 20 | 65 | 62 |
| 9 | 61 | 38 | 49 |
| 10 | 15 | 73 | 67 |
| 11 | 13 | 69 | 67 |
| 12 | 8 | 75 | 72 |
| 13 | 7 | 74 | 69 |
| 14 | 59 | 15 | 62 |
| 15 | 11 | 74 | 66 |
| 16 | 39 | 70 | 65 |
| 17 | 29 | 73 | 66 |
| 18 | 61 | 22 | 60 |
| 19 | 74 | 11 | 52 |
| G* | 5 | 73 | 56 |
| H* | 12 | 76 | 59 |
| I* | 20 | 75 | 59 |

The optical properties reported in Table 6 are based on compression molded films substantially lacking in

orientation. Optical properties of the polymers may be varied over wide ranges, due to variation in crystallite size, resulting from variation in the quantity of chain shuttling agent employed in the polymerization.

**Extractions of Multi-Block Copolymers**

Extraction studies of the polymers of examples 5, 7 and Comparative E are conducted. In the experiments, the polymer sample is weighed into a glass fritted extraction thimble and fitted into a Kumagawa type extractor. The extractor with sample is purged with nitrogen, and a 500mL round bottom flask is charged with 350 mL of diethyl ether. The flask is then fitted to the extractor. The ether is heated while being stirred. Time is noted when the ether begins to condense into the thimble, and the extraction is allowed to proceed under nitrogen for 24 hours. At this time, heating is stopped and the solution is allowed to cool. Any ether remaining in the extractor is returned to the flask. The ether in the flask is evaporated under vacuum at ambient temperature, and the resulting solids are purged dry with nitrogen. Any residue is transferred to a weighed bottle using successive washes of hexane. The combined hexane washes are then evaporated with another nitrogen purge, and the residue dried under vacuum overnight at 40 °C. Any remaining ether in the extractor is purged dry with nitrogen.

A second clean round bottom flask charged with 350 mL of hexane is then connected to the extractor. The hexane is heated to reflux with stirring and maintained at reflux for 24 hours after hexane is first noticed condensing into the thimble. Heating is then stopped and the flask is allowed to cool. Any hexane remaining in the extractor is transferred back to the flask. The hexane is removed by evaporation under vacuum at ambient temperature, and any residue remaining in the flask is transferred to a weighed bottle using successive hexane washes. The hexane in the flask is evaporated by a nitrogen purge, and the residue is vacuum dried overnight at 40 °C.

The polymer sample remaining in the thimble after the extractions is transferred from the thimble to a weighed bottle and vacuum dried overnight at 40 °C. Results are contained in Table 7.

Table 7

| Sample | wt. (g) | ether soluble (g) | ether soluble (percent) | $C_8$ mole percent[1] | hexane soluble (g) | hexane soluble (percent) | $C_8$ mole percent[1] | residue $C_8$ mole percent[1] |
|---|---|---|---|---|---|---|---|---|
| Comp. F* | 1.097 | 0.063 | 5.69 | 12.2 | 0.245 | 22.35 | 13.6 | 6.5 |
| Ex. 5 | 1.006 | 0.041 | 4.08 | - | 0.040 | 3.98 | 14.2 | 11.6 |
| Ex. 7 | 1.092 | 0.017 | 1.59 | 13.3 | 0.012 | 1.10 | 11.7 | 9.9 |
| [1]. Determined by $^{13}C$ NMR | | | | | | | | |

**Additional Polymer Examples 19 A-J, Continuous Solution Polymerization, Catalyst A1/B2 + DEZ**

For Examples 19A-I

Continuous solution polymerizations are carried out in a computer controlled well-mixed reactor. Purified mixed alkanes solvent (ISOPAR™ E available from Exxon Mobil, Inc.), ethylene, 1-octene, and hydrogen (where used) are combined and fed to a 27 gallon reactor. The feeds to the reactor are measured by mass-flow controllers. The temperature of the feed stream is controlled by use of a glycol cooled heat exchanger before entering the reactor. The catalyst component solutions are metered using pumps and mass flow meters. The reactor is run liquid-full at approximately 550 psig pressure. Upon exiting the reactor, water and additive are injected in the polymer solution. The water hydrolyzes the catalysts, and terminates the polymerization reactions. The post reactor solution is then heated in preparation for a two-stage devolatization. The solvent and unreacted monomers are removed during the devolatization process. The polymer melt is pumped to a die for underwater pellet cutting.

For Example 19J

Continuous solution polymerizations are carried out in a computer controlled autoclave reactor equipped with an internal stirrer. Purified mixed alkanes solvent (ISOPAR™ E available from ExxonMobil Chemical Company), ethylene at 2.70 lbs/hour (1.22 kg/hour), 1-octene, and hydrogen (where used) are supplied to a 3.8 L reactor equipped with a jacket for temperature control and an internal thermocouple. The solvent feed to the reactor is measured by a mass-flow controller. A variable speed diaphragm pump controls the solvent flow rate and pressure to the reactor. At the

discharge of the pump, a side stream is taken to provide flush flows for the catalyst and cocatalyst injection lines and the reactor agitator. These flows are measured by Micro-Motion mass flow meters and controlled by control valves or by the manual adjustment of needle valves. The remaining solvent is combined with 1-octene, ethylene, and hydrogen (where used) and fed to the reactor. A mass flow controller is used to deliver hydrogen to the reactor as needed. The temperature of the solvent/monomer solution is controlled by use of a heat exchanger before entering the reactor. This stream enters the bottom of the reactor. The catalyst component solutions are metered using pumps and mass flow meters and are combined with the catalyst flush solvent and introduced into the bottom of the reactor. The reactor is run liquid-full at 500 psig (3.45 MPa) with vigorous stirring. Product is removed through exit lines at the top of the reactor. All exit lines from the reactor are steam traced and insulated. Polymerization is stopped by the addition of a small amount of water into the exit line along with any stabilizers or other additives and passing the mixture through a static mixer. The product stream is then heated by passing through a heat exchanger before devolatilization. The polymer product is recovered by extrusion using a devolatilizing extruder and water cooled pelletizer.

Process details and results are contained in Table 8. Selected polymer properties are provided in Tables 9A-C.

In Table 9B, inventive examples 19F and 19G show low immediate set of around 65 - 70 % strain after 500% elongation.

## Table 8. Polymerization Conditions

| Ex. | $C_2H_4$ lb/hr | $C_8H_{16}$ lb/hr | Solv. lb/hr | $H_2$ sccm[1] | T °C | Cat A1[2] Conc. ppm | Cat A1 Flow lb/hr | Cat B2[3] Conc. ppm | Cat B2 Flow lb/hr | DEZ Conc wt% | DEZ Flow lb/hr | Cocat 1 Conc. ppm | Cocat 1 Flow lb/hr | Cocat 2 Conc. ppm | Cocat 2 Flow lb/hr | Zn[4] in polymer ppm | Poly Rate[5] lb/hr | Conv[6] wt% | Polymer wt% | Eff.[7] |
|---|---|---|---|---|---|---|---|---|---|---|---|---|---|---|---|---|---|---|---|---|
| 19A | 55.29 | 32.03 | 323.03 | 101 | 120 | 600 | 0.25 | 200 | 0.42 | 3.0 | 0.70 | 4500 | 0.65 | 525 | 0.33 | 248 | 83.94 | 88.0 | 17.28 | 297 |
| 19B | 53.95 | 28.96 | 325.3 | 577 | 120 | 600 | 0.25 | 200 | 0.55 | 3.0 | 0.24 | 4500 | 0.63 | 525 | 0.11 | 90 | 80.72 | 88.1 | 17.2 | 295 |
| 19C | 55.53 | 30.97 | 324.37 | 550 | 120 | 600 | 0.216 | 200 | 0.609 | 3.0 | 0.69 | 4500 | 0.61 | 525 | 0.33 | 246 | 84.13 | 88.9 | 17.16 | 293 |
| 19D | 54.83 | 30.58 | 326.33 | 60 | 120 | 600 | 0.22 | 200 | 0.63 | 3.0 | 1.39 | 4500 | 0.66 | 525 | 0.66 | 491 | 82.56 | 88.1 | 17.07 | 280 |
| 19E | 54.95 | 31.73 | 326.75 | 251 | 120 | 600 | 0.21 | 200 | 0.61 | 3.0 | 1.04 | 4500 | 0.64 | 525 | 0.49 | 368 | 84.11 | 88.4 | 17.43 | 288 |
| 19F | 50.43 | 34.80 | 330.33 | 124 | 120 | 600 | 0.20 | 200 | 0.60 | 3.0 | 0.74 | 4500 | 0.52 | 525 | 0.35 | 257 | 85.31 | 87.5 | 17.09 | 319 |
| 19G | 50.25 | 33.08 | 325.61 | 188 | 120 | 600 | 0.19 | 200 | 0.59 | 3.0 | 0.54 | 4500 | 0.51 | 525 | 0.16 | 194 | 83.72 | 87.5 | 17.34 | 333 |
| 19H | 50.15 | 34.87 | 318.17 | 58 | 120 | 600 | 0.21 | 200 | 0.66 | 3.0 | 0.70 | 4500 | 0.52 | 525 | 0.70 | 259 | 83.21 | 88.0 | 17.46 | 312 |
| 19I | 55.02 | 34.02 | 323.59 | 53 | 120 | 600 | 0.44 | 200 | 0.74 | 3.0 | 1.72 | 4500 | 0.70 | 525 | 1.65 | 600 | 86.63 | 88.0 | 17.6 | 275 |
| 19J | 7.46 | 9.04 | 50.6 | 47 | 120 | 150 | 0.22 | 76.7 | 0.36 | 0.5 | 0.19 | - | - | - | - | - | - | - | - | - |

1 standard $cm^3$/min
2. [N-(2,6-di(1-methylethyl)phenyl)amido)(2-isopropylphenyl)(α-naphthalen-2-diyl(6-pyridin-2-diyl)methane)]hafnium dimethyl
3. bis-(1-(2-methylcyclohexyl)ethyl)(2-oxoyl-3,5-di(t-butyl)phenyl)immino) zirconium dimethyl
4. ppm in final product calculated by mass balance
5. polymer production rate
6. weight percent ethylene conversion in reactor
7 efficiency, kg polymer/g M where g M = g Hf + g Z

**Table 9A. Polymer Physical Properties**

| Ex. | Density (g/cc) | I2 | I10 | I10/I2 | Mw (g/mol) | Mn (g/mol) | Mw/Mn | Heat of Fusion (J/g) | Tm (°C) | Tc (°C) | TCRYSTAF (°C) | Tm-TCRYSTAF (°C) | CRYSTAF Peak Area (wt%) |
|---|---|---|---|---|---|---|---|---|---|---|---|---|---|
| 19A | 0.8781 | 0.9 | 6.4 | 6.9 | 123700 | 61000 | 2.0 | 56 | 119 | 97 | 46 | 73 | 40 |
| 19B | 0.8749 | 0.9 | 7.3 | 7.8 | 133000 | 44300 | 3.0 | 52 | 122 | 100 | 30 | 92 | 76 |
| 19C | 0.8753 | 5.6 | 38.5 | 6.9 | 81700 | 37300 | 2.2 | 46 | 122 | 100 | 30 | 92 | 8 |
| 19D | 0.8770 | 4.7 | 31.5 | 6.7 | 80700 | 39700 | 2.0 | 52 | 119 | 97 | 48 | 72 | 5 |
| 19E | 0.8750 | 4.9 | 33.5 | 6.8 | 81800 | 41700 | 2.0 | 49 | 121 | 97 | 36 | 84 | 12 |
| 19F | 0.8652 | 1.1 | 7.5 | 6.8 | 124900 | 60700 | 2.1 | 27 | 119 | 88 | 30 | 89 | 89 |
| 19G | 0.8649 | 0.9 | 6.4 | 7.1 | 135000 | 64800 | 2.1 | 26 | 120 | 92 | 30 | 90 | 90 |
| 19H | 0.8654 | 1.0 | 7.0 | 7.1 | 131600 | 66900 | 2.0 | 26 | 118 | 88 | - | - | - |
| 19I | 0.8774 | 11.2 | 75.2 | 6.7 | 66400 | 33700 | 2.0 | 49 | 119 | 99 | 40 | 79 | 13 |
| 19J | 0.8995 | 5.6 | 39.4 | 7.0 | 75500 | 29900 | 2.5 | 101 | 122 | 106 | - | - | - |

**Table 9B. Polymer Physical Properties of Compression Molded Film**

| Example | Density ($g/cm^3$) | Melt Index (g/10 min) | Immediate Set after 100% Strain (%) | Immediate Set after 300% Strain (%) | Immediate Set after 500% Strain (%) | Recovery after 100% (%) | Recovery after 300% (%) | Recovery after 500% (%) |
|---|---|---|---|---|---|---|---|---|
| 19A | 0.878 | 0.9 | 15 | 63 | 131 | 85 | 79 | 74 |
| 19B | 0.877 | 0.88 | 14 | 49 | 97 | 86 | 84 | 81 |
| 19F | 0.865 | 1 | - | - | 70 | - | 87 | 86 |
| 19G | 0.865 | 0.9 | - | - | 66 | - | - | 87 |
| 19H | 0.865 | 0.92 | - | 39 | - | - | 87 | - |

**Table 9C Average Block Index For exemplary polymers[1]**

| Example | $Zn/C_2$[2] | Average BI |
|---|---|---|
| Polymer F | 0 | 0 |
| Polymer 8 | 0.56 | 0.59 |
| Polymer 19a | 1.3 | 0.62 |
| Polymer 5 | 2.4 | 0.52 |
| Polymer 19b | 0.56 | 0.54 |
| Polymer 19h | 3.15 | 0.59 |

1. Additional information regarding the calculation of the block indices for various polymers is disclosed in U.S. Patent Application No. 2006/0199930-A1, entitled "Ethylene/α-Olefin Block Interpolymers", filed on March 15, 2006, in the name of Colin L.P. Shan, Lonnie Hazlitt, et. al. and assigned to Dow Global Technologies Inc., the disclose of which is incorporated by reference herein in its entirety.
2. $Zn/C_2$ *1000 = (Zn feed flow*Zn concentration/1000000/Mw of Zn)/(Total Ethylene feed flow*(1-fractional ethylene conversion rate)/Mw of Ethylene)*1000. Please note that "Zn" in "$Zn/C_2$* 1000" refers to the amount of zinc in diethyl zinc ("DEZ") used in the polymerization process, and "C2" refers to the amount of ethylene used in the polymerization process.

**Second Polymer**

The polymer composition disclosed herein can further comprise a second polymer which is different from the ethylene/a-olefin interpolymers disclosed herein. The second polymer can be a polyolefin (e.g., polyethylene, polypropylene, polybutylene and ethylene-propylene copolymer), poly(ethylene-co-vinyl acetate), polyvinyl chloride, a mixed polymer of ethylene and vinyl acetate, a styrene-butadiene mixed polymers and combinations thereof.

In some embodiments, the amount of the second polymer in the polymer composition is from 0.5 wt.% to 75 wt.%, from 10 wt.% to 75 wt.%, from 20 wt.% to 75 wt.%, or from 25 wt.% to 75 wt.%, based on the total weight of the polymer composition. In other embodiments, the amount of the second polymer in the polymer composition is from 50 wt.% to 75 wt.%, from 40 wt.% to 75 wt.%, from 30 wt.% to 75 wt.%, or from 50 wt.% to 75 wt.% , based on the total weight of the polymer composition. In further embodiments, the amount of the second polymer in the polymer composition is from 5 wt.% to 50 wt.%, from 5 wt.% to 40 wt.%, from 5 wt.% to 30 wt.%, from 10 wt.% to 50 wt.%, or from 20 wt.% to 50 wt.%, based on the total weight of the polymer composition.

Any polyolefin which is different from the ethylene/a-olefin interpolymers disclosed herein and which can be used to adjust the physical properties of the ethylene/α-olefin interpolymers may be used as the second polymer to be incorporated into the polymer composition disclosed herein. The polyolefins can be olefin homopolymers, olefin copolymers, olefin terpolymers, olefin quaterpolymers and the like, and combinations thereof.

In some embodiments, the second polymer is a polyolefin derived from one or more olefins (*i.e.*, alkenes). An olefin (*i.e.*, alkene) is a hydrocarbon contains at least one carbon-carbon double bond. The olefin can be a monoene (*i.e,* an olefin having a single carbon-carbon double bond), diene (*i.e,* an olefin having two carbon-carbon double bonds), triene (*i.e,* an olefin having three carbon-carbon double bonds), tetraene (*i.e,* an olefin having four carbon-carbon double bonds), and other polyenes. The olefin or alkene, such as monoene, diene, triene, tetraene and other polyenes, can

have 3 or more carbon atoms, 4 or more carbon atoms, 6 or more carbon atoms, 8 or more carbon atoms. In some embodiments, the olefin has from 3 to 100 carbon atoms, from 4 to 100 carbon atoms, from 6 to 100 carbon atoms, from 8 to 100 carbon atoms, from 3 to 50 carbon atoms, from 3 to 25 carbon atoms, from 4 to 25 carbon atoms, from 6 to 25 carbon atoms, from 8 to 25 carbon atoms, or from 3 to 10 carbon atoms. In some embodiments, the olefin is a linear or branched, cyclic or acyclic, monoene having from 2 to about 20 carbon atoms. In other embodiments, the alkene is a diene such as butadiene and 1,5-hexadiene. In further embodiments, at least one of the hydrogen atoms of the alkene is substituted with an alkyl or aryl. In particular embodiments, the alkene is ethylene, propylene, 1-butene, 1-hexene, 1-octene, 1-decene, 4-methyl-1-pentene, norbornene, 1-decene, butadiene, 1,5-hexadiene, styrene or a combination thereof.

In certain embodiments, the second polymer is an olefin homopolymer derived from one olefin. Any olefin homopolymer known to a person of ordinary skill in the art may be used. Non-limiting examples of olefin homopolymers include polyethylene, polypropylene, polybutylene, polypentene-1, polyhexene-1, polyoctene-1, polydecene-1, poly-3-methylbutene-1, poly-4-methylpentene-1, polyisoprene, polybutadiene, poly-1,5-hexadiene.

In other embodiments, the olefin homopolymer is a polyethylene. Any polyethylene known to a person of ordinary skill in the art may be used to prepare the polymer compositions disclosed herein. Non-limiting examples of polypropylene include ultralow density polyethylene (ULDPE), low density polyethylene (LDPE), linear high density low density polyethylene (LLDPE), medium density polyethylene (MDPE), high density polyethylene (HDPE), and ultrahigh density polyethylene (UHDPE), and the like, and combinations thereof.

In other embodiments, the olefin homopolymer is a polypropylene. Any polypropylene known to a person of ordinary skill in the art may be used to prepare the polymer compositions disclosed herein. Non-limiting examples of polypropylene include low density polypropylene (LDPP), high density polypropylene (HDPP), high melt strength polypropylene (HMS-PP), high impact polypropylene (HIPP), isotactic polypropylene (iPP), syndiotactic polypropylene (sPP) and the like, and combinations thereof.

In other embodiments, the second polymer is an olefin copolymer. The olefin copolymer can be derived from two different olefins. Any olefin copolymer known to a person of ordinary skill in the art may be used in the polymer compositions disclosed herein. Non-limiting examples of olefin copolymers include copolymers derived from ethylene and a monoene having 3 or more carbon atoms. Non-limiting examples of the monoene having 3 or more carbon atoms include propene; butenes (*e.g.*, 1-butene, 2-butene and isobutene) and alkyl substituted butenes; pentenes (*e.g.*, 1-pentene and 2-pentene) and alkyl substituted pentenes (*e.g.*, 4-methyl-1-pentene); hexenes (*e.g.*, 1-hexene, 2-hexene and 3-hexene) and alkyl substituted hexenes; heptenes (*e.g.*, 1-heptene, 2-heptene and 3-heptene) and alkyl substituted heptenes; octenes (*e.g.*, 1-octene, 2-octene, 3-octene and 4-octene) and alkyl substituted octenes; nonenes (*e.g.*, 1-nonene, 2-nonene, 3-nonene and 4-nonene) and alkyl substituted nonenes; decenes (*e.g.*, 1-decene, 2-decene, 3-decene, 4-decene and 5-decene) and alkyl substituted decenes; dodecenes and alkyl substituted dodecenes; and butadiene. In some embodiments, the olefin copolymer is an ethylene/alpha-olefin (EAO) copolymer or ethylene/propylene copolymer (EPM).

In other embodiments, the olefin copolymer is derived from (i) a $C_3$-$_{20}$ olefin substituted with an alkyl or aryl group (*e.g.*, 4-methyl-1-pentene and styrene) and (ii) a diene (*e.g.* butadiene, 1,5-hexadiene, 1,7-octadiene and 1,9-decadiene). A non-limiting example of such olefin copolymer includes styrene-butadiene mixed polymers and styrene-butadienestyrene (SBS) block copolymer.

In other embodiments, the second polymer is an olefin terpolymer. The olefin terpolymer can be derived from three different olefins. Any olefin terpolymer known to a person of ordinary skill in the art may be used in the polymer compositions disclosed herein. Non-limiting examples of olefin terpolymers include terpolymers derived from (i) ethylene, (ii) a monoene having 3 or more carbon atoms, and (iii) a diene. In some embodiments, the olefin terpolymer is an ethylene/alpha-olefin/diene terpolymers (EAODM) and ethylene/propylene/diene terpolymer (EPDM).

In other embodiments, the olefin terpolymer is derived from (i) two different monoenes, and (ii) a C3-20 olefin substituted with an alkyl or aryl group. A non-limiting example of such olefin terpolymer includes styrene-ethylene-co-(butene)-styrene (SEBS) block copolymer.

In other embodiments, the second polymer is a copolymer of an olefin and a vinyl polymer or a mixed polymer of an olefin and a vinyl polymer. The vinyl polymer is selected from the group consisting of polyvinyl acetate, polyvinyl chloride, polyacrylic, polyvinyl acrylate, polyvinyl maleate, and polyvinyl phthalate polymers. Non-limiting examples of such copolymer include poly(ethylene-co-vinyl acetate) (EVA). Non-limiting examples of such mixed polymer includes a mixed polymer of ethylene and vinyl acetate.

**Useful Additives**

Optionally, the oriented film or the polymer composition may independently comprise or be substantially free of at least one additive. Some non-limiting example of suitable additives include slip agents, anti-blocking agents, plasticizers, oils, waxes, antioxidants, UV stabilizers, colorants or pigments, fillers, flow aids, coupling agents, crosslinking

agents, surfactants, solvents, lubricants, antifogging agents, nucleating agents, flame retardants, antistatic agents and combinations thereof. The total amount of the additives can range from about greater than 0 to 50 wt.%, from 0.001 wt.% to 40 wt.%, from 0.01 wt.% to 30 wt.%, from 0.1 wt.% to 20 wt.%, from .5 wt.% to 10 wt.%, or from 1 wt.% to 5 wt.% of the total weight of the oriented film. Some polymer additives have been described in Zweifel Hans et al., "Plastics Additives Handbook," Hanser Gardner Publications, Cincinnati, Ohio, 5th edition (2001). In some embodiments, the oriented films disclosed herein do not comprise an additive such as those disclosed herein.

In some embodiments, one or more layers of the oriented film optionally comprise a slip agent. Slip is the sliding of film surfaces over each other or over some other substrates. The slip performance of films can be measured by ASTM D 1894, *Static and Kinetic Coefficients of Friction of Plastic Film and Sheeting*, which is incorporated herein by reference. In general, the slip agent can convey slip properties by modifying the surface properties of films; and reducing the friction between layers of the films and between the films and other surfaces with which they come into contact.

Any slip agent known to a person of ordinary skill in the art may be added to at least an outer layer of the oriented film disclosed herein. Non-limiting examples of the slip agents include primary amides having 12 to 40 carbon atoms (*e.g.*, erucamide, oleamide, stearamide and behenamide); secondary amides having 18 to 80 carbon atoms (*e.g.*, stearyl erucamide, behenyl erucamide, methyl erucamide and ethyl erucamide); secondary-bisamides having about 18 to about 80 carbon atoms (*e.g.*, ethylene-bis-stearamide and ethylene-bis-oleamide); and combinations thereof.

Optionally, one or more layers of the oriented film disclosed herein can comprise an anti-blocking agent. The anti-blocking agent can be used to prevent the undesirable adhesion between touching layers of the oriented film, particularly under moderate pressure and heat during storage, manufacture or use. Any anti-blocking agent known to a person of ordinary skill in the art may be added to the oriented film disclosed herein. Non-limiting examples of anti-blocking agents include minerals (*e.g.*, clays, chalk, and calcium carbonate), synthetic silica gel (*e.g.*, SYLOBLOC® from Grace Davison, Columbia, MD), natural silica (*e.g.*, SUPER FLOSS® from Celite Corporation, Santa Barbara, CA), talc (*e.g.*, OPTIBLOC® from Luzenac, Centennial, CO), zeolites (*e.g.*, SIPERNAT® from Degussa, Parsippany, NJ), aluminosilicates (*e.g.*, SILTON® from Mizusawa Industrial Chemicals, Tokyo, Japan), limestone (*e.g.*, CARBOREX® from Omya, Atlanta, GA), spherical polymeric particles (*e.g.*, EPOSTAR®, poly(methyl methacrylate) particles from Nippon Shokubai, Tokyo, Japan and TOSPEARL®, silicone particles from GE Silicones, Wilton, CT), waxes, amides (*e.g.* erucamide, oleamide, stearamide, behenamide, ethylene-bis-stearamide, ethylene-bis-oleamide, stearyl erucamide and other slip agents), molecular sieves, and combinations thereof. The mineral particles can lower blocking by creating a physical gap between articles, while the organic anti-blocking agents can migrate to the surface to limit surface adhesion. Where used, the amount of the anti-blocking agent in the oriented film can be from about greater than 0 to 3 wt.%, from 0.0001 to 2 wt.%, from 0.001 to 1 wt.%, or from 0.001 to 0.5 wt.% of the total weight of the oriented film. Some anti-blocking agents have been described in Zweifel Hans et al., "Plastics Additives Handbook," Hanser Gardner Publications, Cincinnati, Ohio, 5th edition, Chapter 7, pages 585-600 (2001).

Optionally, one or more layers of the oriented film disclosed herein can comprise a plasticizer. In general, a plasticizer is a chemical that can increase the flexibility and lower the glass transition temperature of polymers. Any plasticizer known to a person of ordinary skill in the art may be added to the oriented film disclosed herein. Non-limiting examples of plasticizers include mineral oils, abietates, adipates, alkyl sulfonates, azelates, benzoates, chlorinated paraffins, citrates, epoxides, glycol ethers and their esters, glutarates, hydrocarbon oils, isobutyrates, oleates, pentaerythritol derivatives, phosphates, phthalates, esters, polybutenes, ricinoleates, sebacates, sulfonamides, tri- and pyromellitates, biphenyl derivatives, stearates, difuran diesters, fluorine-containing plasticizers, hydroxybenzoic acid esters, isocyanate adducts, multi-ring aromatic compounds, natural product derivatives, nitriles, siloxane-based plasticizers, tar-based products, thioeters and combinations thereof. Where used, the amount of the plasticizer in the oriented film can be from greater than 0 to 15 wt.%, from 0.5 wt.% to 10 wt.%, or from 1 wt.% to 5 wt.% of the total weight of the oriented film. Some plasticizers have been described in George Wypych, "Handbook of Plasticizers," ChemTec Publishing, Toronto-Scarborough, Ontario (2004) .

In some embodiments, one or more layers of the oriented film optionally comprise an antioxidant that can prevent the oxidation of polymer components and organic additives in the oriented film. Any antioxidant known to a person of ordinary skill in the art may be added to the oriented film disclosed herein. Non-limiting examples of suitable antioxidants include aromatic or hindered amines such as alkyl diphenylamines, phenyl-$\alpha$-naphthylamine, alkyl or aralkyl substituted phenyl-$\alpha$-naphthylamine, alkylated p-phenylene diamines, tetramethyl-diaminodiphenylamine and the like; phenols such as 2,6-di-t-butyl-4-methylphenol; 1,3,5-trimethyl-2,4,6-tris(3',5'-di-t-butyl-4'-hydroxybenzyl)benzene; tetrakis[(methylene(3,5-di-t-butyl-4-hydroxyhydrocinnamate)]methane (*e.g.*, IRGANOX™ 1010, from Ciba Geigy, New York); acryloyl modified phenols; octadecyl-3,5-di-t-butyl-4-hydroxycinnamate (*e.g.*, IRGANOX™ 1076, commercially available from Ciba Geigy); phosphites and phosphonites; hydroxylamines; benzofuranone derivatives; and combinations thereof. Where used, the amount of the antioxidant in the oriented film can be from about greater than 0 to 5 wt.%, from 0.0001 wt.% to 2.5 wt.%, from 0.001 wt.% to 1 wt.%, or from 0.001 wt.% to 0.5 wt.% of the total weight of the oriented film. Some antioxidants have been described in Zweifel Hans et al., "Plastics Additives Handbook," Hanser Gardner Publications, Cincinnati, Ohio, 5th edition, Chapter 1, pages 1-140 (2001).

In other embodiments, one or more layers of the oriented film disclosed herein optionally comprise an UV stabilizer that may prevent or reduce the degradation of the oriented film by UV radiations. Any UV stabilizer known to a person of ordinary skill in the art may be added to the oriented film disclosed herein. Non-limiting examples of suitable UV stabilizers include benzophenones, benzotriazoles, aryl esters, oxanilides, acrylic esters, formamidines, carbon black, hindered amines, nickel quenchers, hindered amines, phenolic antioxidants, metallic salts, zinc compounds and combinations thereof. Where used, the amount of the UV stabilizer in the oriented film can be from about greater than 0 to 5 wt.%, from 0.01 wt.% to 3 wt.%, from 0.1 wt.% to 2 wt.%, or from 0.1 wt.% to 1 wt.% of the total weight of the oriented film. Some UV stabilizers have been described in Zweifel Hans et al., "Plastics Additives Handbook," Hanser Gardner Publications, Cincinnati, Ohio, 5th edition, Chapter 2, pages 141-426 (2001).

In further embodiments, one or more layers of the oriented film disclosed herein optionally comprise a colorant or pigment that can change the look of the oriented film to human eyes. Any colorant or pigment known to a person of ordinary skill in the art may be added to the oriented film disclosed herein. Non-limiting examples of suitable colorants or pigments include inorganic pigments such as metal oxides such as iron oxide, zinc oxide, and titanium dioxide, mixed metal oxides, carbon black, organic pigments such as anthraquinones, anthanthrones, azo and monoazo compounds, arylamides, benzimidazolones, BONA lakes, diketopyrrolo-pyrroles, dioxazines, disazo compounds, diarylide compounds, flavanthrones, indanthrones, isoindolinones, isoindolines, metal complexes, monoazo salts, naphthols, b-naphthols, naphthol AS, naphthol lakes, perylenes, perinones, phthalocyanines, pyranthrones, quinacridones, and quinophthalones, and combinations thereof. Where used, the amount of the colorant or pigment in the oriented film can be from about greater than 0 to 10 wt.%, from 0.1 wt.% to 5 wt.%, or from 0.25 wt.% to 2 wt.% of the total weight of the oriented film. Some colorants have been described in Zweifel Hans et al., "Plastics Additives Handbook," Hanser Gardner Publications, Cincinnati, Ohio, 5th edition, Chapter 15, pages 813-882 (2001).

Optionally, one or more layers of the oriented film disclosed herein can comprise a filler which can be used to adjust, *inter alia*, volume, weight, costs, and/or technical performance. Any filler known to a person of ordinary skill in the art may be added to the oriented film disclosed herein. Non-limiting examples of suitable fillers include talc, calcium carbonate, chalk, calcium sulfate, clay, kaolin, silica, glass, fumed silica, mica, wollastonite, feldspar, aluminum silicate, calcium silicate, alumina, hydrated alumina such as alumina trihydrate, glass microsphere, ceramic microsphere, thermoplastic microsphere, barite, wood flour, glass fibers, carbon fibers, marble dust, cement dust, magnesium oxide, magnesium hydroxide, antimony oxide, zinc oxide, barium sulfate, titanium dioxide, titanates and combinations thereof. In some embodiments, the filler is barium sulfate, talc, calcium carbonate, silica, glass, glass fiber, alumina, titanium dioxide, or a mixture thereof. In other embodiments, the filler is talc, calcium carbonate, barium sulfate, glass fiber or a mixture thereof. Where used, the amount of the filler in the oriented film can be from about greater than 0 to 50 wt.%, from 0.01 wt.% to 40 wt.%, from 0.1 wt.% to 30 wt.%, from 0.5 wt.% to 20 wt.%, or from 1 wt.% to 10 wt.% of the total weight of the oriented film. Some fillers have been disclosed in U.S. Patent No. 6,103,803 and Zweifel Hans et al., "Plastics Additives Handbook," Hanser Gardner Publications, Cincinnati, Ohio, 5th edition, Chapter 17, pages 901-948 (2001).

Optionally, one or more layers of the oriented film disclosed herein can comprise a lubricant. In general, the lubricant can be used, *inter alia*, to modify the rheology of the molten oriented film, to improve the surface finish of molded articles, and/or to facilitate the dispersion of fillers or pigments. Any lubricant known to a person of ordinary skill in the art may be added to the oriented film disclosed herein. Non-limiting examples of suitable lubricants include fatty alcohols and their dicarboxylic acid esters, fatty acid esters of short-chain alcohols, fatty acids, fatty acid amides, metal soaps, oligomeric fatty acid esters, fatty acid esters of long-chain alcohols, montan waxes, polyethylene waxes, polypropylene waxes, natural and synthetic paraffin waxes, fluoropolymers and combinations thereof. Where used, the amount of the lubricant in the oriented film can be from greater than 0 to 5 wt.%, from 0.1 wt.% to 4 wt.%, or from 0.1 wt.% to 3 wt.% of the total weight of the oriented film. Some suitable lubricants have been disclosed in Zweifel Hans et al., "Plastics Additives Handbook," Hanser Gardner Publications, Cincinnati, Ohio, 5th edition, Chapter 5, pages 511-552 (2001).

Optionally, one or more layers of the oriented film disclosed herein can comprise an antistatic agent. Generally, the antistatic agent can increase the conductivity of the oriented film and to prevent static charge accumulation. Any antistatic agent known to a person of ordinary skill in the art may be added to the oriented film disclosed herein. Non-limiting examples of suitable antistatic agents include conductive fillers (*e.g.*, carbon black, metal particles and other conductive particles), fatty acid esters (*e.g.*, glycerol monostearate), ethoxylated alkylamines, diethanolamides, ethoxylated alcohols, alkylsulfonates, alkylphosphates, quaternary ammonium salts, alkylbetaines and combinations thereof. Where used, the amount of the antistatic agent in the oriented film can be from greater than 0 to 5 wt.%, from 0.01 wt.% to 3 wt.%, or from 0.1 wt.% to 2 wt.% of the total weight of the oriented film. Some suitable antistatic agents have been disclosed in Zweifel Hans et al., "Plastics Additives Handbook," Hanser Gardner Publications, Cincinnati, Ohio, 5th edition, Chapter 10, pages 627-646 (2001).

In further embodiments, one or more layers of the oriented film disclosed herein optionally comprise a cross-linking agent that can be used to increase the cross-linking density of the oriented film. Any cross-linking agent known to a person of ordinary skill in the art may be added to the oriented film disclosed herein. Non-limiting examples of

suitable cross-linking agents include organic peroxides (*e.g.*, alkyl peroxides, aryl peroxides, peroxyesters, peroxycarbonates, diacylperoxides, peroxyketals, and cyclic peroxides) and silanes (*e.g.*, vinyltrimethoxysilane, vinyltriethoxysilane, vinyltris(2-methoxyethoxy)silane, vinyltriacetoxysilane, vinylmethyldimethoxysilane, and 3-methacryloyloxypropyltrimethoxysilane). Where used, the amount of the cross-linking agent in the oriented film can be from greater than 0 to 20 wt.%, from 0.1 wt.% to 15 wt.%, or from 1 wt.% to 10 wt.% of the total weight of the oriented film. Some suitable cross-linking agents have been disclosed in Zweifel Hans et al., "Plastics Additives Handbook," Hanser Gardner Publications, Cincinnati, Ohio, 5th edition, Chapter 14, pages 725-812 (2001).

In certain embodiments, one or more layers of the oriented film optionally comprise a wax, such as a petroleum wax, a low molecular weight polyethylene or polypropylene, a synthetic wax, a polyolefin wax, a beeswax, a vegetable wax, a soy wax, a palm wax, a candle wax or an ethylene/a-olefin interpolymer having a melting point of greater than 25 °C. In certain embodiments, the wax is a low molecular weight polyethylene or polypropylene having a number average molecular weight of 400 to 6,000 g/mole. The wax can be present in the range from 0 wt.% to 50 wt.% or from 1 wt.% to 40 wt.% of the total weight of the oriented film.

## Oriented Film

The ethylene/a-olefin interpolymer or the polymer composition can be used to make the oriented film disclosed herein. Multiple layers may be employed in the oriented film to provide a variety of performance attributes. Such layers include but are not limited to barrier layers, tie layers, and structural layers. Various materials can be used for these layers, with some of them being used as more than one layer in the same film structure. Some of these materials include: foil, nylon, ethylene/vinyl alcohol (EVOH) copolymers, poly(ethylene terephthalate) (PET), polyvinylidene chloride (PVDC), polyethylene terephthalate (PET), oriented polypropylene (OPP), ethylene/vinyl acetate (EVA) copolymers, ethylene/acrylic add (EAA) copolymers, ethylene/methacrylic add (EMAA) copolymers, polyolefins (e.g., LLDPE, HDPE, LDPE), nylon, graft adhesive polymers (e.g., maleic anhydride grafted polyethylene), styrene-butadiene polymers (such as K-resins, available from Phillips Petroleum), and paper.

In further embodiments, the total thickness of the multi-layered oriented film is from 12.7 $\mu$m (0.5 mils) to 101 $\mu$m (4 mils). In certain embodiments, the total thickness of the multi-layered oriented film is from 0.1 $\mu$m (micron) to 150 $\mu$m (microns), from 1 $\mu$m (micron) to 100 $\mu$m (microns), from 5 $\mu$m (microns) to 80 $\mu$m (microns), from 8 $\mu$m (microns) to 60 $\mu$m (microns) or from 20 $\mu$m (microns) to 40 $\mu$m (microns).

In some embodiments, the oriented film comprises two outer layers and one inner layer. In other embodiments, the inner layer comprises the polymer composition disclosed herein. In certain embodiments, the polymer composition comprises the ethylene/a-olefin interpolymer disclosed herein. In other embodiments, the polymer composition comprises a blend of the ethylene/a-olefin interpolymer disclosed herein and at least one second polymer. In further embodiment, the ratio of the ethylene/a-olefin interpolymer to the second polymer is from 1:10 to 10:1, from 1:8 to 8:1, from 1:6 to 6:1, from 1:5 to 5:1, from 1:4 to 4:1 or from 1:3 to 3:1.

In some embodiments, the second polymer is or comprises repeating units derived from ethylene, for example, linear low density polyethylene. In other embodiments, the second polymer is or comprises an ethylene/a-olefin copolymer, an ethylene/vinyl acetate copolymer, an ethylene/alkyl acrylate copolymer, an ethylene/acrylic acid copolymer, as well as an ionomer such as a metal salt of ethylene/acrylic acid.

In some embodiments, the thickness of the inner layer can be from 1% to 90%, from 3% to 80%, from 5% to 70%, from 10% to 60%, from 15% to 50%, or from 20% to 40% of the total thickness of the oriented film. In other embodiments, the thickness of the inner layer is from 10% to 40%, from 15% to 35%, from 20% to 30%, or from 22.5% to 27.5% of the total thickness of the oriented film. In further embodiments, the total thickness of the inner layer is 25% of the total thickness of the oriented film disclosed herein.

In some embodiments, the thickness of each of the outer layers is from 1% to 90%, from 3% to 80%, from 5% to 70%, from 10% to 60%, from 15% to 50%, or from 20% to 40% of the total thickness of oriented film. In other embodiments, the thickness of each of the outer layers is from 10% to 40%, from 15% to 35%, from 20% to 30%, or from 22.5% to 27.5% of the total thickness of the oriented film. In further embodiments, the thickness of each of the outer layers is 25% of the total thickness of the oriented film disclosed herein.

In some embodiments, a tie layer is provided in the oriented film to promote the adhesion between two adjacent layers. In some embodiments, the tie layer is between or adjacent to the inner layer and the outer layer. Some non-limiting examples of suitable polymers for the tie layer include ethylene/vinyl acetate copolymers, ethylene/methyl acrylate copolymers, ethylene/butyl acrylate copolymers, very low density polyethylene (VLDPE), ultralow density polyethylene (ULDPE), TAFMER™ resins, as well as metallocene catalyzed ethylene/a-olefin copolymers of lower densities. Generally, some resins suitable for use in the outer layer can serve as tie layer resins. In some embodiments, the thickness of the tie layer is from 1% to 99%, from 10% to 90%, from 20% to 80%, from 30% to 70%, or from 40% to 60% of the total thickness of oriented film. In other embodiments, the thickness of the tie layer is from 45% to 55% of the total thickness of the oriented film. In further embodiments, the total thickness of the tie layer is 50% of the total thickness of

the oriented film disclosed herein.

In some embodiments, a sealant layer is provided in the oriented film. The sealant layer may comprise a polyolefin such as low density polyethylene, an ethylene/α-olefin copolymer, an ethylene/vinyl acetate copolymer, an ethylene/alkyl acrylate copolymer, an ethylene/acrylic acid copolymer, a metal salt of ethylene/acrylic acid or a combination thereof. In certain embodiments, the thickness of the sealant layer is from 1% to 90%, from 3% to 80%, from 5% to 70%, from 10% to 60%, from 15% to 50%, or from 20% to 40% of the total thickness of oriented film. In other embodiments, the thickness of the sealant layer is from 10% to 40%, from 15% to 35%, from 20% to 30%, or from 22.5% to 27.5% of the total thickness of the oriented film. In further embodiments, the thickness of the sealant layer is about 25% of the total thickness of the oriented film disclosed herein.

The ethylene/a-olefin interpolymer disclosed herein can be used in any of the layers in the oriented films. In some embodiments, the ethylene/a-olefin interpolymer is used in the inner layer of the oriented films. In other embodiments, the ethylene/a-olefin interpolymer is used in at least one of the outer layers of the oriented films.

The oriented films disclosed herein may also be made by conventional fabrication techniques, e.g. simple bubble extrusion, biaxial orientation processes (such as tenter frames or double bubble processes), simple cast/sheet extrusion, coextrusion, lamination, blown film extrusion, *etc.* Conventional simple bubble extrusion processes (also known as hot blown film processes) are described, for example, in The Encyclopedia of Chemical Technology, Kirk-Othmer, Third Edition, John Wiley & Sons, New York, 1981, Vol. 16, pp. 416-417 and Vol. 18, pp. 191-192.

## Blown Film Extrusion Process

In general, extrusion is a process by which a polymer is propelled continuously along a screw through regions of high temperature and pressure where it is melted and compacted, and finally forced through a die. The extruder can be a single screw extruder, a multiple screw extruder, a disk extruder or a ram extruder. Several types of screw can be used. For example, a single-flighted screw, double-flighted screw, triple-flighted screw, or other multi-flighted screw can be used. The die can be a film die, blown film die, sheet die, pipe die, tubing die or profile extrusion die. In a blown film extrusion process, a blown film die for monolayer or oriented film can be used. The extrusion of polymers has been described in C. Rauwendaal, "Polymer Extrusion", Hanser Publishers, New York, NY (1986); and M.J. Stevens, "Extruder Principals and Operation," Elsevier Applied Science Publishers, New York, NY (1985).

In a blown film extrusion process, one or more polymers can be first fed into a heated barrel containing a rotating screw through a hopper, and conveyed forward by the rotating screw and melted by both friction and heat generated by the rotation of the screw. The polymer melt can travel through the barrel from the hopper end to the other end of the barrel connected with a blown film die. Generally, an adapter may be installed at the end of the barrel to provide a transition between the blown film die and the barrel before the polymer melt is extruded through the slit of the blown film die. To produce an oriented film, an equipment with one or more extruders joined with a common blown film die can be used. Each extruder is responsible for producing one component layer, in which the polymer of each layer can be melted in the respective barrel and extruded through the slit of the blown film die. After forced through the blown film die, the extrudate can be blown up by air from the center of the blown film die like a balloon tube. Mounted on top of the die, a high-speed air ring can blow air onto the hot film to cool it. The cooled film tube can then pass through nip rolls where the film tube can be flattened to form a flat film. The flat film can be then either kept as such or the edges of the lay-flat can be slit off to produce two flat film sheets and wound up onto reels for further use. The volume of air inside the tube, the speed of the nip rollers and the extruders output rate generally play a role in determining the thickness and size of the film.

In some embodiments, the barrel has a diameter of 2.54 cm (1 inch) to 25.4 cm (10 inches), from 5.1 cm (2 inches) to 20.3 cm (8 inches), from 7.6 cm (3 inches) to 17.8 cm (7 inches), from 10.2 cm (4 inches) to 15.2 cm (6 inches), or about 12.7 cm (5 inches). In other embodiments, the barrel has a diameter from 2.54 cm (1 inch) to 10.2 cm (4 inches), from 5.1 cm (2 inches) to 7.6 cm (3 inches) or about 6.4 cm (2.5 inches). In certain embodiments, the barrel has a length to diameter (L/D) ratio from 10:1 to 30:1, from 15:1 to 25:1, or from 20:1 to 25:1. In further embodiments, the L/D ratio is from 22:1 to 26:1, or from 24:1 to 25:1.

The barrel can be divided into several temperature zones. The zone that is closest to the hopper end of the barrel is usually referred to as Zone 1. The zone number increases sequentially towards the other end of the barrel. In some embodiments, there are 1, 2, 3, 4, 5, 6, 7, 8, 9, or 10 temperature zones in a barrel. In other embodiments, there are more than 10, more than 15, more than 20 temperature zones in a barrel. The temperature of each temperature zone in the barrel can range from 10 °C (50 °F) to 538 °C (1000 °F), from 27 °C (80 °F) to 427 °C (800 °F), from 38 °C (100 °F) to 371 °C (700 °F) from 66 °C (150 °F) to 316 °C (600 °F), from 93 °C (200 °F) to 260 °C (500 °F), or from 125 °C (250 °F) to 232 °C (450 °F). In some embodiments, the barrel temperature increases sequentially from the first Zone to the last Zone. In other embodiments, the barrel temperature remains substantially the same throughout the barrel. In other embodiments, the barrel temperature decreases from the first Zone to the last Zone. In further embodiments, the barrel temperature changes randomly from one zone to another.

In some embodiments, the die can also be heated to a specific temperature, ranging from 121 °C (250 °F) to 371 °C (700 °F), from 149 °C (300 °F) to 316 °C (600 °F), from 177 °C (350 °F) to 288 °C (550 °F), from 204 °C (400 °F) to 260 °C (500 °F). In other embodiments, the die temperature ranges from 218 °C (425 °F) to 246 °C (475 °F) or from 221 °C (430 °F) to 232 °C (450 °F).

The adapter temperature can be between the die temperature and the temperature of the last zone. In some embodiments, the adapter temperature is from 93 °C (200 °F) to 343 °C (650 °F,) from 121 °C (250 °F) to 316 °C (600 °F), from 149 °C (300 °F) to 288 °C (550 °F), from 177 °C (350 °F) to 260 °C (500 °F), and from 204 °C (400 °F) to 232 °C (450 °F).

Cast Film Process

The cast film process involves the extrusion of polymers melted through a slot or flat die to form a thin, molten sheet or film. This film can then be "pinned" to the surface of a chill roll by a blast of air from an air knife or vacuum box. The chill roll can be water-cooled and chrome-plated. The film generally quenches immediately on the chill roll and can subsequently have its edges slit prior to winding.

Because of the fast quench capabilities, a cast film generally is more glassy and therefore has a higher optic transmission than a blown film. Further, cast films generally can be produced at higher line speeds than blown films. Further, the cast film process may produce higher scrap due to edge-trim, and may provide films with very little film orientation in the cross-direction.

As in blown film, co-extrusion can be used to provide oriented films disclosed herein. In some embodiments, the oriented films may have additional functional, protective, and decorative properties than monolayer films. Cast films can be used in a variety of markets and applications, including stretch/cling films, personal care films, bakery films, and high clarity films.

In some embodiments, a cast film line may comprise an extrusion system, a casting machine, and a winder. Optionally, the cast film line may further comprise a gauging system, a surface treatment system and/or an oscillation stand. The cast film die can be generally positioned vertically above the main casting roll and the melt can be pinned against the casting roll with the use of an air knife and/or vacuum box.

The casting machine is generally designed to cool the film and provide the desired surface finish on the film. In some embodiments, the casting machine comprises two casting rolls. The main casting roll may be used to provide initial cooling and surface finish on the film. The secondary casting roll can cool the opposite side of the film to provide uniformity in the film. For embossed film applications, the casting roll may have an engraved pattern and can be nipped with a rubber roll. Optionally, a water bath and squegee roll can be used for cooling the surface of the rubber roll.

The casting rolls can be double shell style with spiral baffle, and may have an internal flow design to maintain superior temperature uniformity across the width of the web. Optionally, cold water from the heat transfer system can be circulated to cool the rolls.

Once cast, the film can optionally pass through a gauging system to measure and control thickness. Optionally, the film can be surface-treated either by a corona or a flame treater and passed through an oscillating station to randomize any gauge bands in the final wound product. Before the cast film enters the winder, the edges can be trimmed for recycling or disposal. In some embodiments, automatic roll and shaft handling equipment are sometimes provided for winders with short cycle times.

Laminate Film Process

In the laminate film process for making an oriented film, the polymers for each of the layers are independently processed by an extruder to polymer melts. Subsequently, the polymer melts are combined in layers in a die, formed into a casting, and quenched to the solid state. This casting may be drawn uniaxially in the machine direction by reheating to from 50 °C to 200 °C and stretching from 3 times to 10 times between rolls turning at different speeds. The resulting uniaxially oriented film can then be oriented in the transverse direction by heating to from 75 °C to 175 °C in an air heated oven and stretching from 3 times to 10 times between diverging clips in a tenter frame.

Alternately, the two direction stretching may take place simultaneously in which case the stretching may be from 3 times to 10 times in each direction. The oriented film can be cooled to near ambient temperature. Subsequent film operations, such as corona treatment and metalization, may then be applied. Alternatively, the layers of the oriented film can be brought together in stages rather than through the same die. In some embodiments, the inner layer is cast initially, and then the outer layer can be extrusion coated onto the inner layer casting. In other embodiments, the outer layer is cast initially, and then the inner layer can be extrusion coated onto the outer layer casting. In further embodiments, the outer layer is cast initially, and then the tie layer and inner layer can be extrusion coated onto the outer layer casting sequentially or simultaneously. In further embodiments, the inner layer is cast initially, and then the tie layer and outer layer can be extrusion coated onto the inner layer casting sequentially or simultaneously. This extrusion coating step

may occur prior to MD orientation or after MD orientation.

The oriented films disclosed herein can be made into packaging structures such as form-fill-seal structures or bag-in-box structures. For example, one such form-fill-seal operation is described in Packaging Foods With Plastics, *ibid*, pp. 78-83. Packages can also be formed from multilayer packaging roll stock by vertical or horizontal form-fill-seal packaging and thermoform-fill-seal packaging, as described in "Packaging Machinery Operations: No. 8, Form-Fill-Sealing, A Self-Instructional Course" by C. G. Davis, Packaging Machinery Manufacturers Institute (April 1982); The Wiley Encyclopedia of Packaging Technology by M. Bakker (Editor), John Wiley & Sons (1986), pp. 334, 364-369; and Packaging: An Introduction by S. Sacharow and A. L. Brody, Harcourt Brace Javanovich Publications, Inc. (1987), pp.322-326. A particularly useful device for form-fill-seal operations is the Hayssen Ultima Super CMB Vertical Form-Fill-Seal Machine. Other manufacturers of pouch thermoforming and evacuating equipment include Cryovac and Koch. A process for making a pouch with a vertical form-fill-seal machine is described generally in U.S. Patent Nos. 4,503,102 and 4,521,437. The oriented films containing one or more layers disclosed herein are well suited for the packaging of heat sensitive products, such as chocolate, candies, cheese, and similar food products in such form-fill-seal structures.

The oriented films disclosed herein can be biaxially oriented films. The biaxially oriented film manufacturing processes such as described in the "double bubble" process of U.S. Patent No. 3,456,044 (Pahlke), and the processes described in U.S. Patent No. 4,352,849 (Mueller), U.S. Patent Nos. 4,820,557 and 4,837,084 (both to Warren), U.S. Patent No. 4,865,902 (Golike et al.), U.S. Patent No. 4,927,708 (Herran et al.), U.S. Patent No. 4,952,451 (Mueller), and U.S. Patent Nos. 4,963,419 and 5,059,481 (both to Lustig et al.) can also be used to make the novel oriented film disclosed herein. Biaxially oriented film structures can also be made by a tenter-frame technique, such as that used for oriented polypropylene.

As disclosed by Pahlke in U.S. Patent No. 3,456,044 and in comparison to the simple bubble method, "double bubble" or "trapped bubble" film processing can significantly increase a film's orientation in both the machine and transverse directions. The increased orientation yields higher free shrinkage values when the film is subsequently heated. Also, Pahlke in U.S. Patent No. 3,456,044 and Lustig et al. in U.S. Patent No. 5,059,481 disclose that low density polyethylene and ultra low density polyethylene materials, respectively, exhibit poor machine and transverse shrink properties when fabricated by the simple bubble method, e.g., about 3% free shrinkage in both directions. However, in contrast to known film materials, and particularly in contrast to those disclosed by Lustig et al. in U.S. Patent Nos. 5,059,481; 4,976,898; and 4,863,769, as well as in contrast to those disclosed by Smith in U.S. Patent No. 5,032,463 the unique interpolymer compositions of the present invention may show significantly improved simple bubble shrink characteristics in both the machine and transverse directions. Additionally, when the unique interpolymers may be fabricated by simple bubble method at high blow-up ratios, e.g., at greater or equal to 2.5:1, or, more preferably, by the "double bubble" method disclosed by Pahlke in U.S. Patent No. 3,456,044 and by Lustig et al. in U.S. Patent No. 4,976,898, it is possible to achieve good machine and transverse direction shrink characteristics making the resultant films suitable for shrink wrap packaging purposes. Blow-Up Ratio, abbreviated herein as "BUR", is calculated by the equation:

$$\text{BUR} = \text{Bubble Diameter v. Die Diameter.}$$

In some embodiments, the oriented films disclosed herein can be packaging or wrapping films. The packaging and wrapping films may be monolayer or multilayer films. The film made from the polymer compositions can also be coextruded with the other layer(s) or the film can be laminated onto another layer(s) in a secondary operation, such as that described in Packaging Foods With Plastics, by Wilmer A. Jenkins and James P. Harrington (1991) or that described in "Coextrusion For Barrier Packaging" by W. J. Schrenk and C. R. Finch, Society of Plastics Engineers RETEC Proceedings, Jun. 15-17 (1981), pp. 211-229 or in "Coextrusion Basics" by Thomas I. Butler, Film Extrusion Manual: Process, Materials, Properties, pp. 31-80 (published by TAPPI Press (1992)). If a monolayer film is produced via tubular film (i.e., blown film techniques) or flat die (i.e., cast film) as described by K. R. Osborn and W. A. Jenkins in "Plastic Films, Technology and Packaging Applications" (Technomic Publishing Co., Inc. (1992)) then the film must go through an additional post-extrusion step of adhesive or extrusion lamination to other packaging material layers to form a multilayer structure. If the film is a coextrusion of two or more layers (also described by Osborn and Jenkins), the film may still be laminated to additional layers of packaging materials, depending on the other physical requirements of the final film. "Laminations vs. Coextrusion" by D. Dumbleton (Converting Magazine (September 1992) also discusses lamination versus coextrusion. Monolayer and coextruded films can also go through other post extrusion techniques, such as a biaxial orientation process.

Extrusion coating is yet another technique for producing packaging films. Similar to cast film, extrusion coating is a flat die technique. An oriented film comprised of the compositions disclosed herein can be extrusion coated onto a substrate either in the form of a monolayer or a coextruded extrudate according to, for example, the processes described in U.S. Patent No. 4,339,507 . Utilizing multiple extruders or by passing the various substrates through the extrusion

coating system several times can result in multiple polymer layers. Some non-limiting examples of suitable applications for such multi-layered/multi-substrate systems are for packing cheese, moist pet foods, snacks, chips, frozen foods, meats, hot dogs, and the like.

If desirable, the oriented film can be coated with a metal such as aluminum, copper, silver, or gold using conventional metalizing techniques. The metal coating can be applied to the inner layer or outer layer by first corona treating the surface of the inner layer or outer layer and then applying the metal coating by any known method such as sputtering, vacuum deposition, or electroplating.

If desirable, other layers may be added or extruded onto the oriented film, such an adhesive or any other material depending on the particular end use. For example, the outer surface of the oriented film, such as the sealant layer, may be laminated to a layer of cellulosic paper.

The oriented films made with both the interpolymers described herein may also be pre-formed by any known method, such as, for example, by extrusion thermoforming, with respect to the shape and contours of the product to be packaged. The benefit of employing pre-formed oriented films will be to complement or avoid a given particular of a packaging operation such as augment draw ability, reduced film thickness for given draw requirement, reduced heat up and cycle time, etc.

The oriented films disclosed herein may show surprisingly more efficient irradiation crosslinking as compared to a comparative conventional Ziegler polymerized linear ethylene/a-olefin polymer. As one aspect of this invention, by taking advantage of the irradiation efficient of these unique polymers, it is possible to prepare the oriented films with differentially or selectively crosslinked film layers. To take further advantage of this discovery, specific film layer materials including the present ethylene /a-olefin multi-block interpolymers can be formulated with pro-rad agents, such as triallyl cyanurate as described by Warren in U.S. Patent No. 4,957,790, and/or with antioxidant crosslink inhibitors, such as butylated hydroxytoluene as described by Evert et al. in U.S. Patent No. 5,055,328.

Irradiation crosslinking is also useful for increasing the shrink temperature range of the oriented film. For example, U.S. Patent No. 5,089,321 discloses multilayer film structures comprising at least one outer layer and at least one inner layer which have good irradiation crosslinking performance. Among irradiation crosslinking technologies, beta irradiation by electron beam sources and gamma irradiation by a radioactive element such as Cobalt 60 are the most common methods of crosslinking film materials.

In an irradiation crosslinking process, a thermoplastic film is fabricated by a blown film process and then exposed to an irradiation source (beta or gamma) at an irradiation dose of up to 20 Mrad to crosslink the polymeric film. Irradiation crosslinking can be induced before or after final film orientation whenever oriented films are desired such as for shrink and skin packaging, however, preferably irradiation crosslinking is induced before final orientation. When heat-shrinkable and skin packaging films are prepared by a process where pellet or film irradiation precedes final film orientation, the films invariably show higher shrink tension and will tend yield higher package warpage and board curl; conversely, when orientation precedes irradiation, the resultant films will show lower shrink tension. Unlike shrink tension, the free shrink properties of the ethylene /a-olefin multi-block interpolymers disclosed herein are believed to be essentially unaffected by whether irradiation precedes or follows final film orientation.

Irradiation techniques useful for treating the oriented films described herein include techniques known to those skilled in the art. Preferably, the irradiation is accomplished by using an electron beam (beta) irradiation device at a dosage level of from about 0.5 megarad (Mrad) to about 20 Mrad. The oriented films fabricated from the ethylene /a-olefin multi-block interpolymers as described herein are also expected to exhibit improved physical properties due to a lower degree of chain scission occurring as a consequence of the irradiation treatment.

The ethylene /a-olefin multi-block interpolymers, polymer compositions, and oriented films disclosed herein, and the methods for preparing them, are more fully described in the following examples.

In some embodiments, the oriented films disclosed herein can be made by processes comprising the steps of:

(a) providing a polymer composition comprising at least one ethylene/$\alpha$-olefin interpolymer;
(b) converting the polymer composition into a primary tape using a first film forming step;
(c) quenching the primary tape at a temperature of about 15 °C to about 25 °C;
(d) reheating the primary tape; and
(e) converting the primary tape to the oriented film using a second film forming step.

In some embodiments, each of the first film forming step and the second film forming step is independently a double-bubble process or a flat tenter stretching process.

In certain embodiments, the quenching step is done with a water bath at a temperature from 15 °C to 25 °C, from 20 °C to 30 °C or from 10 °C to 30 °C.

In some embodiments, the primary tape is heated to a temperature above its softening temperature in the reheating step. In further embodiments, the primary tape is heated to a temperature above its glass transition temperature in the reheating step.

In certain embodiments, at least one of the surfaces of the oriented film is surface-treated by corona, atmospheric (air) plasma, flame plasma, chemical plasma or a combination thereof. Corona discharge equipment consists of a high-frequency power generator, a high-voltage transformer, a stationary electrode, and a treater ground roll. Standard utility electrical power is converted into higher frequency power which is then supplied to the treater station. The treater station applies this power through ceramic or metal electrodes over an air gap onto the material's surface.

In some embodiments, the first film forming step occurs at a temperature from 100 °C to 117 °C or from 100 °C to 115 °C. In other embodiments, the first film forming step occurs at a temperature from 105 °C to 115 °C. In some embodiments, the second film forming step occurs at a temperature from 100 °C to 117 °C or from 100 °C to 115 °C. In other embodiments, the second film forming step occurs at a temperature from 105 °C to 115 °C.

**Comparative Example L and Examples 20-22**

Comparative Example L is a DOWLEX™ 2045G, an octene copolymer linear low density polyethylene (LLDPE) obtainable from Dow Chemical Co., Midland, MI. Examples 20-22 are ethylene/a-olefin interpolymers which were made in a substantially similar manner as the ethylene/a-olefin interpolymers of Examples 19A-I described above. The properties of the Comparative Example L and Examples 20-22 are shown in Table 10 below.

**Table 10.**

| Sample | Density (g/cc) g/cm$^3$ | Melt Index, $I_2$ |
|---|---|---|
| Comp. Ex. L | 0.920 | 2.0 |
| Example 20 | 0.877 | 1.0 |
| Example 21 | 0.877 | 5.0 |
| Example 22 | 0.866 | 5.0 |

**Oriented Films Made with the Polymer Compositions Disclosed Herein**

Oriented films prepared from the polymer compositions disclosed herein advantageously have desirable properties such as good orientation behaviors, low shrink tension, good tensile properties, and high heat seal strength.

**Comparative Example M, Examples 23-28**

Each of Comparative Example M and Examples 23-28 is a symmetrical film having a three-layer film structure, *i.e.,* the first outer layer, the core layer, and the second outer layer. The films were produced by a conventional cast film process using a Killion Cast Film Line obtainable from Killion Extruders Inc., Clear Grove, NJ. The equipment contained three extruders, *i.e.,* Extruders A, B, and C. Extruder A was used for making the core layer and had a screw of 1.5 inches x 36 inches with a Maddox mixing section and seven temperature zones, *i.e.,* zone 1, zone 2, zone 3, clamp ring zone, adapter one zone, adapter two zone and die temperature zone. Extruder B was used for making the outer layer and had a screw of 2.54 cm x 50.8 cm (1 inch x 20 inches). Extruder C was used for making the second outer layer and had a screw of 2.54 cm x 50.8 cm (1 inch x 20 inches). Each of Extruders B and C had six temperature zones *i.e.,* zone 1, zone 2, zone 3, clamp ring zone, adapter zone, die temperature zone. Extruder A contained the blended materials of Comparative Example L and/or one of Examples 20-22, while Extruders B and C contained Comparative Example L. The heater was used for the cast roll and was set at 38 °C (100 °F) while the actual temperature of the roll was set at 43 °C (110 °F). The cast and nip rolls were set at (6ft/minute) 183 cm/minute.

The total thickness of Comparative Example M and Examples 23-28 was about 30 $\mu$m. The ratio of thickness between the first outer layer, core layer, and the second outer layer was about 15:70:15. The compositions of each layer of Comparative Example M and Examples 23-28 are shown in Table 11 below.

**Table 11.**

| Sample | First outer layer | Core layer | Second outer layer |
|---|---|---|---|
| Comp. Ex. M | 100 wt.% Comp. Ex. L | 100 wt.% Comp. Ex. L | 100 wt.% Comp. Ex. L |
| Example 23 | 100 wt.% Comp. Ex. L | 75 wt.% Comp. Ex. L + 25 wt.% Example 20 | 100 wt.% Comp. Ex. L |
| Example 24 | 100 wt.% Comp. Ex. L | 50 wt.% Comp. Ex. L + 50 wt.% Example 20 | 100 wt.% Comp. Ex. L |
| Example 25 | 100 wt.% Comp. Ex. L | 25 wt.% Comp. Ex. L + 75 wt.% Example 20 | 100 wt.% Comp. Ex. L |

(continued)

| Sample | First outer layer | Core layer | Second outer layer |
|---|---|---|---|
| Example 26 | 100 wt.% Comp. Ex. L | 100 wt.% Example 20 | 100 wt.% Comp. Ex. L |
| Example 27 | 100 wt.% Comp. Ex. L | 50 wt.% Comp. Ex. L + 50 wt.% Example 21 | 100 wt.% Comp. Ex. L |
| Example 28 | 100 wt.% Comp. Ex. L | 50 wt.% Comp. Ex. L + 50 wt.% Example 22 | 100 wt.% Comp. Ex. L |

## Orientation Behavior

To test the orientation behaviors of Comparative Example M and Examples 23-28, the films were stretched in a simultaneous biaxial orientation by a Bruckner Laboratory Film Stretcher Type KARO IV (a pantagraph-type batch biaxial stretching apparatus obtainable from Bruckner AG, Germany). Comparative Example M and Examples 23-28 were punched into samples of 85 mm x 85 mm. Each of the square samples was loaded into the Bruckner Laboratory Film Stretcher, where each edge was nipped by five clips. The films were conditioned in a preheated oven at 90 °C, 95 °C, 100 °C, 105 °C, 110 °C, 115 °C, and 120 °C for 1 minute respectively with the following orientation conditions:

Stretch speed: 400% $s^{-1}$
Stretch ratio (MD and TD): 4.5 $\times$ 4.5

During the test, Comparative Example M slipped out of the orientation machine grips at orientation temperatures between 90 °C to 105 °C. Comparative Example M demonstrated good orientation performance at 110 °C and 115 °C, but showed uneven stretching at temperature of 120 °C and was broken at 125 °C. Examples 23-28 showed good orientation behavior at temperatures of 105 °C, 110 °C, and 115 °C. The orientation behaviors of Comparative Example M and Examples 23-28 at different temperatures are shown in Table 12 below.

**Table 12.**

| **Ex.** | **90 °C** | **95 °C** | **100 °C** | **105 °C** | **110 °C** | **115 °C** | **120 °C** |
|---|---|---|---|---|---|---|---|
| **Comp. Ex. M** | Slipped | Slipped | Slipped | Slipped | Good | Good | Uneven stretch, too thin in center |
| **23** | Slipped | Slipped | Slipped | Tore at clips | Good | Good | Uneven stretch, too thin in center |
| **24** | Slipped | Slipped | Tore at clips | Good/Tore at clips | Good | Good | Uneven stretch, too thin in center |
| **25** | Slipped | Slipped | Good/Tore at clips | Good | Good | Good | Uneven stretch, too thin in center |
| **26** | Slipped | Slipped | Good/Tore at clips | Good | Good | Good | Uneven stretch, too thin in center |
| **27** | Slipped | Slipped | Good/Tore at clips | Good | Good | Good | Uneven stretch, too thin in center |
| **28** | Slipped | Slipped | Good/Tore at clips | Good/Tore at clips | Good | Good | Uneven stretch, too thin in center |

## Shrink Tension

Comparative L and Examples 23-28 were tested for their shrink tension following the steps described below. A Rheometrics Solids Analyzer III obtained from Texas Instruments Inc. Dallas, TX was used. A 12.7 mm $\times$ 63.5 mm piece was taken from each of Comparative L and Examples 23-28, ad the thickness was measured by a micrometer. Each piece was placed perpendicularly in the oven of the Rheometrics Solids Analyzer III between the upper and lower grips. The fixture gap was 20 mm. The temperature was ramped from 25 °C to 160 °C with the ramp rate of 20 °C/min, while the shrink force was measured by the Rheometrics Solids Analyzer III. The films which were oriented at 110 °C and 115 °C respectively were measured for shrink tension. The shrink tension results are shown in Figure 8.

The oriented films made with polymers disclosed herein demonstrate low shrink tension when the oriented

films are stretched at temperatures from 80 °C to 140 °C, from 85 °C to 135 °C, from 90 °C to 130 °C, from 95 °C to 125 °C, from 100 °C to 120 °C, from 105 °C to 115 °C, or from 110 °C to 113 °C. In some embodiments, the shrink tension of the oriented film when stretched at about110 °C is about less than 2.8 MPa, less than 2.2 MPa, less than 2.0 MPa, less than 1.8 MPa, or less than 1.5 MPa. In some embodiments, the shrink tension of the oriented film when stretched at about 115 °C is about less than 1.2 MPa, less than 1.1 MPa, less than 1.0 MPa, less than about 0.9 MPa, less than 0.8 MPa, less than 0.7 MPa, or less than 0.6 MPa.

Alternatively, the shrink tension can be measured according steps described in ASTM D-2838, which is incorporated herein by reference in its entirety. The procedure can be carried out as follows: a 2.8 inch by 1 inch test strip (2.8 inches is the distance between the jaws of the strain gauge) is immersed in an oil bath (Dow Corning 200 silicone oil, 20 centistroke) which has been preheated to 38 °C (100 °F) and is thereafter heated at a rate of approximately 12 °C (10 °F) per minute to about 149 °C (300 °F) while restraining the immersed test strip in the jaws of a strain gauge. The shrink tension is measured continuously and reported at 10° increments and converted to psi by use of the initial thickness of the one-inch test strip.

## Free Shrinkage

Free shrinkage herein refers to the irreversible and rapid reduction in linear dimension in a specified direction occurring in a film subjected to elevated temperatures under conditions where nil or negligible restraint to inhibit shrinkage is present. It is normally expressed as a percentage of the original dimension of the film. Testing can be conducted according steps described in ASTM D-2732, which is incorporated herein by reference in its entirety.

The oriented films made with polymers disclosed herein often demonstrate high percentage of shrinkage when the oriented films are stretched at temperatures from 80 °C to 140 °C, from 85 °C to 135 °C, from 90 °C to 130 °C, from 95 °C to 125 °C, from 00 °C to 120 °C, from 105 °C to 115 °C, or from 110 °C to 113 °C. In some embodiments, the % of shrinkage of the oriented film when stretched at 95 °C in any direction is at least 7.5%, at least 8%, at least 8.5%, at least 9%, at least 9.5%, at least 10%, at least 10.5%, at least 11%, at least 11.5%, or at least 12% of the total dimension of the oriented films. In some embodiments, the % of shrinkage of the oriented film when stretched at 95 °C in either the machine direction (MD) or the transverse direction (TD) is at least 7.5%, at least 8%, at least 8.5%, at least 9%, at least 9.5%, at least 10%, at least 10.5%, at least 11%, at least 11.5%, or at least 12% of the total dimension of the oriented films.

The Comparative Example M and Examples 23-28 were analyzed for free shrinkage following the steps described in ASTM D-2732, which is incorporated herein by reference in its entirety, except for: (1) the sample size was 10.16 cm × 10.16 cm instead of 100 mm × 100 mm; (2) the sample was immersed in oil for 25 seconds instead of 10 seconds. The test for free shrinkage was conducted at 95 °C, 105 °C and 115 °C and the shrink values were measured in both the machine direction (MD) and transverse direction (TD). In the test, Examples 23-28 demonstrated improved low temperature shrinkage compared to Comparative Example M, and the shrinkage ratios of Examples 23-28 at low temperature are higher than those at high temperature. The results are shown in Figure 9.

## Elmendorf Tear Strength

Elmendorf Tear Strength is a measure of the force required to propagate a tear cut in a film. The average force required to continue a tongue-type tear in a film is determined by measuring the work done in tearing it through a fixed distance. The tester consists of a sector-shaped pendulum carrying a clamp that is in alignment with a fixed clamp when the pendulum is in the raised starting position, with maximum potential energy. The test strip is fastened in the clamps and the tear is started by a slit cut in the test strip between the clamps. The pendulum is released and the test strip is torn as the moving clamp moves away from the fixed clamp. Elmendorf tear strength can be measured in Newtons (N) in accordance with the following standard methods: ASTM D-1922, ASTM D 1424 and TAPPI-T-414 om-88.

The oriented films made with polymers disclosed herein often demonstrate high Elmendorf tear resistance. In some embodiments, the Elmendorf tear resistance of the transverse direction (TD) of oriented films is higher than 0.34 N, higher than 0.45 N, higher than 0.5 N, higher than 0.55 N, or higher than 0.6 N, when stretch ratio is 4.5 x4.5 and stretched at 100 °C.

Comparative Example M and Examples 23-28 were also analyzed for their Elmendorf tear resistance measured in both the machine direction (MD) and the transverse direction (TD) following the steps described in ASTM D-1922, which is incorporated herein by reference in its entirety. The results are shown in Figure 10. It can be seen that Examples 23-28 possess increased tear strength in the transverse direction (TD), which help to reduce film breaks during packaging process and in subsequent handling and transportation.

## Ultimate Tensile Strength and Ultimate Elongation

The ultimate tensile strength herein refers to the force per unit area (MPa or psi) required to break a film. The rate at which a test strip is pulled apart in the test can range from 0.2 to 20 inches per minute and will influence the results. The ultimate tensile strength can be measured according to the steps described in ASTM D-882 or ISO 527.

In some embodiments, the ultimate tensile strength of the oriented films disclosed herein in the machine direction (MD) is at least 20 MPa, at least 30 MPa, at least 35 MPa, at least 40 MPa, at least 45 MPa, at least 50 MPa, at least 55 MPa, at least 60 MPa, or at least 65 MPa. In some embodiments, the ultimate tensile strength of the oriented films disclosed herein in the transverse direction (TD) is at least 20 MPa, at least 30 MPa, at least 35 MPa, at least 40 MPa, at least 45 MPa, at least 50 MPa, at least 55 MPa, at least 60 MPa, at least 65 MPa, at least 70 MPa, or at least 75 MPa.

The ultimate elongation herein refers to the percentage increase in length that occurs before a film breaks under tension and is often expressed as percentage of the original dimension of the film. In some embodiments, the ultimate elongation is measured according to the steps described in ASTM D-882.

In some embodiments, the ultimate elongation of the oriented films disclosed herein in the machine direction (MD) is at least 100 %, at least 110 %, at least 120 %, at least 130 %, at least 140 %, at least 150 %, at least 160 %, at least 170 %, at least 180 %, or at least 190 % of the original dimension of the oriented films. In some embodiments, the ultimate elongation of the transverse direction (TD) is at least 100%, at least 110%, at least 120%, at least 130%, at least 140%, at least 150%, at least 190%, or at least 200% of the original dimension of the film.

Comparative Example M and Examples 23-28 were also analyzed for their tensile properties following the steps described in ASTM D-882. The results of the ultimate tensile strength and the ultimate tensile elongation are shown in Figure 11 and Figure 12, respectively.

## Heat Seal Strength

The heat seal strength herein refers to the force required to pull a heat seal apart and is usually expressed as the peak load (N) at specified seal temperatures. Heat seal strength can be controlled by the composition of one or more layers of the oriented films disclosed herein. In some embodiments, the heat seal strength of the oriented films disclosed herein is measured according to the steps described in ASTM F-88. In some embodiments, the heat seal strength is measured by the following procedures: an oriented film disclosed herein is sealed by means of a coating layer, to a standard APET/CPET tray using a Microseal PA 201 (Packaging Automation Ltd, England) tray sealer at a temperature of 180 °C, and pressure of 80 psi for one second. Strips of the sealed film and tray were cut out at 90° to the seal, and the load required to pull the seal apart was measured using an Instron Model 4301 operating at a crosshead speed of 0.2 $mmin^{-1}$. The procedure was repeated and the mean value of 5 results were calculated.

The oriented films made with polymers disclosed herein tend to demonstrate higher heat seal strength. In some embodiments, the heat seal strength of the oriented films measured at 120 °C is higher than 4N, higher than 5N, higher than 6N, higher than 7N, higher than 8N, higher than 9N, and higher than 12N.

Comparative Example M and Examples 23-28 were also analyzed for their heat seal strength according to Dow standard test. The film samples are sized by a compressed air cutter and treated with a dyne pen. The sample is attached to the upper clamp at one end and attached to the lower clamp at the other end, with the treated side of the sample facing the operator. The sample is pushed into an upper seal bar and a lower seal bar by a slider to make a seal at a predetermined heat seal temperature. After the sample is sealed, it is labeled and placed in a plastic bag and conditioned for 24 hours before commencing the Seal Strength test.

A Zwick Tensile Tester is used for the Seal Strength Test with the following conditions:

Sample width: 25 mm

Force at the load cell: 0.2 kN

Dwell time: 0.5 second

Sealing pressure: 0.275 MPa

Conditioning time for the seals: > 24 hours

Before start, the upper and lower grip of the tester are brought to the set position. The sample is attached to the upper grip at one end and attached to the lower grip at the other end. The force is zeroed before the tester starts. Once the testing process completes, a report containing the results of the heat seal strength is printed out. The heat seal strength results are shown in Figure 13.

While the invention has been described with respect to a limited number of embodiments, the specific features of one embodiment should not be attributed to other embodiments disclosed herein. No single embodiment is representative of all aspects of the invention. In some embodiments, the compositions or methods may include numerous compounds or steps not mentioned herein. In other embodiments, the compositions or methods do not include, or are substantially free of, any compounds or steps not enumerated herein. Variations and modifications from the described embodiments exist. Finally, any number disclosed herein should be construed to mean approximate, regardless of whether the word "about" or "approximately" is used in describing the number. The appended claims intend to cover all those modifications and variations as falling within the scope of the invention.

## Claims

1. An oriented film comprising two outer layers and an inner layer, the two outer layers comprising a polyethylene; the inner layer comprising a polymer composition comprising at least one ethylene/$\alpha$-olefin interpolymer, and a second polymer wherein the ratio of the ethylene/$\alpha$-olefin interpolymer to the second polymer is from 1:10 to 10:1, wherein the ethylene/$\alpha$-olefin interpolymer is a block interpolymer that:

   (a) has a $M_w/M_n$ from 1.7 to 3.5, at least one melting point, $T_m$, in degrees Celsius, and a density, d, in g/cm$^3$ (grams/cubic centimetre), wherein the numerical values of $T_m$ and d correspond to the relationship:

$$T_m > -6553.3 + 13735(d) - 7051.7(d)^2,$$

   and
   (b) has a $M_w/M_n$ from 1.7 to 3.5, and is **characterized by** a heat of fusion, $\Delta$H in J/g, and a delta quantity, $\Delta$T, in degrees Celsius defined as the temperature difference between the tallest DSC peak and the tallest CRYSTAF peak, wherein the numerical values of $\Delta$T and $\Delta$H have the following relationships:

$$\Delta T > -0.1299(\Delta H) + 62.81$$

   for $\Delta$ H greater than zero and up to 130 J/g, $\Delta T > 48$ °C for $\Delta$H greater than 130 J/g,
   wherein the CRYSTAF peak is determined using at least 5 percent of the cumulative polymer, and if less than 5 percent of the polymer has an identifiable CRYSTAF peak, then the CRYSTAF temperature is 30 °C; and
   (c) has an elastic recovery, Re, in percent at 300 percent strain and 1 cycle measured with a compression-molded film of the ethylene/$\alpha$-olefin interpolymer, and has a density, d, in g/cm$^3$ (grams/cubic centimeter), wherein the numerical values of Re and d satisfy the following relationship when the ethylene/$\alpha$-olefin interpolymer is substantially free of a cross-linked phase:

$$Re > 1481\text{-}1629(d);$$

   and
   (g) has an average block index greater than zero and up to 1.0 and a molecular weight distribution, $M_w/M_n$ , greater than 1.3, wherein the shrink tension of the oriented film stretched at 110 °C is less than 3 MPa.

2. The oriented film of claim 1, wherein the ethylene/$\alpha$-olefin interpolymer (d) has a comonomer content of the TREF fraction which elutes between 40 °C and 130°C greater than or equal to the quantity
   (-0.2013) T + 21.07, wherein T is the numerical value of the peak ATREF elution temperature, measured in °C; or

   (e) has a storage modulus at 25 °C, G'(25 °C), and a storage modulus at 100 °C, G'(100 °C), wherein the ratio of G'(25 °C) to G'(100 °C) is from 1:1 to 10:1; or
   (f) has at least one molecular fraction which elutes between 40°C and 130°C when fractioned using TREF, **characterized in that** the fraction has a block index of at least 0.5 and up to 1 and a molecular weight distribution, $M_w/M_n$, greater than 1.3.

3. The oriented film of claim 1, wherein the shrink tension of the oriented film stretched at 110 °C is less than 2.5 MPa.

4. The oriented film of claim 1, wherein the second polymer is selected from the group consisting of polyethylene, polypropylene, polybutylene, poly(ethylene-co-vinyl acetate), polyvinyl chloride, ethylene-propylene copolymer, a mixed polymer of ethylene and vinyl acetate, a styrene-butadiene mixed polymers and combinations thereof.

5. The oriented film of claim 4, wherein the second polymer is a polyethylene.

6. The oriented film of any of claims 1 and 3-5, wherein the % shrinkage of the oriented film is at least 7.5% at a shrinkage temperature of 95 °C per ASTM D-2732.

7. The oriented film of any one of claims 1 and 3-5, wherein the Elmendorf tear resistance of the oriented film in the transverse direction is at least 0.05 N per ASTM D-1922 when stretch ratio is 4.5 x 4.5 and stretched at 100 °C.

8. The oriented film of any of claims 1 and 3-5, wherein the density of the ethylene/a-olefin interpolymer is from 0.85 $g/cm^3$ (g/cc) to 0.92 $g/cm^3$ (g/cc).

9. The oriented film of any of claims 1 and 3-5, wherein the melt index ($I_2$) of the ethylene/$\alpha$-olefin interpolymer is from 0.2 g/10 min to 15 g/10 min.

10. The oriented film of any of claims 1 and 3-5, wherein the oriented film is a biaxially oriented film.

11. The oriented film of any of claims 1 and 3-5, wherein the oriented film comprises three or more layers.

12. The oriented film of claim 1, wherein the polyethylene in the two outer layers is a linear low density polyethylene.

13. The oriented film of claim 1 further comprising a sealant layer, a backing layer, a tie layer or a combination thereof.

14. The oriented film of any one of claims 1 and 3-5, wherein the ethylene/$\alpha$-olefin interpolymer is an ethylene/$C_4$-$C_8$ $\alpha$-olefin interpolymer.

15. A process of making an oriented film as defined in any one of claims 1-14, comprising the steps of:

(a) providing a polymer composition comprising at least one ethylene/$\alpha$-olefin interpolymer;
(b) converting the polymer composition into a primary tape using a first film forming step;
(c) quenching the primary tape at a temperature of about 15 °C to about 25 °C;
(d) reheating the primary tape; and
(e) converting the primary tape to the oriented film using a second film forming step,

wherein the ethylene/$\alpha$-olefin interpolymer is a block interpolymer as defined in said claims 1-14.

**Patentansprüche**

1. Gereckte Folie umfassend zwei äußere Schichten und eine innere Schicht, die zwei äußeren Schichten umfassend ein Polyethylen; die innere Schicht umfassend eine Polymerzusammensetzung umfassend mindestens ein Ethylen/$\alpha$-Olefin-Interpolymer und ein zweites Polymer, wobei das Verhältnis des Ethylen/$\alpha$-Olefin-Interpolymers zu dem zweiten Polymer von 1:10 bis 10:1 ist, wobei das Ethylen/$\alpha$-Olefin-Interpolymer ein Blockinterpolymer ist, das:

(a) eine $M_w/M_n$ von 1,7 bis 3,5 hat, mindestens einen Schmelzpunkt, $T_m$, in Grad Celsius, und eine Dichte, d, in $g/cm^3$ (Gramm/Kubikzentimeter), wobei der nummerische Wert von $T_m$ und d dem Verhältnis entspricht:

$$T_m > -6553,3 + 13735(d) - 7051,7(d)^2,$$

und
(b) eine $M_w/M_n$ von 1,7 bis 3,5 hat, und **gekennzeichnet ist durch** eine Schmelzwärme, $\Delta H$ in J/g und eine Deltamenge, $\Delta T$, in Grad Celsius, definiert als Temperaturdifferenz zwischen dem höchsten DSC-Peak und dem höchsten CRYSTAF-Peak, wobei die numerischen Werte von $\Delta T$ und $\Delta H$ die folgenden Verhältnisse haben:

$$\Delta T > -0{,}1299(\Delta H) + 62{,}81$$

für $\Delta H$ größer als null und bis zu 130 J/g

$$\Delta T \geq 48\ °C$$

für $\Delta H$ größer als 130 J/g, wobei der CRYSTAF-Peak unter Verwendung von mindestens 5 % des kumulativen Polymers bestimmt wird, und falls weniger als 5 % des Polymers einen identifizierbaren CRYSTAF-Peak aufweist, dann ist die CRYSTAF-Temperatur 30 °C; und

(c) eine elastische Erholung, Re, hat, in Prozent bei 300 % Belastung und 1 Durchlauf, gemessen mit einer formgepressten Folie des Ethylen/$\alpha$-Olefin-Interpolymers, und eine Dichte, d, in g/cm$^3$ (Gramm/Kubikzentimeter) hat, wobei die numerischen Werte von Re und d dem folgenden Verhältnis genügen, wenn das Ethylen/$\alpha$-Olefin-Interpolymer im Wesentlichen frei von einer vernetzten Phase ist:

$$Re > 1481 - 1629(d);$$

und

(g) einen durchschnittlichen Blockindex größer als null und bis zu 1,0 hat und eine Molekulargewichtsverteilung, $M_w/M_n$, größer als 1,3, wobei die Schrumpfspannung der gereckten Folie, gestreckt bei 110 °C, weniger als 3 MPa ist.

**2.** Gereckte Folie nach Anspruch 1, wobei das Ethylen/$\alpha$-Olefin-Interpolymer (d) einen Comonomergehalt der TREF-Fraktion, die zwischen 40 °C and 130 °C größer als oder gleich der Menge (-0,2013)T + 21,07 eluiert, wobei T der numerische Wert der ATREF-Peakelutionstemperatur, gemessen in °C ist; oder (e) ein Speichermodul bei 25 °C, G'(25 °C) hat und ein Speichermodul bei 100 °C, G'(100 °C), wobei das Verhältnis von G'(25 °C) zu G'(100 °C) von 1:1 bis 10:1 ist; oder

(f) mindestens eine molekulare Fraktion hat, die zwischen 40 °C und 130 °C eluiert, wenn unter Verwendung von TREF fraktioniert, **gekennzeichnet dadurch, dass** die Fraktion einen Blockindex von mindestens 0,5 und bis zu 1 hat und eine Molekulargewichtsverteilung, $M_w/M_n$, größer als 1,3.

**3.** Gereckte Folie nach Anspruch 1, wobei die Schrumpfspannung der gereckten Folie, gestreckt bei 110 °C, weniger als 2,5 MPa ist.

**4.** Gereckte Folie nach Anspruch 1, wobei das zweite Polymer ausgewählt ist aus der Gruppe bestehend aus Polyethylen, Polypropylen, Polybutylen, Poly(ethylen-co-vinyl-acetat), Polyvinylchlorid, Ethylen-Propylen-Copolymer, ein gemischtes Polymer von Ethylen und Vinylacetat, einem Styren-Butadiengemischten Polymer und Kombinationen davon.

**5.** Gereckte Folie nach Anspruch 4, wobei das zweite Polymer Polyethylen ist.

**6.** Gereckte Folie nach einem der Ansprüche 1 und 3-5, wobei die % Schrumpfung der gereckten Folie mindestens 7,5 % bei einer Schrumpfungstemperatur von 95 °C durch ASTM D-2732 ist.

**7.** Gereckte Folie nach einem der Ansprüche 1 und 3-5, wobei die Elmendorf Rissfestigkeit der gereckten Folie in Querrichtung mindestens 0,05 N durch ASTM D-1922 ist, wenn das Streckverhältnis 4,5 x 4,5 ist und gestreckt bei 100 °C.

**8.** Gereckte Folie nach einem der Ansprüche 1 und 3-5, wobei die Dichte des Ethylen/$\alpha$-Olefin-Interpolymers von 0,85 g/cm$^3$ (g/ccm) bis 0,92 g/cm$^3$ (g/ccm) ist.

**9.** Gereckte Folie nach einem der Ansprüche 1 und 3-5, wobei der Schmelzindex ($I_2$) des Ethylen/$\alpha$-Olefin-Interpolymers von 0,2 g/10 min bis 15 g/10 min ist.

**10.** Gereckte Folie nach einem der Ansprüche 1 und 3-5, wobei die gereckte Folie eine biaxial gereckte Folie ist.

**11.** Gereckte Folie nach einem der Ansprüche 1 und 3-5, wobei die gereckte Folie drei oder mehr Schichten umfasst.

**12.** Gereckte Folie nach Anspruch 1, wobei das Polyethylen in den zwei äußeren Schichten ein lineares Polyethylen geringer Dichte ist.

**13.** Gereckte Folie nach Anspruch 1 ferner umfassend eine Dichtmittelschicht, eine Trägerschicht, eine Bindeschicht oder eine Kombination davon.

**14.** Gereckte Folie nach einem der Ansprüche 1 und 3-5, wobei das Ethylen/$\alpha$-Olefin-Interpolymer ein Ethylen/$C_4$-$C_8$ $\alpha$-Olefin-Interpolymer ist.

**15.** Verfahren zur Herstellung einer gedeckten Folie wie in einem der Ansprüche 1-14 definiert, umfassend die Schritte von:

(a) Bereitstellen einer Polymerzusammensetzung umfassend mindestens ein Ethylen/$\alpha$-Olefin-Interpolymer;
(b) Verarbeiten der Polymerzusammensetzung in ein Primärband unter Anwendung eines ersten Folien-bildenden Schritts;
(c) Abkühlen des Primärbands bei einer Temperatur von etwa 15 °C bis etwa 25 °C;
(d) Wiedererwärmen des Primärbands; und
(e) Verarbeiten des Primärbands zu der gereckten Folie unter Anwendung eines zweiten Folien-bildenden Schritts,

wobei das Ethylen/$\alpha$-Olefin-Interpolymer ein Blockinterpolymer wie in den Ansprüche 1-14 definiert, ist.

## Revendications

**1.** Un film orienté comprenant deux couches externes et une couche interne, les deux couches externes comprenant un polyéthylène ; la couche interne comprenant une composition de polymères comprenant au moins un interpolymère d'éthylène/$\alpha$-oléfine, et un deuxième polymère dans lequel le rapport de l'interpolymère d'éthylène/$\alpha$-oléfine au deuxième polymère va de 1/10 à 10/1, dans lequel l'interpolymère d'éthylène/$\alpha$-oléfine est un interpolymère séquencé qui :

(a) présente un $M_w/M_n$ allant de 1,7 à 3,5, au moins un point de fusion, $T_m$, en degrés Celsius, et une masse volumique, d, en g/cm$^3$ (grammes/centimètre cube), dans lequel les valeurs numériques de $T_m$ et d correspondent à la relation :

$$T_m > -6\,553{,}3 + 13\,735(d) - 7\,051{,}7(d)^2,$$

et
(b) présente un $M_w/M_n$ allant de 1,7 à 3,5, et est **caractérisé par** une chaleur de fusion, $\Delta H$ en J/g, et une quantité delta, $\Delta T$, en degrés Celsius définie comme la différence de température entre le pic DSC le plus haut et le pic CRYSTAF le plus haut, dans lequel les valeurs numériques de $\Delta T$ et $\Delta H$ présentent les relations suivantes :

$$\Delta T > -0{,}1299(\Delta H) + 62{,}81$$

pour $\Delta H$ supérieure à zéro et allant jusqu'à 130 J/g,

$$\Delta T > 48\ °C$$

pour $\Delta H$ supérieure à 130 J/g, dans lequel le pic CRYSTAF est déterminé à l'aide d'au moins 5 pour cent du polymère cumulé, et si moins de 5 pour cent du polymère présente un pic CRYSTAF identifiable, alors la température CRYSTAF est de 30 °C ; et
(c) présente une recouvrance élastique, Re, en pourcentage pour une déformation de 300 pour cent et 1 cycle

mesurée avec un film moulé par compression de l'interpolymère d'éthylène/α-oléfine, et présente une masse volumique, d, en g/cm[3] (grammes/centimètre cube), dans lequel les valeurs numériques de Re et d satisfont à la relation suivante lorsque l'interpolymère d'éthylène/α-oléfine est substantiellement exempt de phase réticulée :

$$Re > 1\,481 - 1\,629(d) ;$$

et

(g) présente un indice de séquence moyen supérieur à zéro et allant jusqu'à 1,0 et une distribution des masses moléculaires, $M_w/M_n$, supérieure à 1,3, dans lequel la tension de retrait du film orienté étiré à 110 °C est inférieure à 3 MPa.

**2.** Le film orienté de la revendication 1, dans lequel l'interpolymère d'éthylène/α-oléfine (d) présente une teneur en comonomère de la fraction TREF qui s'élue entre 40 °C et 130 °C supérieure ou égale à la quantité (-0,2013)T + 21,07, dans lequel T est la valeur numérique de la température d'élution ATREF de pic, mesurée en °C ; ou

(e) présente un module de conservation à 25 °C, G'(25 °C), et un module de conservation à 100 °C, G'(100 °C), dans lequel le rapport de G'(25 °C) à G'(100 °C) va de 1/1 à 10/1 ; ou
(f) présente au moins une fraction moléculaire qui s'élue entre 40 °C et 130 °C lorsqu'elle est fractionnée à l'aide de TREF, **caractérisée en ce que** la fraction présente un indice de séquence d'au moins 0,5 et allant jusqu'à 1 et une distribution des masses moléculaires, $M_w/M_n$, supérieure à 1,3.

**3.** Le film orienté de la revendication 1, dans lequel la tension de retrait du film orienté étiré à 110 °C est inférieure à 2,5 MPa.

**4.** Le film orienté de la revendication 1, dans lequel le deuxième polymère est sélectionné dans le groupe constitué du polyéthylène, du polypropylène, du polybutylène, du poly(éthylène-co(acétate de vinyle)), du poly(chlorure de vinyle), d'un copolymère d'éthylène-propylène, d'un polymère mixte d'éthylène et d'acétate de vinyle, de polymères mixtes de styrène-butadiène et de combinaisons de ceux-ci.

**5.** Le film orienté de la revendication 4, dans lequel le deuxième polymère est un polyéthylène.

**6.** Le film orienté de n'importe lesquelles des revendications 1 et 3 à 5, dans lequel la rétraction en % du film orienté est d'au moins 7,5 % à une température de rétraction de 95 °C d'après l'ASTM D-2732.

**7.** Le film orienté de n'importe lesquelles des revendications 1 et 3 à 5, dans lequel la résistance à la déchirure Elmendorf du film orienté dans la direction transversale est d'au moins 0,05 N d'après l'ASTM D-1922 lorsque le taux d'étirage est de 4,5 x 4,5 et étiré à 100 °C.

**8.** Le film orienté de n'importe lesquelles des revendications 1 et 3 à 5, dans lequel la masse volumique de l'interpolymère d'éthylène/α-oléfine va de 0,85 g/cm[3] (g/cc) à 0,92 g/cm[3] (g/cc).

**9.** Le film orienté de n'importe lesquelles des revendications 1 et 3 à 5, dans lequel l'indice de fluidité ($I_2$) de l'interpolymère d'éthylène/α-oléfine va de 0,2 g/10 min à 15 g/10 min.

**10.** Le film orienté de n'importe lesquelles des revendications 1 et 3 à 5, le film orienté étant un film orienté biaxialement.

**11.** Le film orienté de n'importe lesquelles des revendications 1 et 3 à 5, le film orienté comprenant trois couches ou plus.

**12.** Le film orienté de la revendication 1, dans lequel le polyéthylène dans les deux couches externes est un polyéthylène basse densité linéaire.

**13.** Le film orienté de la revendication 1 comprenant en outre une couche d'étanchéité, une couche de support, une couche de liaison ou une combinaison de celles-ci.

**14.** Le film orienté de n'importe lesquelles des revendications 1 et 3 à 5, dans lequel l'interpolymère d'éthylène/α-oléfine est un interpolymère d'éthylène/α-oléfine en $C_4$ à $C_8$.

**15.** Un procédé de réalisation d'un film orienté tel que défini dans n'importe laquelle des revendications 1 à 14, comprenant les étapes consistant à :

(a) fournir une composition de polymères comprenant au moins un interpolymère d'éthylène/$\alpha$-oléfine ;
(b) convertir la composition de polymères en un ruban primaire à l'aide d'une première étape de formation de film ;
(c) tremper le ruban primaire à une température d'environ 15 °C jusqu'à environ 25 °C;
(d) réchauffer le ruban primaire ; et
(e) convertir le ruban primaire en le film orienté à l'aide d'une deuxième étape de formation de film,

dans lequel l'interpolymère d'éthylène/$\alpha$-oléfine est un interpolymère séquencé tel que défini dans lesdites revendications 1 à 14.

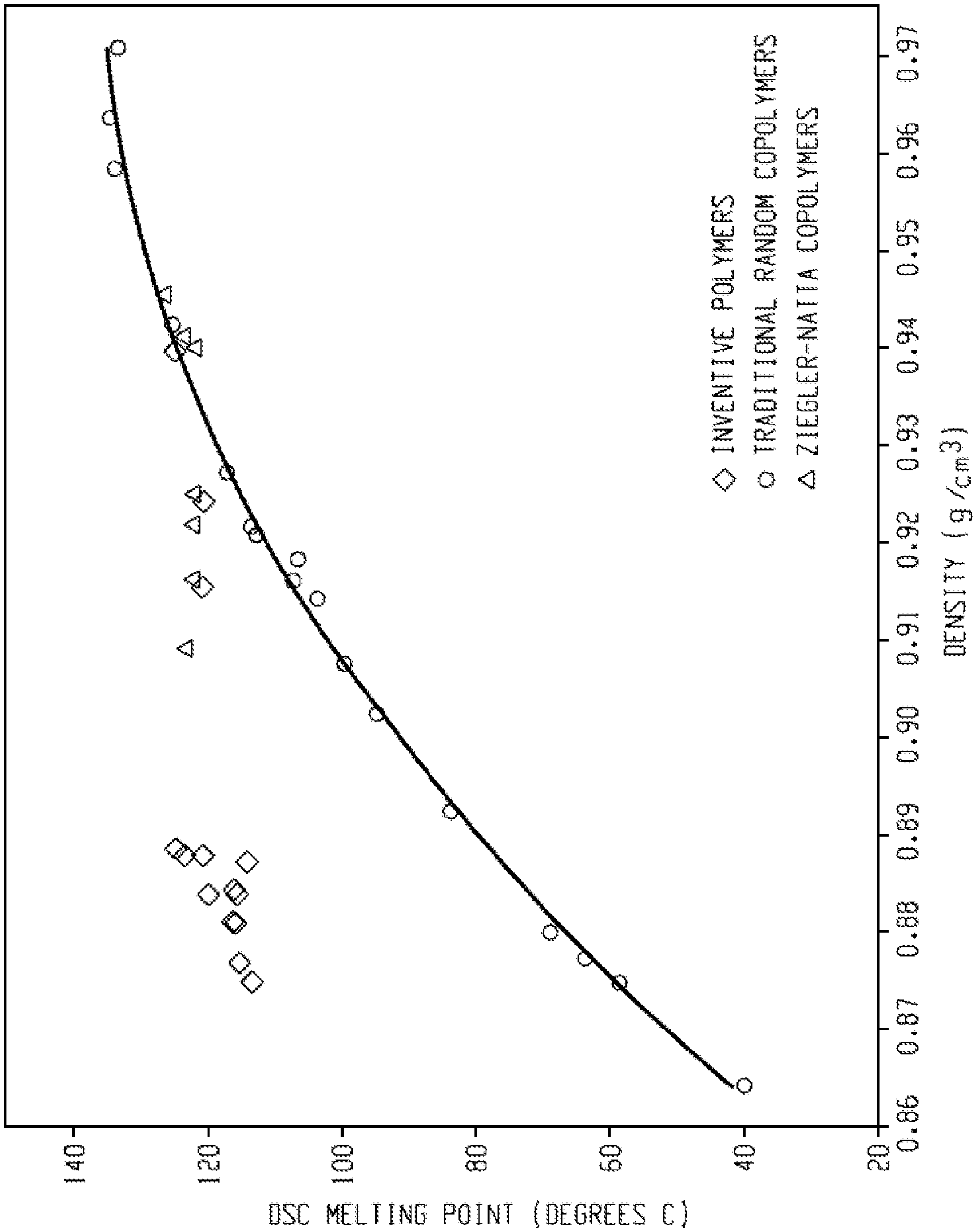

◇ INVENTIVE POLYMERS
○ TRADITIONAL RANDOM COPOLYMERS
△ ZIEGLER-NATTA COPOLYMERS
DSC MELTING POINT (DEGREES C)
DENSITY (g/cm3)
140
120
100
80
60
40
20
0.86
0.87
0.88
0.89
0.90
0.91
0.92
0.93
0.94
0.95
0.96
0.97


Fig. 1

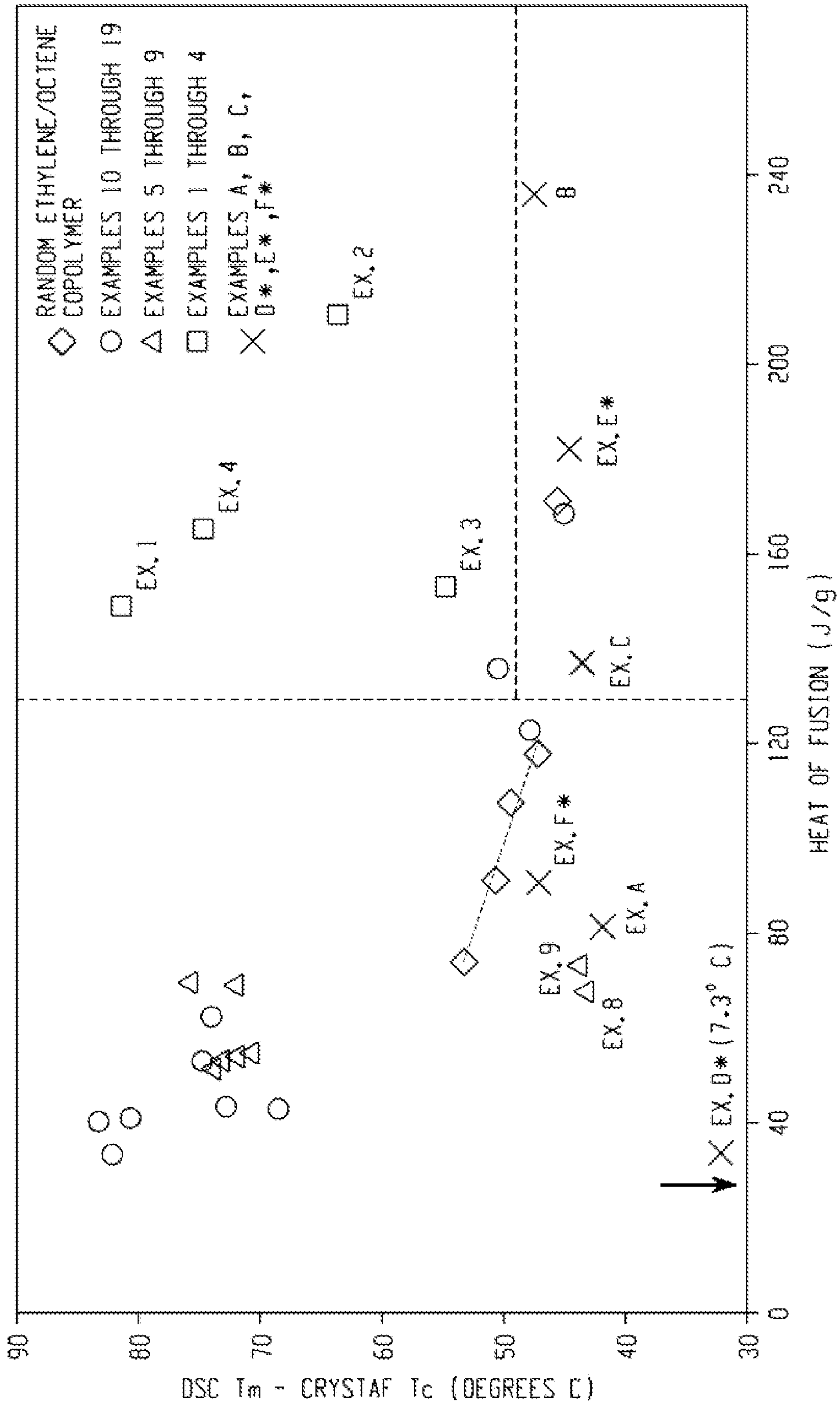
RANDOM ETHYLENE/OCTENE COPOLYMER
EXAMPLES 10 THROUGH 19
EXAMPLES 5 THROUGH 9
EXAMPLES 1 THROUGH 4
EXAMPLES A, B, C, D*, E*, F*
EX.1
EX.2
EX.3
EX.4
EX.8
EX.9
EX.A
B
EX.C
EX.D* (7.3° C)
EX.E*
EX.F*
DSC Tm - CRYSTAF Tc (DEGREES C)
HEAT OF FUSION (J/g)
90
80
70
60
50
40
30
0
40
80
120
160
200
240

Fig. 2

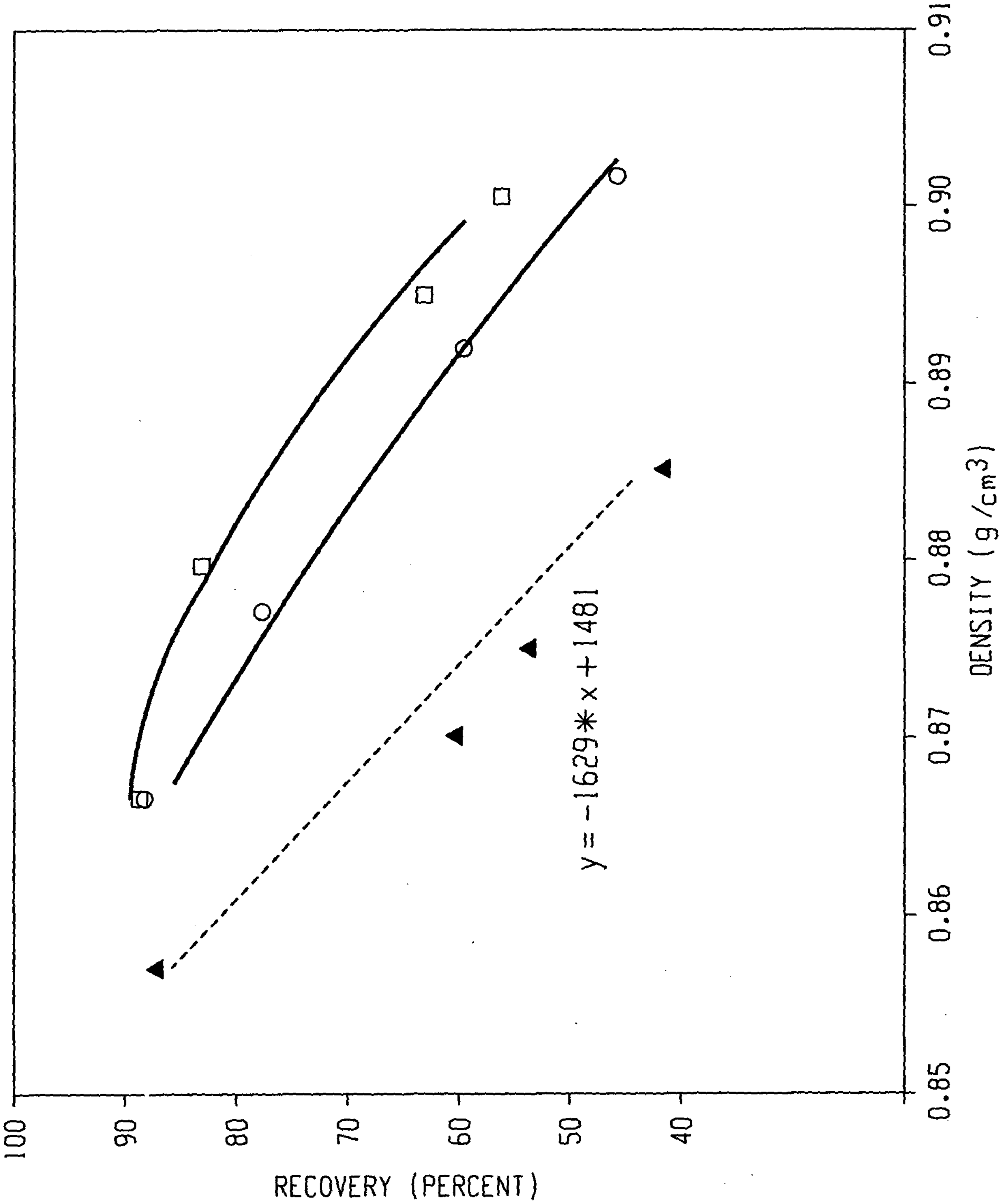

RECOVERY (PERCENT)
100
90
80
70
60
50
40
DENSITY (g/cm3)
0.85
0.86
0.87
0.88
0.89
0.90
0.91
y = -1629 * x + 1481

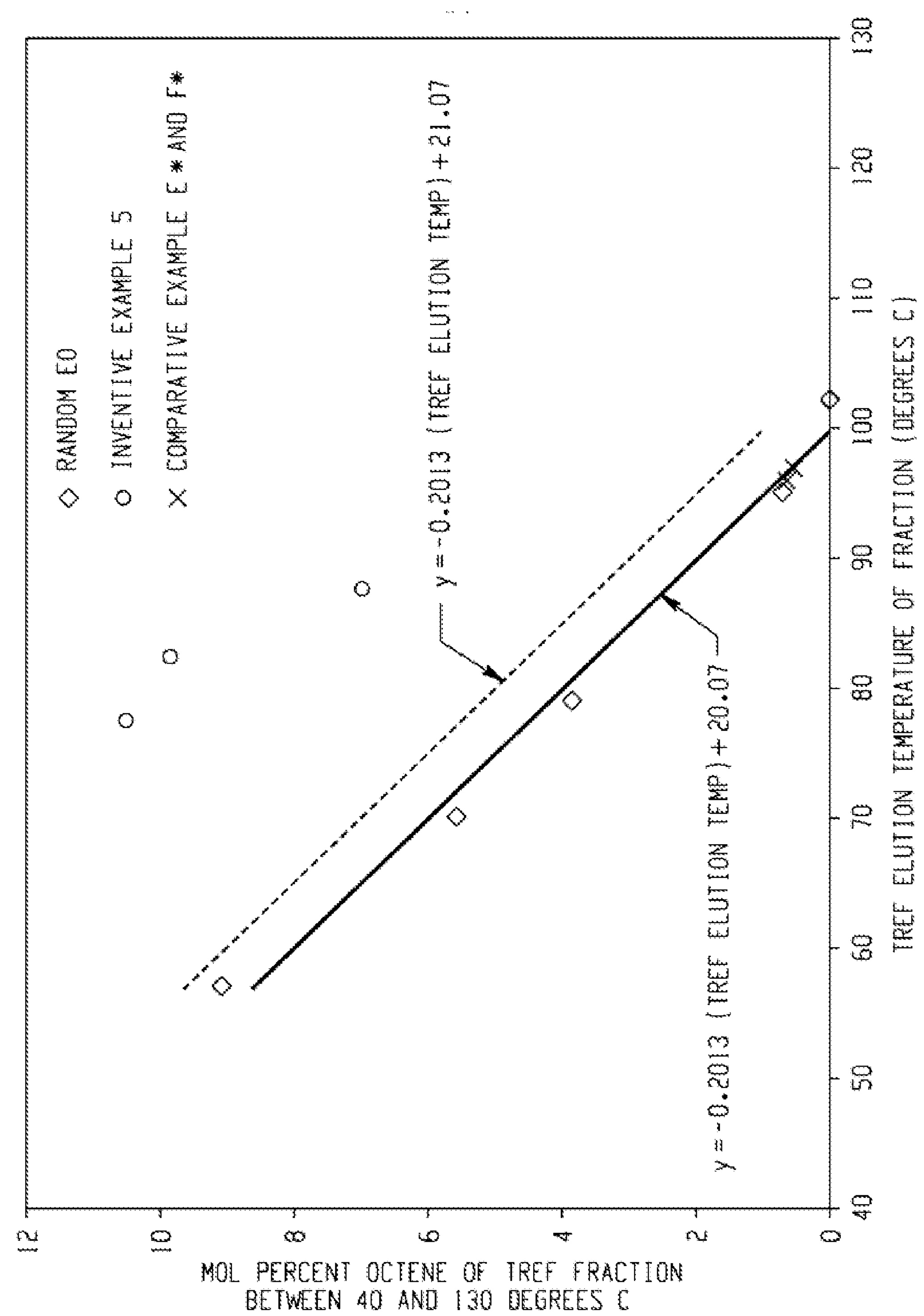
RANDOM EO
INVENTIVE EXAMPLE 5
COMPARATIVE EXAMPLE E * AND F*
y = -0.2013 (TREF ELUTION TEMP) + 21.07
y = -0.2013 (TREF ELUTION TEMP) + 20.07
MOL PERCENT OCTENE OF TREF FRACTION BETWEEN 40 AND 130 DEGREES C
TREF ELUTION TEMPERATURE OF FRACTION (DEGREES C)
0
2
4
6
8
10
12
40
50
60
70
80
90
100
110
120
130

Fig. 4

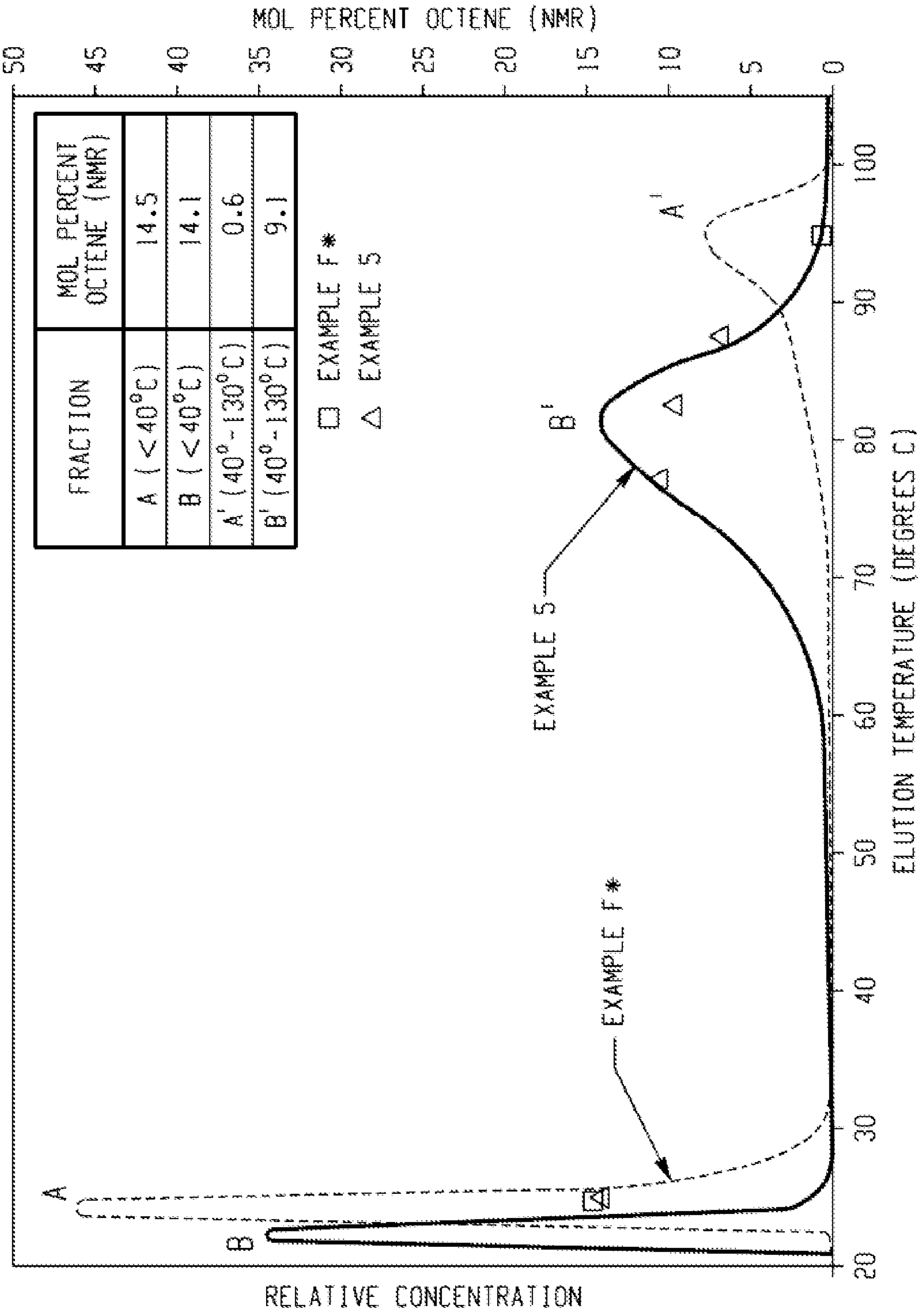
MOL PERCENT OCTENE (NMR)
50
45
40
35
30
25
20
15
10
5
0
FRACTION
MOL PERCENT OCTENE (NMR)
A (<40°C)
14.5
B (<40°C)
14.1
A' (40°-130°C)
0.6
B' (40°-130°C)
9.1
□ EXAMPLE F*
△ EXAMPLE 5
A
B
A'
B'
EXAMPLE 5
EXAMPLE F*
RELATIVE CONCENTRATION
20
30
40
50
60
70
80
90
100
ELUTION TEMPERATURE (DEGREES C)

Fig. 5

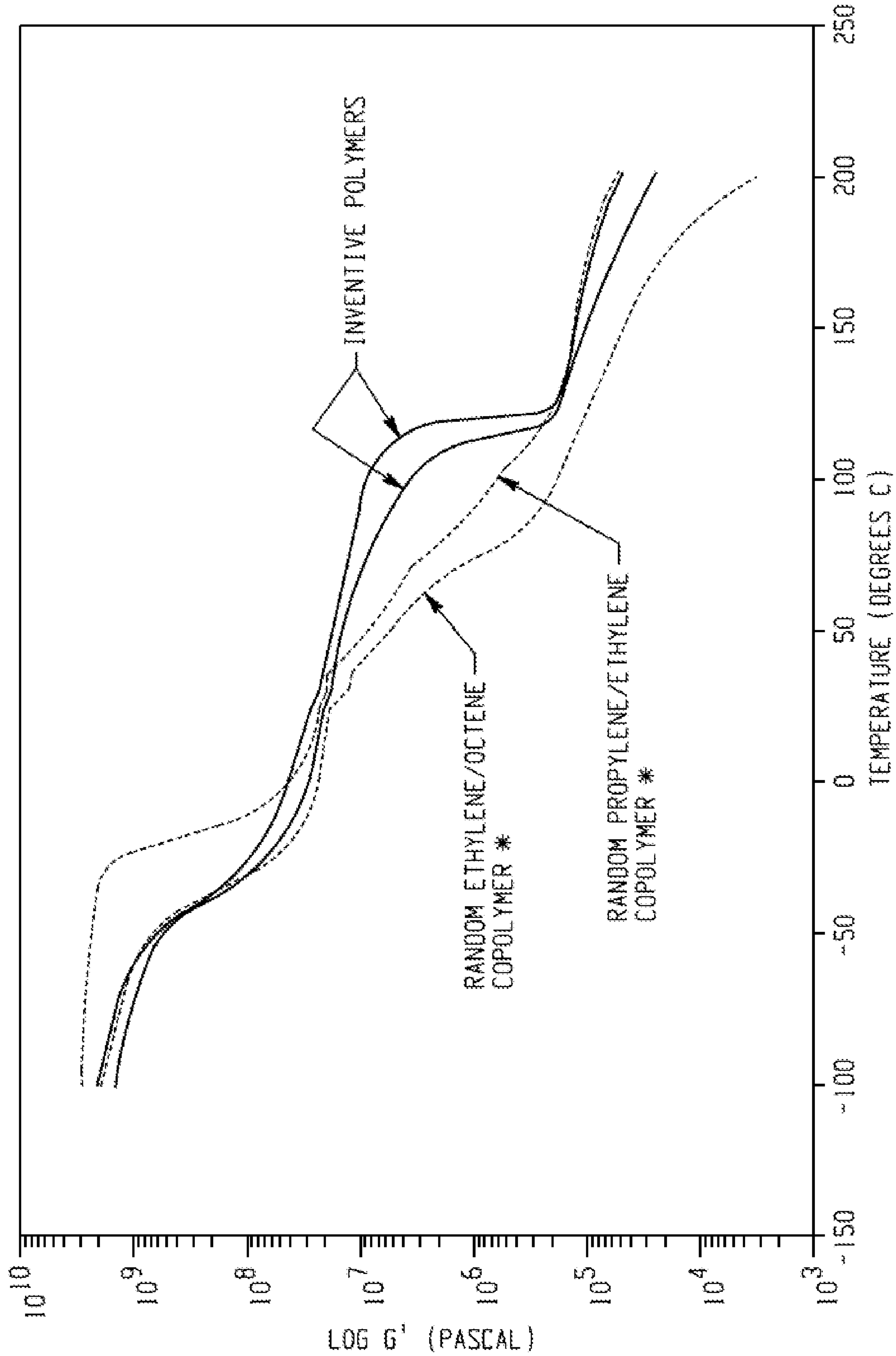
INVENTIVE POLYMERS
RANDOM ETHYLENE/OCTENE COPOLYMER *
RANDOM PROPYLENE/ETHYLENE COPOLYMER *
LOG G' (PASCAL)
$10^{10}$
$10^{9}$
$10^{8}$
$10^{7}$
$10^{6}$
$10^{5}$
$10^{4}$
$10^{3}$
TEMPERATURE (DEGREES C)
-150
-100
-50
0
50
100
150
200
250

Fig. 6

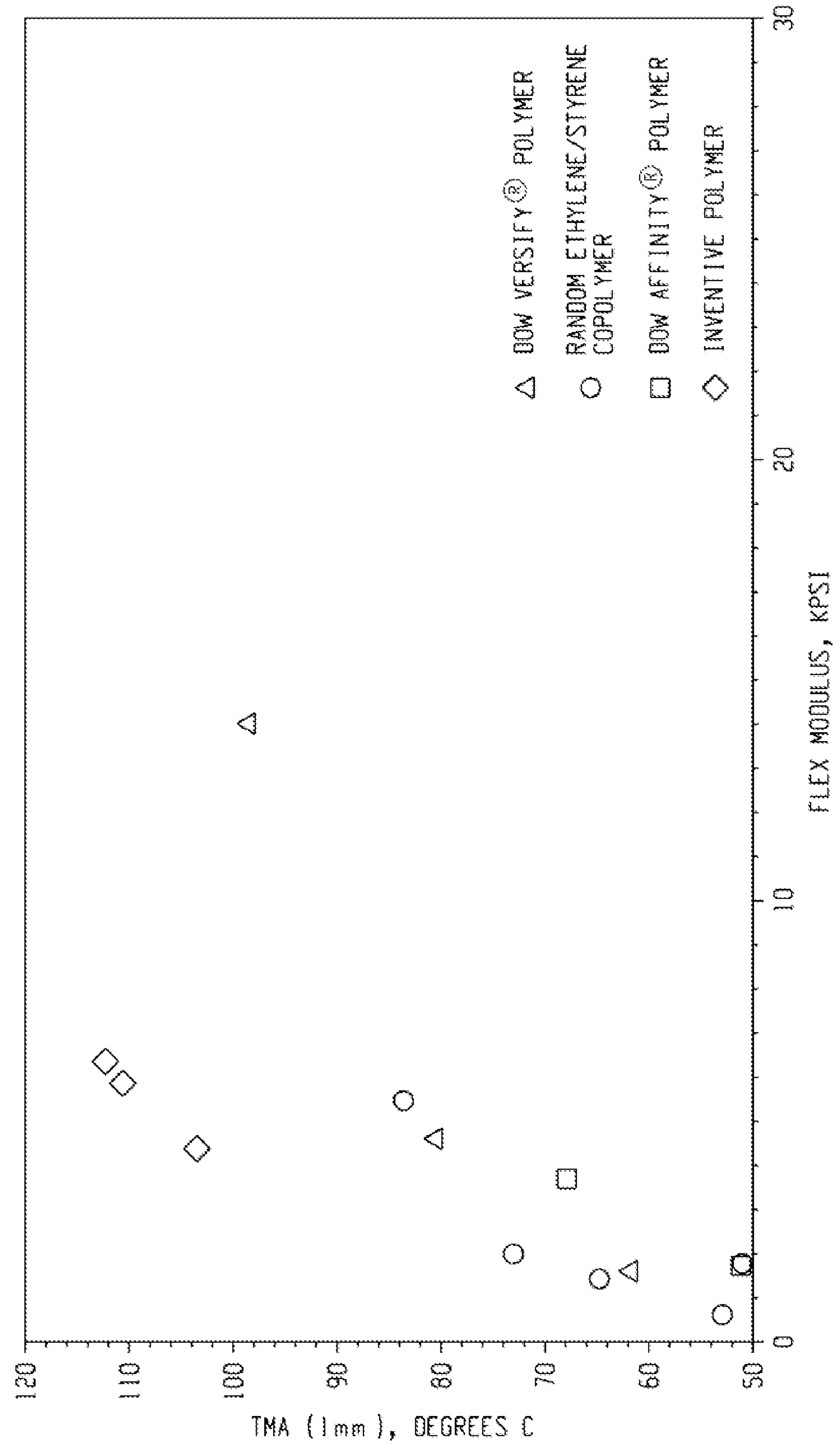
DOW VERSIFY® POLYMER
RANDOM ETHYLENE/STYRENE COPOLYMER
DOW AFFINITY® POLYMER
INVENTIVE POLYMER
TMA (1mm), DEGREES C
120
110
100
90
80
70
60
50
FLEX MODULUS, KPSI
0
10
20
30

Fig. 7

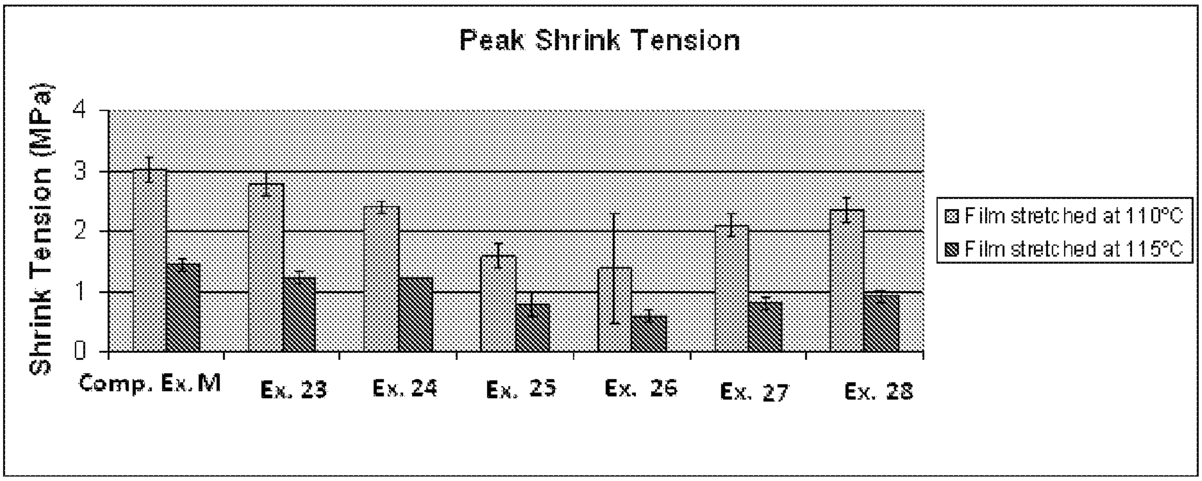
Peak Shrink Tension
Shrink Tension (MPa)
4
3
2
1
0
Comp. Ex. M
Ex. 23
Ex. 24
Ex. 25
Ex. 26
Ex. 27
Ex. 28
Film stretched at 110°C
Film stretched at 115°C

Fig. 8

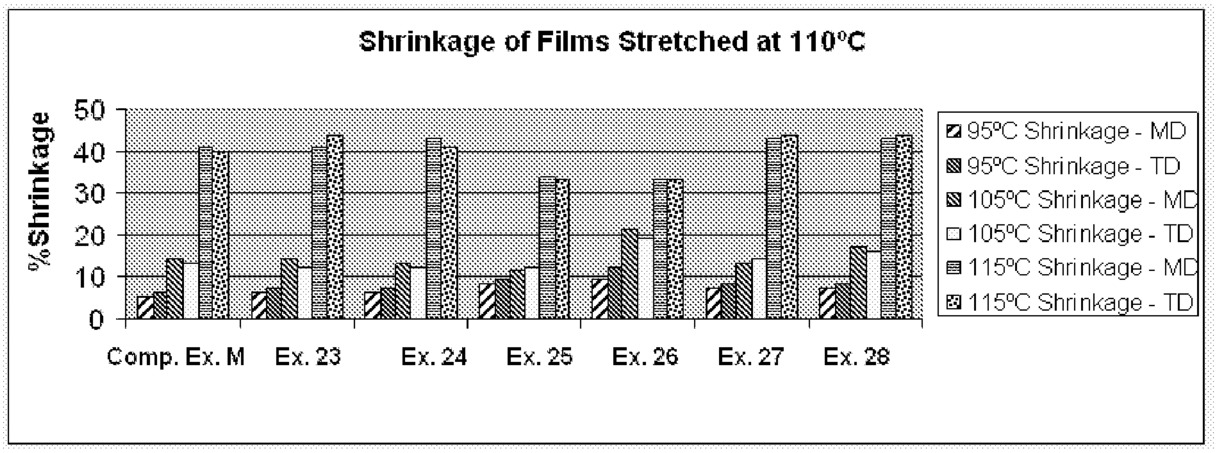
Shrinkage of Films Stretched at 110°C
%Shrinkage
50
40
30
20
10
0
Comp. Ex. M
Ex. 23
Ex. 24
Ex. 25
Ex. 26
Ex. 27
Ex. 28
95°C Shrinkage - MD
95°C Shrinkage - TD
105°C Shrinkage - MD
105°C Shrinkage - TD
115°C Shrinkage - MD
115°C Shrinkage - TD

Fig. 9

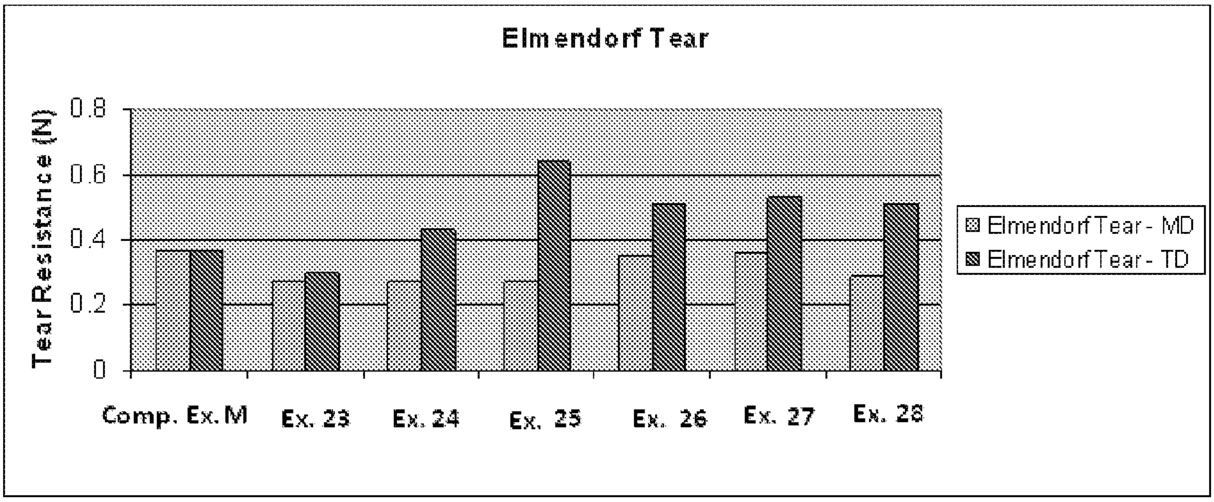
Elmendorf Tear
Tear Resistance (N)
0.8
0.6
0.4
0.2
0
Comp. Ex. M
Ex. 23
Ex. 24
Ex. 25
Ex. 26
Ex. 27
Ex. 28
Elmendorf Tear - MD
Elmendorf Tear - TD

Fig. 10

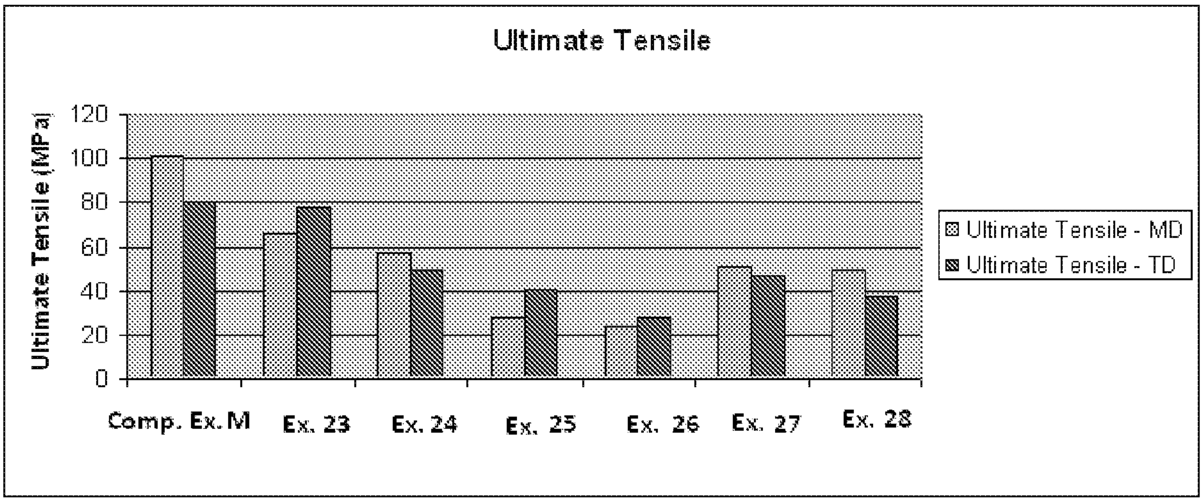
Ultimate Tensile
Ultimate Tensile (MPa)
120
100
80
60
40
20
0
Comp. Ex. M
Ex. 23
Ex. 24
Ex. 25
Ex. 26
Ex. 27
Ex. 28
Ultimate Tensile - MD
Ultimate Tensile - TD

Fig. 11

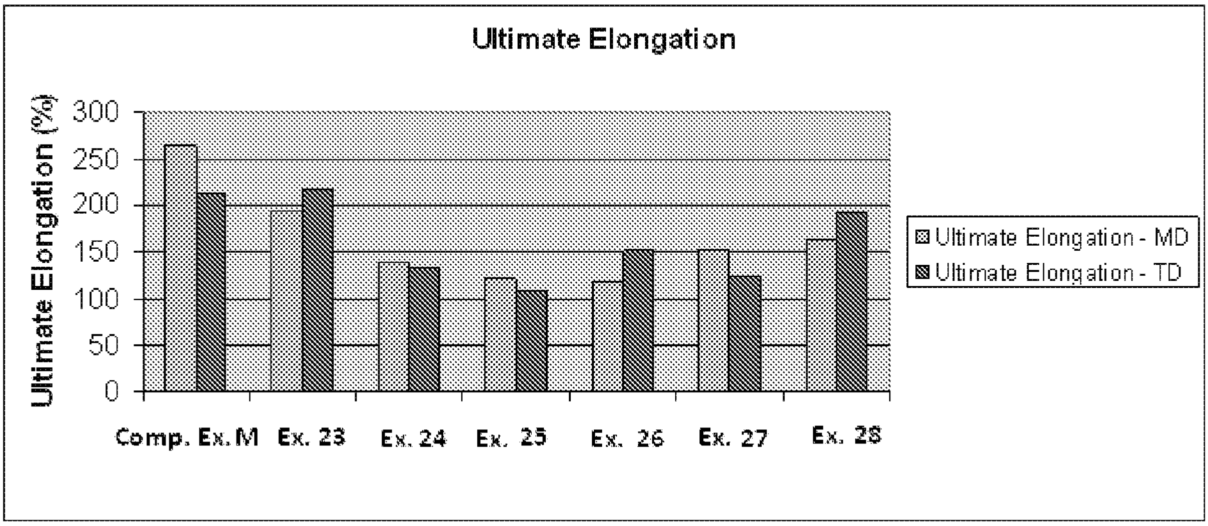
Ultimate Elongation
Ultimate Elongation (%)
300
250
200
150
100
50
0
Comp. Ex. M
Ex. 23
Ex. 24
Ex. 25
Ex. 26
Ex. 27
Ex. 28
Ultimate Elongation - MD
Ultimate Elongation - TD

Fig. 12

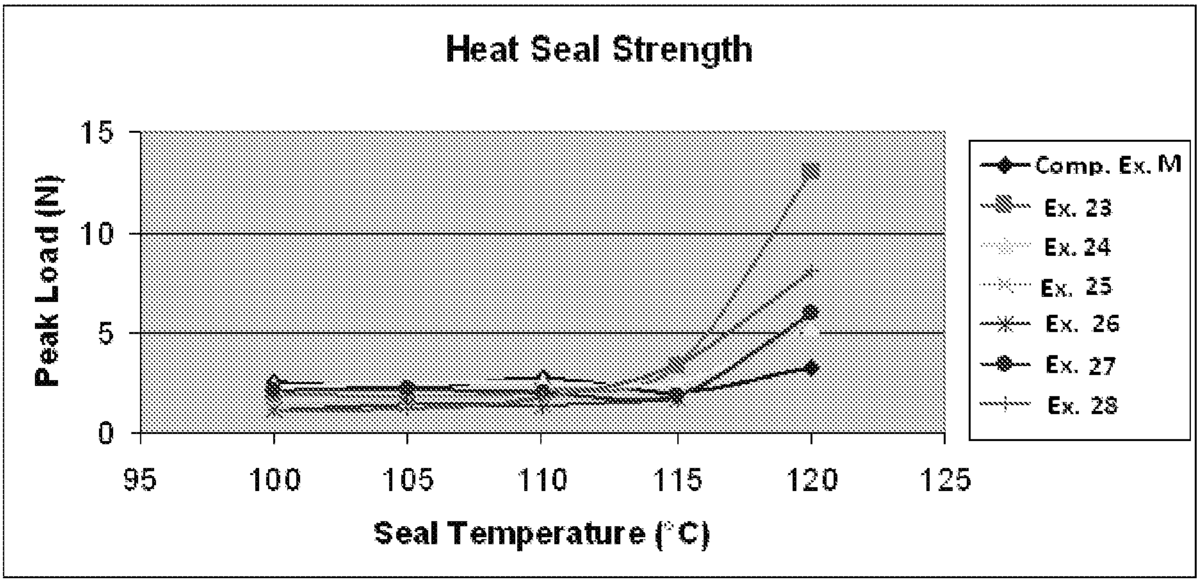
Heat Seal Strength
Peak Load (N)
15
10
5
0
95
100
105
110
115
120
125
Seal Temperature (°C)
Comp. Ex. M
Ex. 23
Ex. 24
Ex. 25
Ex. 26
Ex. 27
Ex. 28

Fig. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20060199930 A1
- WO 2005090427 A
- US 2005008916 W
- US 2005008915 W
- US 2005008917 W
- WO 0340195 A
- US 0204017 A
- US 10429024 B
- WO 0424740 A
- US 20040010103 A
- US 6268444 B
- US 2003004286 A
- US 4762890 A
- US 4927888 A
- US 4950541 A
- US 4798081 A
- US 59199883 B
- US 6395671 B
- US 6248540 B
- US 6030917 A
- US 6362309 B
- US 6306658 B
- US 6316663 B
- US 6103803 A
- US 4503102 A
- US 4521437 A
- US 3456044 A, Pahlke
- US 4352849 A, Mueller
- US 4820557 A
- US 4837084 A, Warren
- US 4865902 A, Golike
- US 4927708 A, Herran
- US 4952451 A, Mueller
- US 4963419 A
- US 5059481 A, Lustig
- US 4976898 A
- US 4863769 A
- US 5032463 A
- US 4339507 A
- US 4957790 A, Warren
- US 5055328 A, Evert
- US 5089321 A


### Non-patent literature cited in the description


- **MARKOVICH, RONALD P. ; HAZLITT, LONNIE G. ; SMITH, LINLEY.** Development of gel-permeation chromatography-Fourier transform infrared spectroscopy for characterization of ethylene-based polyolefin copolymers. *Polymeric Materials Science and Engineering,* 1991, vol. 65, 98-100
- **DESLAURIERS, P.J. ; ROHLFING, D.C. ; SHIEH, E.T.** Quantifying short chain branching microstructures in ethylene-1-olefin copolymers using size exclusion chromatography and Fourier transform infrared spectroscopy (SEC-FTIR). *Polymer,* 2002, vol. 43, 59-170
- **WILLIAMS ; WARD.** *J. Polym. Sci., Polym. Let.,* 1968, vol. 6, 621
- **WILDE, L. ; RYLE, T.R. ; KNOBELOCH, D.C. ; PEAT, I.R.** Determination of Branching Distributions in Polyethylene and Ethylene Copolymers. *J. Polym. Sci.,* 1982, vol. 20, 441-455
- **RANDALL, J.C.** *JMS-Rev. Macromol. Chem. Phys.,* 1989, vol. C29, 201-317
- **ZWEIFEL HANS et al.** Plastics Additives Handbook. Hanser Gardner Publications, 2001
- **ZWEIFEL HANS et al.** Plastics Additives Handbook. Hanser Gardner Publications, 2001, 585-600
- **GEORGE WYPYCH.** Handbook of Plasticizers. ChemTec Publishing, 2004
- **ZWEIFEL HANS et al.** Plastics Additives Handbook. Hanser Gardner Publications, 2001, 1-140
- **ZWEIFEL HANS et al.** Plastics Additives Handbook. Hanser Gardner Publications, 2001, 141-426
- **ZWEIFEL HANS et al.** Plastics Additives Handbook. Hanser Gardner Publications, 2001, 813-882
- **ZWEIFEL HANS et al.** Plastics Additives Handbook. Hanser Gardner Publications, 2001, 901-948
- **ZWEIFEL HANS et al.** Plastics Additives Handbook. Hanser Gardner Publications, 2001, 511-552
- **ZWEIFEL HANS et al.** Plastics Additives Handbook. Hanser Gardner Publications, 2001, 627-646
- **ZWEIFEL HANS et al.** Plastics Additives Handbook. Hanser Gardner Publications, 2001, 725-812
- **KIRK-OTHMER.** The Encyclopedia of Chemical Technology. John Wiley & Sons, 1981, vol. 16, 416-417
- THE ENCYCLOPEDIA OF CHEMICAL TECHNOLOGY. vol. 18, 191-192
- **C. RAUWENDAAL.** Polymer Extrusion. Hanser Publishers, 1986

- **M.J. STEVENS.** Extruder Principals and Operation. Elsevier Applied Science Publishers, 1985
- **C. G. DAVIS.** Packaging Machinery Operations: No. 8, Form-Fill-Sealing, A Self-Instructional Course. Packaging Machinery Manufacturers Institute, April 1982
- The Wiley Encyclopedia of Packaging Technology. John Wiley & Sons, 1986, vol. 334, 364-369
- **S. SACHAROW ; A. L. BRODY.** Packaging: An Introduction. Harcourt Brace Javanovich Publications, Inc, 1987, 322-326
- **WILMER A. JENKINS ; JAMES P. HARRINGTON.** *Packaging Foods With Plastics,* 1991
- **W. J. SCHRENK ; C. R. FINCH.** Coextrusion For Barrier Packaging. *Society of Plastics Engineers RETEC Proceedings,* 15 June 1981, 211-229
- Coextrusion Basics. **THOMAS I. BUTLER.** Film Extrusion Manual: Process, Materials, Properties. TAPPI Press, 1992, 31-80
- **K. R. OSBORN ; W. A. JENKINS.** Plastic Films, Technology and Packaging Applications. Technomic Publishing Co., Inc, 1992
- **D. DUMBLETON.** Laminations vs. Coextrusion. *Converting Magazine,* September 1992